# EUROPEAN PATENT APPLICATION

(11) **EP 4 794 002 A1**
(43) Date of publication of application: **19.08.2026**
(21) Application number: 24875915.1
(22) Date of filing: 29.02.2024
(51) Int. Cl.: H01M 4/13, H01M 4/139, H01M 4/04, H01M 10/0525, H01M 10/54

(54) **ELECTRODE SHEET, SECONDARY BATTERY, ELECTRIC DEVICE, PREPARATION METHOD, AND REUSE METHOD**

(30) Priority: 12.10.2023 CN 202311318161
(71) Applicant: Contemporary Amperex Technology Co., Limited, Ningde, Fujian 352100 (CN)
(72) Inventor: LI, Xiaojing, Ningde, Fujian 352100 (CN); CHEN, Yonghong, Ningde, Fujian 352100 (CN); NI, Huan, Ningde, Fujian 352100 (CN); BIE, Changfeng, Ningde, Fujian 352100 (CN); LIU, Na, Ningde, Fujian 352100 (CN)
(74) Representative: Gong, Jinping
(86) International application number: PCT/CN2024/079340
(87) International publication number: WO 2025/077086

(57) **Abstract**

An electrode sheet, a secondary battery, an electric device, a preparation method, and a reuse method. The electrode sheet comprises a current collector and multiple active material layers located on at least one side of the current collector; the multiple active material layers comprise a first active material layer and a second active material layer, wherein the second active material layer is the active material layer farthest from the current collector, and the first active material layer is located between the second active material layer and the current collector, and comprises current collector particles.

## Description

### RELATED APPLICATION

The present application claims priority to Chinese Patent Application No. CN2023113181610, filed on October 12, 2023, and entitled "ELECTRODE PLATE, SECONDARY BATTERY, ELECTRIC DEVICE, PREPARATION METHOD, AND REUSING METHOD", which is incorporated herein by reference in its entirety.

### TECHNICAL FIELD

The present application relates to the technical field of secondary batteries and the technical field of secondary battery reusing, and in particular, to an electrode plate, a secondary battery, an electric device, a preparation method, and a reusing method.

### BACKGROUND

The statements herein merely provide background information related to the present application and do not necessarily constitute prior art.

With the development of new energy technologies, there is an increasing demand for recycling secondary batteries. Taking the recycling of positive electrode materials in lithium-ion batteries as an example, there are two main regenerating technologies for positive electrode materials in waste lithium-ion batteries: chemical recycling and physical recycling. Chemical recycling is to recycle the positive electrode material by solvent extraction, high-temperature smelting, and other methods, but the technical route of chemical recycling is relatively complex and the cost is high. Chemical treatment agents such as strong acids, strong bases, and a large amount of ammonium hydroxide are usually used in the production process, and if the treatment is improper, the waste materials generated in the treatment process will pollute the air, water, and soil. Physical recycling mainly involves using magnetic separation, sieving, and other technologies to separate and purify the positive electrode material, and chemical treatment agents such as strong acids, strong bases, and a large amount of ammonium hydroxide may not be used. This enables pollution-free separation with good economic efficiency. However, for the positive electrode material recycled by physical recycling alone, the positive electrode plate prepared by reusing the positive electrode material cannot meet the normal use requirements of lithium-ion batteries, the risk of battery failure is high, and the reliability is poor.

Therefore, there is an urgent need to develop new technologies related to secondary battery reusing.

### SUMMARY

According to various embodiments and examples of the present application, the present application provides an electrode plate, a secondary battery, an electric device, a preparation method, and a reusing method. The electrode plate can provide a new path for preparing a secondary battery with good reliability by using the recycled electrode plate stock.

In a first aspect of the present application, an electrode plate is provided.

In some embodiments, the electrode plate includes a current collector and a multi-layered active material layer located on at least one side of the current collector, and the multi-layered active material layer includes a first active material layer and a second active material layer, where the second active material layer is an active material layer farthest away from the current collector, and the first active material layer is located between the second active material layer and the current collector;
the first active material layer includes a current collector particle;
the electrode plate is a positive electrode plate, and the current collector particle contains a metal component suitable for a positive electrode current collector; or the electrode plate is a negative electrode plate, and the current collector particle contains a metal component suitable for a negative electrode current collector.

One of the key constraints that make it difficult to use the physically recycled active substances from electrode plates in the manufacturing of new batteries is that the recycled stock often incorporates current collector debris. The debris are close in size to active particles and is thus difficult to be completely removed by particle size screening. Therefore, the debris remains in the recycled stock of the active substances, which affects the use performance of the electrode plates prepared with the reused material.

After the recycled positive electrode active substance stock is used to prepare the positive electrode slurry and the positive electrode slurry is applied to one side of the positive electrode current collector to prepare a new positive electrode plate, the hard edges of the positive electrode current collector impurity remaining in the recycled positive electrode active substance stock easily cause an uneven surface of the electrode plate and easily pierce the separator, resulting in problems such as short circuits between the two electrodes, self-discharge, and Hi-pot failures, thereby leading to high risk of thermal runaway and affecting the reliability of the battery. After the recycled negative electrode active substance stock is used to prepare the negative electrode slurry and the negative electrode slurry is applied to one side of the negative electrode current collector to prepare a new negative electrode plate, the hard edges of the negative electrode current collector impurity remaining in the recycled negative electrode active substance stock are also likely to pierce the separator, resulting in problems such as short circuits between the two electrodes, self-discharge, and Hi-pot failures, thereby leading to high risk of thermal runaway and affecting the reliability of the battery.

The electrode plate provided in the first aspect of the present application may adopt a multi-layer structure including a first active material layer and a second active material layer. The multi-layer structured active material layer is disposed on the current collector, the first active material layer on the side proximal to the current collector may also be denoted as a lower layer, and the second active material layer on the side distal to the current collector may also be denoted as an upper layer. By disposing the recycled active substance stock with residual current collector impurity in the lower layer of the active material layer and utilizing the barrier effect of the upper layer of the active material layer, the current collector impurity can be prevented from directly contacting the separator, which can reduce the risk of piercing the separator, thereby reducing the risk of short circuits between the two electrodes and self-discharge, improving the Hi-pot test yield, and enhancing the high-temperature storage performance and reliability of the battery. This method is not only applicable to preparing a new positive electrode plate with the recycled positive electrode active substance stock containing the positive electrode current collector impurity, but also applicable to preparing a new negative electrode plate with the recycled negative electrode active substance stock containing the negative electrode current collector impurity. This can reduce the manufacturing cost of the electrode plate.

The current collector impurity from the current collector in the recycled electrode plate may be denoted as the current collector particle, and the main component thereof is from the current collector in the recycled electrode plate. Therefore, all metal components currently applicable to the current collector in the technical field of secondary batteries may be included in the current collector particle. For the positive electrode plate and the negative electrode plate, all metal components applicable to the positive electrode current collector in the current secondary battery technical field may be included in the positive electrode current collector particle, and all metal components currently applicable to the negative electrode current collector in the technical field of secondary batteries may be included in the negative electrode current collector particle.

It should be noted that the source of the current collector particle in the electrode plate may not be limited to the recycling process of the active substance of the electrode plate; as long as the structure and components of the electrode plate are consistent with those of the electrode plate in any one embodiment of the present application, the electrode plate is fall within the scope of the "electrode plate" provided in the first aspect of the present application.

In some embodiments, an electrode plate is provided. The electrode plate includes a current collector and a multi-layered active material layer located on at least one side of the current collector, and the multi-layered active material layer includes a first active material layer and a second active material layer, where the second active material layer is an active material layer farthest away from the current collector, and the first active material layer is located between the second active material layer and the current collector;
the first active material layer includes a current collector particle;
the electrode plate is a positive electrode plate, and the current collector particle includes one or more metal components of aluminum, aluminum alloys, nickel, nickel alloys, titanium, titanium alloys, silver, and silver alloys; or the electrode plate is a negative electrode plate and the current collector particle includes one or more metal components of copper, copper alloys, nickel, nickel alloys, titanium, titanium alloys, silver, and silver alloys.

Based on any suitable embodiment in the present application, in still some embodiments, the electrode plate satisfies one or more of the following features:
the second active material layer includes or does not include the current collector particle; the mass percentage of the current collector particle in the second active material layer is less than the mass percentage of the current collector particle in the first active material layer;
the metal component suitable for the positive electrode current collector refers to a metal component that will not be oxidized at the positive electrode at a potential > 2.0 V, with the temperature condition including at least one temperature of 20 °C to 30 °C;
the metal component suitable for the negative electrode current collector refers to a metal component capable of having chemical stability at the negative electrode under charging and discharging conditions, and the charging and discharging conditions at least include: performing at least one charging and discharging cycle within a cut-off voltage range, with the temperature for performing the charging and discharging cycles including at least one temperature of 10 °C to 80 °C.

The second active material layer may or may not include the current collector particle. The lower the content of the current collector particle in the second active material layer, the stronger the barrier effect, the more beneficial it is for improving the high-temperature storage performance and reliability of the battery. It can be understood that when the second active material layer includes the current collector particle, the content of the current collector particle in the second active material layer should be limited to the extent that the second active material layer can still play the role of reducing the risk of piercing the separator. The higher the content of the current collector particle in the first active material layer, the more beneficial it is for reducing the manufacturing cost of the electrode plate. It can be understood that the content of the current collector particle in the second active material layer should be limited to the extent that the risk of piercing the separator can be reduced by the second active material layer. Allowing the mass percentage of the current collector particle in the second active material layer to be less than the mass percentage of the current collector particle in the first active material layer can balance the manufacturing cost and performance of the electrode plate.

Those skilled in the art can determine the type of the metal component suitable for the positive electrode current collector based on the well-known meaning of "positive electrode current collector" in the technical field and the relevant description in the present application.

Those skilled in the art can determine the type of the metal component suitable for the negative electrode current collector based on the well-known meaning of "negative electrode current collector" in the technical field and the relevant description in the present application. A metal component can facilitate the improvement in the high-temperature stability of the negative electrode plate if it has chemical stability under high temperature conditions.

In some embodiments, the second active material layer includes or does not include the current collector particle; the mass percentage of the current collector particle in the second active material layer is less than the mass percentage of the current collector particle in the first active material layer.

In some embodiments, the electrode plate is a positive electrode plate, and the current collector particle contains a metal component suitable for a positive electrode current collector; the metal component suitable for the positive electrode current collector refers to a metal component that will not be oxidized at the positive electrode at a potential > 2.0 V, with the temperature condition including at least one temperature of 20 °C to 30 °C; or
the electrode plate is a negative electrode plate, and the current collector particle contains a metal component suitable for a negative electrode current collector; the metal component suitable for the negative electrode current collector refers to a metal component capable of having chemical stability at the negative electrode under charging and discharging conditions, and the charging and discharging conditions at least include: performing at least one charging and discharging cycle within a cut-off voltage range, with the temperature for performing the charging and discharging cycles including at least one temperature of 10 °C to 80 °C.

Based on any suitable embodiment in the present application, in still some embodiments, the electrode plate is a positive electrode plate, and the current collector particle includes one or more metal components of aluminum, aluminum alloys, nickel, nickel alloys, titanium, titanium alloys, silver, and silver alloys;
the first active material layer is denoted as a first positive electrode active material layer, the current collector particle is denoted as a positive electrode current collector particle, and the second active material layer is denoted as a second positive electrode active material layer;
the first positive electrode active material layer includes a first positive electrode active substance, the second positive electrode active material layer includes a second positive electrode active substance, and the first positive electrode active substance and the second positive electrode active substance are the same or different.

When the electrode plate is a positive electrode plate, recycled positive electrode active substance stock may be obtained from the recycled positive electrode plate, and the recycled positive electrode active substance stock incorporates the positive electrode current collector impurity. The recycled positive electrode active substance stock may be used in the first positive electrode active material layer located at the lower layer, such that the positive electrode current collector impurity is incorporated into the first positive electrode active material layer, and the positive electrode current collector impurity may correspond to the "positive electrode current collector particle" in the new positive electrode plate. By utilizing the barrier effect of the second positive electrode active material layer at the upper layer, direct contact of the positive electrode current collector impurity with the separator may be avoided, which can reduce the risk of piercing the separator, thereby reducing the risks of short circuits between the two electrodes and self-discharge, improving the Hi-pot test yield, reducing the risk of thermal runaway, and enhancing the high-temperature storage performance and reliability of the battery.

The positive electrode current collector impurity from the positive electrode current collector in the recycled positive electrode plate may be denoted as the positive electrode current collector particle, and the main component thereof is from the positive electrode current collector in the recycled positive electrode plate. Therefore, all metal components currently applicable to the positive electrode current collector in the technical field of secondary batteries may be included in the positive electrode current collector particle. The metal component included in the positive electrode current collector particle may include, but is not limited to, one or more metal components of aluminum, aluminum alloys, nickel, nickel alloys, titanium, titanium alloys, silver, and silver alloys, and the foregoing metal components may all be used as the metal components in the positive electrode current collector.

Based on any suitable embodiment in the present application, in still some embodiments, the positive electrode current collector particle satisfies one or more of the following features:
the metal element in the positive electrode current collector particle is denoted as an element M1, and the mass percentage of the element M1 in the positive electrode current collector particle is ≥ 50%;
the maximum particle diameter of the positive electrode current collector particle is ≤ 150 µm.

Based on any suitable embodiment in the present application, in still some embodiments, the positive electrode current collector particle satisfies one or more of the following features:
the positive electrode current collector particle includes a body B1, and further includes or does not include a coating layer L1 located on at least a part of the surface of the body B1, the body B1 is composed of the element M1, the coating layer L1 includes a derived form of the element M1, and the derived form of the element M1 includes an oxidized form of the element M1;
the mass percentage of the element M1 in the positive electrode current collector particle is 60%-100%;
the maximum particle diameter of the positive electrode current collector particle is 10 µm to 150 µm.

In the process of extracting the recycled positive electrode active substance stock from the recycled positive electrode plate, the incorporated positive electrode current collector may undergo some chemical changes to change some components of the original positive electrode current collector into derived components, such that the mass percentage of the components in the original positive electrode current collector in the current collector particle of the new electrode plate may not be 100%, but the mass percentage is usually ≥ 50%. The mass percentage of the derived components may be adjusted through the recycling process, thereby regulating the proportion of the components of the original positive electrode current collector in the positive electrode active material layer of the new electrode plate.

During the recycling process, the chemical changes that the positive electrode current collector may undergo are likely to occur on the surface of the positive electrode current collector particle, such that the original positive electrode current collector particle is changed into a coated structure. The coated structure includes a body and a coating layer located on at least a part of the surface of the body, the inside is the body composed of the component of the original positive electrode current collector, and at least a part of the surface of the body is the coating layer composed of the derived component.

During the recycling process, the positive electrode current collector may undergo chemical changes such as oxidation reaction of the surface components of the current collector particle, and the derived component at this time includes the oxide of the component of the original positive electrode current collector. In addition, during the recycling process of the recycled positive electrode active substance stock, the positive electrode current collector impurities with a large particle size are easily removed by sieving, but some of the positive electrode current collector impurities have a particle size close to that of the positive electrode active substance to be recycled, and thus it is difficult to separate these positive electrode current collector impurities from the positive electrode active substance to be recycled by a simple physical method. The particle size of these residual positive electrode current collector impurities can be adjusted through the particle size screening step in the recycling process.

Based on any suitable embodiment in the present application, in still some embodiments, the positive electrode current collector particle includes an aluminum-based particle, and the aluminum-based particle includes an aluminum-based body, and further includes or does not include an aluminum oxide layer located on the surface of the aluminum-based body;
optionally, the positive electrode current collector particle satisfies one or more of the following features:
the mass percentage of an element aluminum in the positive electrode current collector particle is ≥ 50%;
the aluminum-based body includes an aluminum-based component with a mass percentage of ≥ 70%, and the aluminum-based component is aluminum or an aluminum alloy.

Based on any suitable embodiment in the present application, in still some embodiments, the positive electrode current collector particle satisfies one or more of the following features:
the mass percentage of the element aluminum in the positive electrode current collector particle is 60%-100%;
the mass percentage of the aluminum-based component in the aluminum-based body is 90%-100%.

The positive electrode current collector in the recycled positive electrode plate may be an aluminum-based material. During the recycling process, the surface of the aluminum-based material may be oxidized to form an aluminum oxide layer, such that the positive electrode current collector impurity in the recycled stock includes an aluminum-based particle having a coated structure. The aluminum-based particle is internally a body composed of the aluminum-based component, and at least a part of the surface of the aluminum-based body is covered with the aluminum oxide layer.

In the recycled positive electrode active substance stock, the content of the aluminum-based component in the aluminum-based body mainly depends on the composition of the original positive electrode current collector in the recycled positive electrode plate, and the aluminum-based material may be aluminum or an aluminum alloy, but is not limited thereto. The mass percentage of the element aluminum in the positive electrode current collector impurity is mainly related to the composition of the original positive electrode current collector in the recycled positive electrode plate.

Based on any suitable embodiment in the present application, in still some embodiments, the second positive electrode active material layer does not include or includes the positive electrode current collector particle, and the mass percentage of the positive electrode current collector particle in the second positive electrode active material layer is less than the mass percentage of the positive electrode current collector particle in the first positive electrode active material layer.

Based on any suitable embodiment in the present application, in still some embodiments, the mass percentage of the positive electrode current collector particle in the second positive electrode active material layer is < 0.05%, and the mass percentage of the positive electrode current collector particle in the first positive electrode active material layer is ≥ 0.05%.

Based on any suitable embodiment in the present application, in still some embodiments, the mass percentage of the positive electrode current collector particle in the second positive electrode active material layer is < 0.04%, and the mass percentage of the positive electrode current collector particle in the first positive electrode active material layer is ≥ 0.04%.

Based on any suitable embodiment in the present application, in still some embodiments, the mass percentage of the positive electrode current collector particle in the second positive electrode active material layer is < 0.01%, and the mass percentage of the positive electrode current collector particle in the first positive electrode active material layer is ≥ 0.01%.

The second positive electrode active material layer located at the upper layer may not use the recycled positive electrode active substance stock, such that the positive electrode current collector impurity is not incorporated.

A small amount of the recycled positive electrode active substance stock may also be introduced into the second positive electrode active material layer, as long as the amount of the introduced positive electrode current collector impurity is small enough and thus the risk of causing short circuits between the two electrodes and self-discharge is low enough, the adverse effect on the Hi-pot test yield is small enough, and the battery can still have good high-temperature storage performance and reliability.

The second positive electrode active material layer may or may not include the positive electrode current collector particle. The lower the content of the positive electrode current collector particle in the second positive electrode active material layer, the stronger the barrier effect, the more beneficial it is for improving the high-temperature storage performance and reliability of the battery. It can be understood that when the second positive electrode active material layer includes the positive electrode current collector particle, the mass percentage of the positive electrode current collector particle in the second positive electrode active material layer should be limited to the extent that the second positive electrode active material layer can still play the role of reducing the risk of piercing the separator. The higher the content of the positive electrode current collector particle in the first positive electrode active material layer, the more beneficial it is for reducing the manufacturing cost of the positive electrode plate. It can be understood that the mass percentage of the positive electrode current collector particle in the second positive electrode active material layer should be limited to the extent that the risk of piercing the separator can be reduced by the second positive electrode active material layer. Allowing the mass percentage of the positive electrode current collector particle in the second positive electrode active material layer to be less than the mass percentage of the positive electrode current collector particle in the first positive electrode active material layer can balance the manufacturing cost and performance of the positive electrode plate.

Based on any suitable embodiment in the present application, in some embodiments, the electrode plate is a positive electrode plate, the current collector particle is denoted as a positive electrode current collector particle, the metal element in the positive electrode current collector particle is denoted as an element M1, the first active material layer is denoted as a first positive electrode active material layer, and the second active material layer is denoted as a second positive electrode active material layer;
the positive electrode current collector particle includes a body B1, and further includes a coating layer L1 located on at least a part of the surface of the body B1, the body B1 is composed of the element M1, the coating layer L1 includes a derived form of the element M1, and the derived form of the element M1 includes an oxidized form of the element M1;
optionally, the mass percentage of the positive electrode current collector particle in the first positive electrode active material layer is ≤ 1.0%;
optionally, the mass percentage of the positive electrode current collector particle in the second positive electrode active material layer is < 0.05%.
Based on any suitable embodiment in the present application, in still some embodiments, the positive electrode plate satisfies one or more of the following features:
in the positive electrode plate, the multi-layered active material layer is a double-layered positive electrode active material layer;
the thickness of the first positive electrode active material layer is greater than the thickness of the second positive electrode active material layer;
the thickness of the first positive electrode active material layer is 40 µm to 125 µm;
the thickness of the second positive electrode active material layer is 3 µm to 45 µm;
the mass percentage of the positive electrode current collector particle in the first positive electrode active material layer is ≤ 1.0%;
in the first positive electrode active material layer, the percentage of the mass of the positive electrode current collector particle relative to the sum of the mass of the positive electrode current collector particle and the mass of the first positive electrode active substance is ≤ 1.0%.

Based on any suitable embodiment in the present application, in still some embodiments, the positive electrode plate satisfies one or more of the following features:
the ratio of the thickness of the second positive electrode active material layer relative to the thickness of the first positive electrode active material layer is 0.05-0.4;
the thickness of the first positive electrode active material layer is 45 µm to 120 µm;
the thickness of the second positive electrode active material layer is 5 µm to 40 µm;
the mass percentage of the positive electrode current collector particle in the first positive electrode active material layer is 0.05%-0.9%;
in the first positive electrode active material layer, the percentage of the mass of the positive electrode current collector particle relative to the sum of the mass of the positive electrode current collector particle and the mass of the first positive electrode active substance is ≤ 0.9%.

Based on any suitable embodiment in the present application, in still some embodiments, the positive electrode plate satisfies one or more of the following features:
the ratio of the thickness of the second positive electrode active material layer relative to the thickness of the first positive electrode active material layer is 0.1-0.35;
the thickness of the first positive electrode active material layer is 50 µm to 110 µm;
the thickness of the second positive electrode active material layer is 10 µm to 35 µm;
the mass percentage of the positive electrode current collector particle in the first positive electrode active material layer is 0.1%-0.8%;
in the first positive electrode active material layer, the percentage of the mass of the positive electrode current collector particle relative to the sum of the mass of the positive electrode current collector particle and the mass of the first positive electrode active substance is ≤ 0.8%.

In the positive electrode plate, the foregoing multi-layered active material layer may be of a double-layer structure having two positive electrode active material layers, that is, a corresponding second positive electrode active material layer distal to the positive electrode current collector and a corresponding first positive electrode active material layer between the positive electrode current collector and the second positive electrode active material layer.

The thickness of the first positive electrode active material layer (located at the lower layer) and the thickness of the second positive electrode active material layer (located at the upper layer) in the multi-layer structured positive electrode active material layer can be adjusted to adjust the amount of the recycled positive electrode active substance stock in the new positive electrode plate. By allowing the thickness of the first positive electrode active material layer to be greater than the thickness of the second positive electrode active material layer, more recycled stock can be introduced, which is more beneficial for cost control. By adjusting the first positive electrode active material layer to a more appropriate thickness, the recycled positive electrode active substance stock can be more reasonably utilized. By adjusting the thickness of the second positive electrode active material layer, the magnitude of the barrier effect of the second positive electrode active material layer between the first positive electrode active material layer and the separator can be adjusted. Further, by adjusting the second positive electrode active material layer to a more appropriate thickness, the positive electrode current collector particle in the first positive electrode active material layer can be better blocked while controlling the cost, which is more beneficial for reducing the risk of piercing the separator, improving the Hi-pot test yield, and enhancing the high-temperature storage performance and reliability of the battery.

The mass percentage of the positive electrode current collector particle in the first positive electrode active material layer (which may be denoted as R_{P1}) and the percentage of the mass of the positive electrode current collector particle in the first positive electrode active material layer relative to the sum of the mass of the positive electrode current collector particle and the mass of the first positive electrode active substance (which may be denoted as R_{P2}) are mainly related to the following factors: the residual amount of the positive electrode current collector impurity in the recycled positive electrode active substance stock, and the content of the recycled positive electrode active substance stock in the first positive electrode active material layer. The smaller the R_{P1} and R_{P2}, the lower the risk of piercing the separator caused by the positive electrode current collector impurity in the battery including the corresponding positive electrode plate.

By controlling one or more parameters of the thickness of the first positive electrode active material layer, the thickness of the second positive electrode active material layer, and the mass percentage of the positive electrode current collector particle in the first positive electrode active material layer to be within the above suitable ranges, the adverse effects caused by the positive electrode current collector impurity can be better reduced while introducing the recycled positive electrode active substance stock, which is beneficial for achieving better high-temperature storage performance and reliability of the battery while reducing the cost.

Based on any suitable embodiment in the present application, in still some embodiments, the positive electrode plate satisfies one or more of the following features:
the first positive electrode active substance includes one or more of a lithium-containing phosphate, a lithium transition metal oxide, and a modified form of any one of the foregoing substances, where the modified form includes one or more of doping modification and coating modification;
the first positive electrode active substance includes an element lithium and a modifying element X1, and the modifying element X1 includes at least one of an element nickel and an element cobalt; in the first positive electrode active substance, the atomic molar ratio of the modifying element X1 relative to the element lithium is 0.9-1.1;
the second positive electrode active substance includes one or more of a lithium-containing phosphate, a lithium transition metal oxide, and a modified form of any one of the foregoing substances, where the modified form includes one or more of doping modification and coating modification.

Based on any suitable embodiment in the present application, in still some embodiments, the positive electrode plate satisfies one or more of the following features:
the first positive electrode active substance includes one or more of lithium iron phosphate, lithium manganese iron phosphate, lithium vanadium phosphate, lithium cobalt phosphate, lithium nickel phosphate, lithium manganate, lithium nickel cobalt manganate, lithium nickel cobalt manganese aluminate, lithium nickel cobalt aluminate, lithium cobaltate, and a modified form of any one of the foregoing substances, where the modified form includes one or more of doping modification and coating modification;
in the first positive electrode active substance, the ratio of the sum of the atomic molar amount of the element cobalt and the element nickel relative to the atomic molar amount of the element lithium is 0.95-1.05;
the second positive electrode active substance includes one or more of lithium iron phosphate, lithium manganese iron phosphate, lithium vanadium phosphate, lithium cobalt phosphate, lithium nickel phosphate, lithium manganate, lithium nickel cobalt manganate, lithium nickel cobalt manganese aluminate, lithium nickel cobalt aluminate, lithium cobaltate, and a modified form of any one of the foregoing substances, where the modified form includes one or more of doping modification and coating modification.

The positive electrode active substance in the recycled positive electrode active substance stock may have any known structure and/or component, may or may not contain a doping element, and may or may not have a coating layer. A recycled positive electrode plate having an appropriate type of positive electrode active substance can be selected as needed.

When the positive electrode active substance in the recycled positive electrode plate includes at least one element of the element nickel and the element cobalt, the applicability of the obtained recycled positive electrode active substance stock is high, where non-limiting examples of the positive electrode active substance include lithium cobalt phosphate, lithium cobaltate, lithium nickel cobalt manganate, lithium nickel cobalt manganese aluminate, lithium nickel cobalt aluminate, etc. The element cobalt in the positive electrode active substance is beneficial for improving the charge-discharge rate capability of the battery. The element nickel in the positive electrode active substance is beneficial for improving the energy density.

The type of the second positive electrode active substance in the second negative electrode active material layer may be appropriately selected as needed. A suitable structure and/or component may be selected from known types of positive electrode active substances.

Based on any suitable embodiment in the present application, in still some embodiments, the electrode plate is a negative electrode plate, and the current collector particle includes one or more metal components of copper, copper alloys, nickel, nickel alloys, titanium, titanium alloys, silver, and silver alloys;
the first active material layer is denoted as a first negative electrode active material layer, the current collector particle is denoted as a negative electrode current collector particle, and the second active material layer is denoted as a second negative electrode active material layer;
the first negative electrode active material layer includes a first negative electrode active substance, the second negative electrode active material layer includes a second negative electrode active substance, and the first negative electrode active substance and the second negative electrode active substance are the same or different.

When the electrode plate is a negative electrode plate, recycled negative electrode active substance stock may be obtained from the recycled negative electrode plate, and the recycled negative electrode active substance stock incorporates the negative electrode current collector impurity. The recycled negative electrode active substance stock may be used in the first negative electrode active material layer located at the lower layer, such that the negative electrode current collector impurity is incorporated into the first negative electrode active material layer, and the negative electrode current collector impurity may correspond to the "negative electrode current collector particle" in the new negative electrode plate. By utilizing the barrier effect of the second negative electrode active material layer at the upper layer, direct contact of the negative electrode current collector impurity with the separator may be avoided, which can reduce the risk of piercing the separator, thereby reducing the risks of short circuits between the two electrodes and self-discharge, improving the Hi-pot test yield, reducing thermal runaway, and enhancing the high-temperature storage performance and reliability of the battery.

The negative electrode current collector impurity from the negative electrode current collector in the recycled negative electrode plate may be denoted as the negative electrode current collector particle, and the main component thereof is from the negative electrode current collector in the recycled negative electrode plate. Therefore, all metal components currently applicable to the negative electrode current collector in the technical field of secondary batteries may be included in the negative electrode current collector particle. The metal component included in the negative electrode current collector particle may include, but is not limited to, one or more metal components of copper, copper alloys, nickel, nickel alloys, titanium, titanium alloys, silver, and silver alloys, and the foregoing metal components may all be used as the metal components in the negative electrode current collector.

Based on any suitable embodiment in the present application, in still some embodiments, the negative electrode current collector particle satisfies one or more of the following features:
the metal element in the negative electrode current collector particle is denoted as an element M2, and the mass percentage of the element M2 in the negative electrode current collector particle is ≥ 50%;
the maximum particle diameter of the negative electrode current collector particle is ≤ 120 µm.

Based on any suitable embodiment in the present application, in still some embodiments, the negative electrode current collector particle satisfies one or more of the following features:
the negative electrode current collector particle includes a body B2, and further includes or does not include a coating layer L2 located on at least a part of the surface of the body B2, the body B2 is composed of the element M2, the coating layer L2 includes a derived form of the element M2, and the derived form of the element M2 includes an oxidized form of the element M2;
the mass percentage of the element M2 in the negative electrode current collector particle is 60%-100%;
the maximum particle diameter of the negative electrode current collector particle is ≤ 100 µm.

In the process of extracting the recycled negative electrode active substance stock from the recycled negative electrode plate, the incorporated negative electrode current collector may undergo some chemical changes to change some components of the original negative electrode current collector into derived components, such that the mass percentage of the components in the original negative electrode current collector in the current collector particle of the new electrode plate may not be 100%, but the mass percentage is usually ≥ 50%. The mass percentage of the derived components may be adjusted through the recycling process, thereby regulating the proportion of the components of the original negative electrode current collector in the negative electrode active material layer of the new electrode plate.

During the recycling process, the chemical changes that the negative electrode current collector may undergo are likely to occur on the surface of the negative electrode current collector particle, such that the original negative electrode current collector particle is changed into a coated structure. The coated structure includes a body and a coating layer located on at least a part of the surface of the body, the inside is the body composed of the component of the original negative electrode current collector, and at least a part of the surface of the body is the coating layer composed of the derived component.

During the recycling process, the negative electrode current collector may undergo chemical changes such as oxidation reaction of the surface components of the current collector particle, and the derived component at this time includes the oxide of the component of the original negative electrode current collector. In addition, during the recycling process of the recycled negative electrode active substance stock, the negative electrode current collector impurities with a large particle size are easily removed by sieving, but some of the negative electrode current collector impurities have a particle size close to that of the negative electrode active substance to be recycled, and thus it is difficult to separate these negative electrode current collector impurities from the negative electrode active substance to be recycled by a physical method. The particle size of these residual negative electrode current collector impurities can be adjusted through the particle size screening step in the recycling process.

Based on any suitable embodiment in the present application, in still some embodiments, the negative electrode current collector particle includes a copper-based particle, and the copper-based particle includes a copper-based body, and further includes or does not include a copper oxide layer located on the surface of the copper-based body;
optionally, the negative electrode current collector particle satisfies one or more of the following features:
the mass percentage of an element copper in the negative electrode current collector particle is ≥ 50%;
the copper-based body includes a copper-based component with a mass percentage of ≥ 70%, and the copper-based component is copper or a copper alloy.

Based on any suitable embodiment in the present application, in still some embodiments, the negative electrode current collector particle satisfies one or more of the following features:
the mass percentage of the element copper in the negative electrode current collector particle is 80%-100%;
the mass percentage of the copper-based component in the copper-based body is 90%-100%.

The negative electrode current collector in the recycled negative electrode plate may be a copper-based material. During the recycling process, the surface of the copper-based material may be oxidized to form a copper oxide layer, such that the negative electrode current collector impurity in the recycled stock includes a copper-based particle having a coated structure. The copper-based particle is internally a body composed of the copper-based component, and at least a part of the surface of the copper-based body is covered with the copper oxide layer.

In the recycled negative electrode active substance stock, the content of the copper-based component in the copper-based body mainly depends on the composition of the original negative electrode current collector in the recycled negative electrode plate, and the copper-based material may be copper or a copper alloy, but is not limited thereto. The mass percentage of the element copper in the negative electrode current collector impurity is mainly related to the composition of the original negative electrode current collector in the recycled negative electrode plate.

Based on any suitable embodiment in the present application, in still some embodiments, the second negative electrode active material layer includes or does not include the negative electrode current collector particle, and the mass percentage of the negative electrode current collector particle in the second negative electrode active material layer is less than the mass percentage of the negative electrode current collector particle in the first negative electrode active material layer.

Based on any suitable embodiment in the present application, in still some embodiments, the mass percentage of the negative electrode current collector particle in the second negative electrode active material layer is < 0.002%, and the mass percentage of the negative electrode current collector particle in the first negative electrode active material layer is ≥ 0.002%.

Based on any suitable embodiment in the present application, in still some embodiments, the mass percentage of the negative electrode current collector particle in the second negative electrode active material layer is < 0.001%, and the mass percentage of the negative electrode current collector particle in the first negative electrode active material layer is ≥ 0.001%.

The second negative electrode active material layer located at the upper layer may not use the recycled negative electrode active substance stock, such that the negative electrode current collector impurity is not incorporated. A small amount of the recycled negative electrode active substance stock may also be introduced into the second negative electrode active material layer, as long as the amount of the introduced negative electrode current collector impurity is small enough and thus the risk of causing short circuits between the two electrodes and self-discharge is low enough, the adverse effect on the Hi-pot test yield is small enough, and the battery can still have good high-temperature storage performance and reliability.

The second negative electrode active material layer may or may not include the negative electrode current collector particle. The lower the content of the negative electrode current collector particle in the second negative electrode active material layer, the stronger the barrier effect, the more beneficial it is for improving the high-temperature storage performance and reliability of the battery. It can be understood that when the second negative electrode active material layer includes the negative electrode current collector particle, the mass percentage of the negative electrode current collector particle in the second negative electrode active material layer should be limited to the extent that the second negative electrode active material layer can still play the role of reducing the risk of piercing the separator. The higher the content of the negative electrode current collector particle in the first negative electrode active material layer, the more beneficial it is for reducing the manufacturing cost of the negative electrode plate. It can be understood that the mass percentage of the negative electrode current collector particle in the second negative electrode active material layer should be limited to the extent that the risk of piercing the separator can be reduced by the second negative electrode active material layer. Allowing the mass percentage of the negative electrode current collector particle in the second negative electrode active material layer to be less than the mass percentage of the negative electrode current collector particle in the first negative electrode active material layer can balance the manufacturing cost and performance of the negative electrode plate.

Based on any suitable embodiment in the present application, in still some embodiments, when the electrode plate is a negative electrode plate, the current collector particle is denoted as a negative electrode current collector particle, the metal element in the negative electrode current collector particle is denoted as an element M2, the first active material layer is denoted as a first negative electrode active material layer, and the second active material layer is denoted as a second negative electrode active material layer;
the negative electrode current collector particle includes a body B2, and further includes a coating layer L2 located on at least a part of the surface of the body B2, the body B2 is composed of the element M2, the coating layer L2 includes a derived form of the element M2, and the derived form of the element M2 includes an oxidized form of the element M2;
optionally, the mass percentage of the negative electrode current collector particle in the first negative electrode active material layer is ≤ 0.5%;
optionally, the mass percentage of the negative electrode current collector particle in the second negative electrode active material layer is < 0.005%.

Based on any suitable embodiment in the present application, in still some embodiments, the negative electrode plate satisfies one or more of the following features:
in the negative electrode plate, the multi-layered active material layer is a double-layered negative electrode active material layer;
the thickness of the first negative electrode active material layer is greater than the thickness of the second negative electrode active material layer;
the thickness of the first negative electrode active material layer is 45 µm to 125 µm;
the thickness of the second negative electrode active material layer is 5 µm to 60 µm;
the mass percentage of the negative electrode current collector particle in the first negative electrode active material layer is ≤ 0.5%;
in the first negative electrode active material layer, the percentage of the mass of the negative electrode current collector particle relative to the sum of the mass of the negative electrode current collector particle and the mass of the first negative electrode active substance is ≤ 0.5%.

Based on any suitable embodiment in the present application, in still some embodiments, the negative electrode plate satisfies one or more of the following features:
the ratio of the thickness of the second negative electrode active material layer relative to the thickness of the first negative electrode active material layer is 0.05-0.5;
the thickness of the first negative electrode active material layer is 55 µm to 120 µm;
the thickness of the second negative electrode active material layer is 10 µm to 50 µm;
the mass percentage of the negative electrode current collector particle in the first negative electrode active material layer is 0.005%-0.4%;
in the first negative electrode active material layer, the percentage of the mass of the negative electrode current collector particle relative to the sum of the mass of the negative electrode current collector particle and the mass of the first negative electrode active substance is ≤ 0.4%.

Based on any suitable embodiment in the present application, in still some embodiments, the negative electrode plate satisfies one or more of the following features:
the ratio of the thickness of the second negative electrode active material layer relative to the thickness of the first negative electrode active material layer is 0.1-0.4;
the thickness of the first negative electrode active material layer is 60 µm to 110 µm;
the thickness of the second negative electrode active material layer is 15 µm to 45 µm;
the mass percentage of the negative electrode current collector particle in the first negative electrode active material layer is 0.01%-0.35%;
in the first negative electrode active material layer, the percentage of the mass of the negative electrode current collector particle relative to the sum of the mass of the negative electrode current collector particle and the mass of the first negative electrode active substance is ≤ 0.35%.

In the negative electrode plate, the foregoing multi-layered active material layer may be of a double-layer structure having two negative electrode active material layers, that is, a corresponding second negative electrode active material layer distal to the negative electrode current collector and a corresponding first negative electrode active material layer between the negative electrode current collector and the second negative electrode active material layer.

The thickness of the first negative electrode active material layer (located at the lower layer) and the thickness of the second negative electrode active material layer (located at the upper layer) in the multi-layer structured negative electrode active material layer can be adjusted to adjust the amount of the recycled negative electrode active substance stock in the new negative electrode plate. By allowing the thickness of the first negative electrode active material layer to be greater than the thickness of the second negative electrode active material layer, more recycled stock can be introduced, which is more beneficial for cost control. By adjusting the first negative electrode active material layer to a more appropriate thickness, the recycled negative electrode active substance stock can be more reasonably utilized. By adjusting the thickness of the second negative electrode active material layer, the magnitude of the barrier effect of the second negative electrode active material layer between the first negative electrode active material layer and the separator can be adjusted. Further, by adjusting the second negative electrode active material layer to a more appropriate thickness, the negative electrode current collector particle in the first negative electrode active material layer can be better blocked while controlling the cost, which is more beneficial for reducing the risk of piercing the separator, improving the Hi-pot test yield, and enhancing the high-temperature storage performance and reliability of the battery.

The mass percentage of the negative electrode current collector particle in the first negative electrode active material layer (which may be denoted as R_{N1}) and the percentage of the mass of the negative electrode current collector particle in the first negative electrode active material layer relative to the sum of the mass of the negative electrode current collector particle and the mass of the first negative electrode active substance (which may be denoted as R_{N2}) are mainly related to the following factors: the residual amount of the negative electrode current collector impurity in the recycled negative electrode active substance stock, and the content of the recycled negative electrode active substance stock in the first negative electrode active material layer. The smaller the R_{N1} and R_{N2}, the lower the risk of piercing the separator caused by the negative electrode current collector impurity.

By controlling one or more parameters of the thickness of the first negative electrode active material layer, the thickness of the second negative electrode active material layer, and the mass percentage of the negative electrode current collector particle in the first negative electrode active material layer to be within the above suitable ranges, the adverse effects caused by the negative electrode current collector impurity can be better reduced while introducing the recycled negative electrode active substance stock, which is beneficial for achieving better high-temperature storage performance and reliability of the battery while reducing the cost.

Based on any suitable embodiment in the present application, in still some embodiments, the negative electrode plate satisfies one or more of the following features:
the first negative electrode active substance includes one or more of a carbon-based material, a silicon-based material, a tin-based material, lithium titanate, and a modified form of any one of the foregoing substances, where the modified form includes one or more of doping modification and coating modification; the carbon-based material includes one or more of a graphite material, soft carbon, and hard carbon;
the second negative electrode active substance includes one or more of a graphite material, soft carbon, hard carbon, a silicon-based material, a tin-based material, lithium titanate, and a modified form of any one of the foregoing substances, where the modified form includes one or more of doping modification and coating modification.

Based on any suitable embodiment in the present application, in still some embodiments, the negative electrode plate satisfies one or more of the following features:
the first negative electrode active substance includes one or more of graphite, hard carbon, soft carbon, and a modified form of any one of the foregoing substances, where the modified form includes one or more of doping modification and coating modification;
the second negative electrode active substance includes one or more of graphite, hard carbon, soft carbon, and a modified form of any one of the foregoing substances, where the modified form includes one or more of doping modification and coating modification.

The negative electrode active substance in the recycled negative electrode active substance stock may have any known structure and/or component, may or may not contain a doping element, and may or may not have a coating layer. A recycled negative electrode plate having an appropriate type of negative electrode active substance can be selected as needed.

The type of the second negative electrode active substance in the second negative electrode active material layer may be appropriately selected as needed. A suitable structure and/or component may be selected from known types of negative electrode active substances.

In a second aspect of the present application, a secondary battery is provided. The secondary battery includes one or more electrode plates according to the first aspect of the present application.

Based on any suitable embodiment in the present application, in still some embodiments, the secondary battery includes a positive electrode plate and a negative electrode plate, and the secondary battery satisfies any one or both of the following features:
the positive electrode plate includes the positive electrode plate according to the first aspect of the present application;
the negative electrode plate includes the negative electrode plate according to the first aspect of the present application.

By using the electrode plate according to the first aspect of the present application in the secondary battery, based on the multi-layer structure design of the electrode plate, the second active material layer can be used to reduce the risk of piercing the separator that might be caused by the current collector impurity in the first active material layer. Therefore, the recycled active substance stock incorporating the current collector impurity can be used as the raw material for preparing the electrode plate, which can reduce the cost, reduce the risk of piercing the separator caused by the current collector impurity, reduce the risk of battery failure caused by short circuits between the two electrodes, self-discharge, Hi-pot failure, etc., and achieve good high-temperature storage performance and reliability of the battery. The electrode plate may be a positive electrode plate incorporating the positive electrode current collector impurity, or may be a negative electrode plate incorporating the negative electrode current collector impurity, or may be a combination of the two electrode plates.

Based on any suitable embodiment in the present application, in still some embodiments, the secondary battery is a lithium-ion secondary battery.

In a third aspect of the present application, an electric device is provided. The electric device includes at least one of the electrode plate according to the first aspect of the present application and the secondary battery according to the second aspect of the present application.

In a fourth aspect of the present application, a preparation method for a regenerated positive electrode plate is provided. The preparation method includes the following steps:
providing a recycled positive electrode plate;
crushing the recycled positive electrode plate to obtain recycled positive electrode particles, performing a first sieving, calcining the recycled positive electrode particles left after the first sieving to remove a volatile matter, crushing the calcined recycled positive electrode particles, demagnetizing, performing a second sieving, and collecting solids with a target particle size to obtain recycled positive electrode active substance stock, where the recycled positive electrode active substance stock contains a positive electrode current collector impurity;
applying a first positive electrode slurry including the recycled positive electrode active substance stock to at least one side of a positive electrode current collector, and drying to form a positive electrode active lower layer; and
applying a second positive electrode slurry to a side of the positive electrode active lower layer distal to the positive electrode current collector, drying, and cold pressing to prepare the regenerated positive electrode plate, where the regenerated positive electrode plate is the positive electrode plate defined in the first aspect of the present application.

The positive electrode plate in the first aspect of the present application may be a regenerated positive electrode plate prepared by using recycled positive electrode active substance stock recycled by a physical method as the raw material. The positive electrode current collector impurity in the recycled positive electrode active substance stock is converted into the positive electrode current collector particle in the regenerated positive electrode plate. In the preparation process, the positive electrode active lower layer corresponds to the first positive electrode active material layer.

Based on any suitable embodiment in the present application, in still some embodiments, the preparation method for the regenerated positive electrode plate satisfies one or more of the following features:
the mass percentage of the positive electrode current collector impurity in the recycled positive electrode active substance stock is 0.01%-1.0%;
the Dᵥ50 of a material obtained by crushing the calcined recycled positive electrode particles is 0.6 µm to 20 µm, where the Dᵥ50 represents a particle size at which the cumulative volume distribution percentage of a multi-particle mixture reaches 50%;
the second sieving uses a sieve of at least one mesh size between 80-400 mesh;
the Dᵥ50 of the recycled positive electrode active substance stock is 0.6 µm to 20 µm;
the Dᵥ99 of the recycled positive electrode active substance stock is ≤ 50 µm, where the Dᵥ99 represents a particle size at which the cumulative volume distribution percentage of a multi-particle mixture reaches 99%;
the maximum particle diameter of the positive electrode current collector impurity is ≤ 150 µm.

By controlling parameters such as temperature and particle size screening during the process of recycling the positive electrode active substance by a physical method, the particle size, particle size distribution, and content of the positive electrode current collector impurity in the recycled positive electrode active substance stock can be better controlled, and thus the particle size, content, and distribution of the positive electrode current collector impurity in the positive electrode plate can be better controlled.

In a fifth aspect of the present application, a preparation method for a regenerated negative electrode plate is provided. The preparation method includes the following steps:
providing a recycled negative electrode plate;
crushing the recycled negative electrode plate, performing winnowing, classification or water washing, and pressure filtration, drying to obtain recycled negative electrode particles, carbonizing the recycled negative electrode particles to remove a volatile matter, demagnetizing the carbonized recycled negative electrode particles, sieving, and collecting solids with a target particle size to obtain recycled negative electrode active substance stock, where the recycled negative electrode active substance stock contains a negative electrode current collector impurity;
applying a first negative electrode slurry including the recycled negative electrode active substance stock to at least one side of a negative electrode current collector, and drying to form a negative electrode active lower layer; and
applying a second negative electrode slurry to a side of the negative electrode active lower layer distal to the negative electrode current collector, drying, and cold pressing to prepare the regenerated negative electrode plate, where the regenerated negative electrode plate is the negative electrode plate defined in the first aspect of the present application.

The negative electrode plate in the first aspect of the present application may be a regenerated negative electrode plate prepared by using recycled negative electrode active substance stock recycled by a physical method as the raw material. The negative electrode current collector impurity in the recycled negative electrode active substance stock is converted into the negative electrode current collector particle in the regenerated negative electrode plate. In the preparation process, the negative electrode active lower layer corresponds to the first negative electrode active material layer.

Based on any suitable embodiment in the present application, in still some embodiments, the preparation method for the regenerated negative electrode plate satisfies one or more of the following features:
the mass percentage of the negative electrode current collector impurity in the recycled negative electrode active substance stock is 0.001%-0.5%;
the Dᵥ50 of the recycled negative electrode particle is 10 µm to 30 µm, where the Dᵥ50 represents a particle size at which the cumulative volume distribution percentage of a multi-particle mixture reaches 50%;
the sieving uses a sieve of at least one mesh size between 200-400 mesh;
the Dᵥ50 of the recycled negative electrode active substance stock is 8 µm to 25 µm;
the Dᵥ99 of the recycled negative electrode active substance stock is ≤ 120 µm, where the Dᵥ99 represents a particle size at which the cumulative volume distribution percentage of a multi-particle mixture reaches 99%;
the maximum particle diameter of the negative electrode current collector impurity is ≤ 120 µm.

By controlling parameters such as temperature and particle size screening during the process of recycling the negative electrode active substance by a physical method, the particle size, particle size distribution, and content of the negative electrode current collector impurity in the recycled negative electrode active substance stock can be better controlled, and thus the particle size, content, and distribution of the negative electrode current collector impurity in the negative electrode plate can be better controlled.

In a sixth aspect of the present application, a reusing method for a waste electrode plate is provided. The method includes the following steps:
obtaining at least one of a recycled positive electrode plate and a recycled negative electrode plate, where sources of the recycled positive electrode plate and the recycled negative electrode plate each independently include at least one of the following sources: a recycled plate obtained by disassembling a waste secondary battery and an intermediate product in a secondary battery production process, where the intermediate product includes at least one of an electrode plate before cold pressing and an electrode plate after cold pressing;
providing an electrode assembly, where the electrode assembly includes at least one of a regenerated positive electrode plate and a regenerated negative electrode plate, the regenerated positive electrode plate is prepared by using the preparation method according to the fourth aspect of the present application, and the regenerated negative electrode plate is prepared by using the preparation method according to the fifth aspect of the present application; and
preparing a regenerated secondary battery by using the electrode assembly.

Based on the electrode plate technology provided by the first aspect, the use of the recycled active substance stock containing the current collector impurity in the electrode plate is possible, such that the source of raw materials for electrode plates can be expanded, the utilization rate of raw materials can be improved, and the cost can be reduced; the active substance can be recycled from the waste electrode plate by a physical method, which is beneficial for reducing environmental pollution. The electrode plate may be a positive electrode plate incorporating the positive electrode current collector impurity, or may be a negative electrode plate incorporating the negative electrode current collector impurity, or may be a combination of the two electrode plates.

When at least one recycled electrode plate of a recycled positive electrode plate and a recycled negative electrode plate is obtained by disassembling a waste secondary battery, a reusing method for a waste secondary battery is also provided.

The details of one or more embodiments or examples of the present application are set forth in the drawings and description below. Other features, objectives, and advantages of the present application become apparent from the specification, the drawings, and the claims.

### BRIEF DESCRIPTION OF THE DRAWINGS

To better describe and illustrate embodiments or examples of those applications disclosed herein, reference may be made to one or more of the drawings. The additional details or examples used to describe the drawings should not be considered as limiting the scope of any one of the disclosed applications, the presently described embodiments or examples, and the presently understood best mode of these applications. Furthermore, the same reference numerals in all the drawings denote identical components. In the drawings:
FIG. 1 is a schematic structural view of an electrode plate according to one embodiment of the present application;
FIG. 2 is a schematic structural view of an electrode plate according to one embodiment of the present application;
FIG. 3 is a schematic view of a battery cell according to one embodiment of the present application;
FIG. 4 is an exploded view of the battery cell according to the embodiment of the present application shown in FIG. 3;
FIG. 5 is a schematic view of a battery module according to one embodiment of the present application;
FIG. 6 is a schematic view of a battery pack according to one embodiment of the present application;
FIG. 7 is an exploded view of the battery pack according to the embodiment of the present application shown in FIG. 6; and
FIG. 8 is a schematic view of an electric device using a secondary battery as a power source according to one embodiment of the present application.

### Description of the reference numerals:

100 represents a current collector; 210 represents a first active material layer; 220 represents a second active material layer; 1 represents a battery pack; 2 represents an upper case body; 3 represents a lower case body; 4 represents a battery module; 5 represents a battery cell; 51 represents a housing; 52 represents an electrode assembly; 53 represents a cover plate; 6 represents an electric device.

### DETAILEDDESCRIPTION

Some embodiments and examples of the electrode plate, the secondary battery, the electric device, the preparation method, and the reusing method of the present application are described in detail below with reference to the drawings as appropriate. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application may be defined with lower and upper limits. A given range is defined by selecting a lower limit and an upper limit that delineate the boundaries of a particular range. Ranges defined in this manner may include or exclude the end values, any one of the end values may be independently included or excluded, and the end values can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values 1 and 2 are listed and the maximum range values 3, 4, and 5 are also listed, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to stating that the parameter is, for example, an integer of 2, 3, 4, 5, 6, 7, 8, 9, 10, 11, 12, or the like. For example, when stating that a parameter is an integer selected from "2-10", it is equivalent to listing integers 2, 3, 4, 5, 6, 7, 8, 9, and 10.

In the present application, unless otherwise specified, "about" means within a certain range around the stated number, and the fluctuation range may vary depending on the type and numerical value of the stated number.

In the present application, the terms "a plurality of", "multiple", "more", "several", and the like, unless otherwise specified, mean that the number is greater than 2 or equal to 2. For example, "one or more" indicates one or greater than or equal to two (1 or ≥ 2).

Unless otherwise specified, all embodiments and optional embodiments of the present application can be combined with one another to form new technical solutions.

Reference in the present application to "example" means that a particular feature, structure, or characteristic described in combination with the example can be included in at least one example or embodiment of the present application. The references of the word in the context of the specification do not necessarily refer to the same example, nor to separate or alternative examples exclusive of other examples. It will be explicitly and implicitly understood by those skilled in the art that the examples described herein can be combined with other examples. Reference herein to "embodiment" is to be understood analogously.

Those skilled in the art may understand that, in the methods in the examples or embodiments, the order in which the steps are described does not imply a strict execution sequence that imposes any limitation on the implementation process. The specific order of execution for the steps should be determined based on their functionality and potential internal logic. Unless otherwise specified, all steps of the present application can be performed sequentially or randomly, preferably sequentially. For example, if a method M includes steps (a) and (b), it indicates that the method M may include steps (a) and (b) performed sequentially or steps (b) and (a) performed sequentially. For example, if the method M may further include step (c), it indicates that step (c) may be added to the method M in any order; for example, the method M may include steps (a), (b), and (c), or steps (a), (c), and (b), or steps (c), (a), and (b), or the like.

In the present application, open-ended technical features or technical solutions described using terms such as "contain", "comprise", or "include" shall, unless otherwise specified, be construed as not excluding the presence of additional members other than those listed. Such descriptions may be interpreted as providing both a closed-ended feature or solution consisting solely of the listed members and an open-ended feature or solution that includes additional members in addition to the listed members. For example, unless otherwise specified, "A includes a1, a2, and a3" means that A may further include additional members or may include no additional members. Such description may be interpreted as not only providing the feature or solution in which "A consists of a1, a2, and a3" or "A is selected from a1, a2, and a3", but also providing the feature or solution in which "A includes other members in addition to a1, a2, and a3".

In the present application, unless otherwise specified, A (such as B) represents that B is a non-limiting example of A, and it can be understood that A is not limited to B.

In the present application, "optionally" and "optional" indicates that something is non-mandatory, meaning that it may be selected from two parallel solutions: "presence" or "absence". If multiple "optional" appear in a technical solution, unless otherwise specified and there is no contradiction or mutual restriction, each "optional" is independent. For example, the description such as "optionally including" in the present application means "containing or not containing". "Optional component X" indicates the component X is present or absent.

In the present application, unless otherwise specified, a feature or solution corresponding to "and/or" includes any one of two or more related listed items, and also includes any and all combinations of the related listed items. The any and all combinations include any two related listed items, any more related listed items, or a combination of all the related listed items. For example, "A and/or B" represents a group composed of A, B, and "a combination of A and B". "Comprising A and/or B" may mean "comprising A, comprising B, and comprising A and B", or may mean comprising A, comprising B, or comprising A and B", and it may be properly understood according to the sentence in which the phrase is used.

Herein, the "suitable" in "suitable manner", "any suitable manner", and the like is subject to the technical solution that can implement the present application.

Herein, "preferably", "better", "superior", and "appropriately" are merely for describing embodiments or examples with a better effect and not intended to limit the protection scope of the present application. If there are multiple "preferably" in a technical solution, unless otherwise specified and there is no contradiction or mutual restriction, each "preferably" is independent.

In the present application, "further", "still further", "particularly", "for example", "such as", "illustratively", "e.g.", etc., are used for descriptive purposes and represent differences in content, but should not be construed as limiting the protection scope of the present application.

In the present application, in the "first aspect", the "second aspect", the "third aspect", the "fourth aspect", and the like, the terms "first", "second", "third", "fourth", etc., are merely used for descriptive purposes, and should not be construed as an indication or implication of relative importance or quantity, or an implicit indication of importance or quantity of an indicated technical feature. In addition, "first", "second", "third", "fourth", etc., are only for the purpose of non-exhaustive enumeration and description, and should not be construed as a closed limitation on the quantity.

In the present application, the term "room temperature" generally refers to 4 °C to 35 °C, and may refer to 20±5 °C. In some examples of the present application, the room temperature is 20 °C to 30 °C.

In the present application, for the unit of a numerical range, if a unit is only added after the right endpoint, it indicates that the unit of the left endpoint is the same as the unit of the right endpoint. For example, 3-5 h indicates that both the left endpoint "3" and the right endpoint "5" are in the unit of h (hour), and has the same meaning as 3 h to 5 h. In addition, descriptions of the units of other parameters such as temperature and size are understood in the same manner, unless otherwise specified.

The weight of the relevant components mentioned in the description of the examples of the present application may not only refer to the content of each component, but also represent the weight ratio of the components. Therefore, any scale-up or scale-down according to the content of the relevant components in the description of the examples of the present application falls within the scope disclosed in the description of the examples of the present application. Further, the mass described in the description of the examples of the present application may be a mass unit commonly well-known in the chemical industry field, such as microgram (µg), milligram (mg), gram (g), and kilogram (kg). Unless otherwise specified, the mass ratio is equal to the corresponding weight ratio. For example, if the mass of the substance A is m1 and its weight is W1, and the mass of the substance B is m2 and its weight is W2, the mass ratio m1/m2 of the substance A and the substance B is numerically equal to the corresponding weight ratio W1/W2. In the present application, unless otherwise specified, wt% represents a weight percentage based on weight, which is numerically equivalent to the corresponding mass percentage based on mass.

In the present application, "greater than or equal to" may be represented as "≥", "less than or equal to" may be represented as "≤", "greater than" may be equivalently represented as ">", and "less than" may be equivalently represented as "<". In the present application, unless otherwise specified, "greater than or equal to" and "≥" may be considered as further providing two solutions: "greater than" and "equal to". In the present application, unless otherwise specified, "less than or equal to" and "≤" may be considered as further providing two solutions: "less than" and "equal to".

In the present application, for units of parameters, unless otherwise specified, a temperature unit °C represents "degrees Celsius", a time unit min represents "minutes", a length unit µm represents "micrometers", a viscosity unit mPa·S represents "millipascal-seconds", an areal density unit mg/cm² represents "milligrams per square centimeter", a bulk density unit g/cm³ represents "grams per cubic centimeter", a quantity unit mol of a substance represents "mole", and a molar concentration unit mol/L represents "mole per liter".

In the present application, exemplary descriptions such as "in some embodiments (or examples) " and "in one embodiment (or example) " may cover, but are not limited to, the following meaning: these solutions may be combined with other solutions in a suitable manner to form new technical solutions.

In the present application, the exemplary description "based on any suitable embodiment in the present application, in still some embodiments" or a similar description may cover, but is not limited to, the following meaning: these solutions may be combined with each other in a suitable manner to form new technical solutions.

Taking the recycling of positive electrode materials in lithium-ion batteries as an example, there are two main regenerating technologies for positive electrode materials in waste lithium-ion batteries: chemical recycling and physical recycling. Chemical recycling is to recycle the positive electrode material by solvent extraction, high-temperature smelting, and other methods, but the technical route of chemical recycling is relatively complex and the cost is high. Treatment agents such as strong acids, strong bases, and a large amount of ammonium hydroxide are usually used in the production process, and if the treatment is improper, the waste materials generated in the treatment process will pollute the air, water, and soil. Physical recycling mainly involves using magnetic separation, sieving, and other technologies to separate and purify the positive electrode material, and this enables automatic pollution-free separation with good economic efficiency. However, for the positive electrode material recycled by physical recycling alone, the positive electrode plate prepared by reusing the positive electrode material cannot meet the normal use requirements of lithium-ion batteries, and the high-temperature storage performance and reliability are poor.

One of the key constraints that make it difficult to use the physically recycled active substances from electrode plates in the manufacturing of new batteries is that the recycled stock often incorporates current collector debris. The debris are close in size to active particles and is thus difficult to be completely removed by particle size screening. Therefore, the debris remains in the recycled stock of the active substances, which affects the use performance of the electrode plates prepared with the reused material. After the recycled positive electrode active substance stock is used to prepare the positive electrode slurry and the positive electrode slurry is applied to one side of the positive electrode current collector to prepare a new positive electrode plate, the hard edges of the positive electrode current collector impurity remaining in the recycled positive electrode active substance stock easily cause an uneven surface of the electrode plate and easily pierce the separator, resulting in risks such as short circuits between the two electrodes, self-discharge, and Hi-pot failures, thereby affecting the high-temperature storage performance and reliability of the battery. After the recycled negative electrode active substance stock is used to prepare the negative electrode slurry and the negative electrode slurry is applied to one side of the negative electrode current collector to prepare a new negative electrode plate, the hard edges of the negative electrode current collector impurity remaining in the recycled negative electrode active substance stock also easily pierce the separator, thereby affecting the high-temperature storage performance and reliability of the battery.

In a first aspect of the present application, an electrode plate is provided. The electrode plate includes a current collector and a multi-layered active material layer located on at least one side of the current collector, and the multi-layered active material layer includes a first active material layer and a second active material layer, where the second active material layer is an active material layer farthest away from the current collector, and the first active material layer is located between the second active material layer and the current collector; the first active material layer includes a current collector particle. The electrode plate can provide a new path for preparing a secondary battery with good reliability by using the recycled electrode plate stock.

In some embodiments, the electrode plate may be a positive electrode plate. In this case, the current collector particle contains a metal component suitable for a positive electrode current collector.

In some other embodiments, the electrode plate may also be a negative electrode plate. In this case, the current collector particle contains a metal component suitable for a negative electrode current collector.

In some embodiments, an electrode plate is provided. The electrode plate includes a current collector and a multi-layered active material layer located on at least one side of the current collector, and the multi-layered active material layer includes a first active material layer and a second active material layer, where the second active material layer is an active material layer farthest away from the current collector, and the first active material layer is located between the second active material layer and the current collector;
the first active material layer includes a current collector particle;
the electrode plate is a positive electrode plate and the current collector particle contains a metal component suitable for a positive electrode current collector; or the electrode plate is a negative electrode plate and the current collector particle contains a metal component suitable for a negative electrode current collector.

In some embodiments, the electrode plate is a positive electrode plate, and the current collector particle includes one or more metal components of aluminum, aluminum alloys, nickel, nickel alloys, titanium, titanium alloys, silver, and silver alloys.

In some embodiments, the electrode plate is a negative electrode plate, and the current collector particle includes one or more metal components of copper, copper alloys, nickel, nickel alloys, titanium, titanium alloys, silver, and silver alloys.

In some embodiments, an electrode plate is provided. The electrode plate includes a current collector and a multi-layered active material layer located on at least one side of the current collector, and the multi-layered active material layer includes a first active material layer and a second active material layer, where the second active material layer is an active material layer farthest away from the current collector, and the first active material layer is located between the second active material layer and the current collector;
the first active material layer includes a current collector particle;
the electrode plate is a positive electrode plate, and the current collector particle includes one or more metal components of aluminum, aluminum alloys, nickel, nickel alloys, titanium, titanium alloys, silver, and silver alloys; or the electrode plate is a negative electrode plate, and the current collector particle includes one or more metal components of copper, copper alloys, nickel, nickel alloys, titanium, titanium alloys, silver, and silver alloys.

In some embodiments, the metal component suitable for a positive electrode current collector refers to a metal component that will not be oxidized at the positive electrode at a potential > 2.0 V, with temperature condition including at least one temperature of 20 °C to 30 °C; the metal component suitable for a negative electrode current collector refers to a metal component capable of having chemical stability at the negative electrode under charging and discharging conditions, and the charging and discharging conditions at least include: performing at least one charging and discharging cycle within a cut-off voltage range, with the temperature for performing the charging and discharging cycles including at least one temperature of 10 °C to 80 °C.

In some embodiments, the electrode plate is a positive electrode plate, and the current collector particle contains a metal component suitable for a positive electrode current collector; the metal component suitable for the positive electrode current collector refers to a metal component that will not be oxidized at the positive electrode at a potential > 2.0 V, with temperature condition including at least one temperature of 20 °C to 30 °C.

In some embodiments, the electrode plate is a negative electrode plate, and the current collector particle contains a metal component suitable for a negative electrode current collector; the metal component suitable for the negative electrode current collector refers to a metal component capable of having chemical stability at the negative electrode under charging and discharging conditions, and the charging and discharging conditions at least include: performing at least one charging and discharging cycle within a cut-off voltage range, with the temperature for performing the charging and discharging cycles including at least one temperature of 10 °C to 80 °C.

In the present application, any one electrode plate includes an active material layer, and the active material layer is disposed on at least one side of the electrode plate, that is, the active material layer in the electrode plate may be disposed on a single side or both sides of the electrode plate. When the active material layer is disposed on both sides of the electrode plate: a current collector is disposed between the active material layers on both sides; the compositions of the active material layers on both sides may be the same or different; the thicknesses of the active material layers on both sides may also be the same or different; the number of structural layers of the active material layers on both sides may be the same or different; when both sides have the same number of structural layers, the multi-layer structures on both sides may be the same or different in terms of parameters such as composition and thickness.

In the present application, unless otherwise specified, the "active material layer" includes at least one of a positive electrode active material layer of a positive electrode plate and a negative electrode active material layer of a negative electrode plate, and may refer to the positive electrode active material layer or the negative electrode active material layer according to specific situations. It can be understood that the positive electrode active material layer contains a positive electrode active substance, and the negative electrode active material layer contains a negative electrode active substance. It can be understood that when the active material layer is of a multi-layer structure, the active material layer includes multiple active material layers, and any one active material layer independently contains a corresponding active substance.

It can be understood that the "multi-layered active material layer" is of a multi-layer structure having at least two active material layers, and each active material layer contains a corresponding active substance. There is an interlayer interface between different structural layers in the multi-layered active material layer, or there is a difference in chemical composition between different structural layers.

In the present application, unless otherwise specified, the electrode plate may be a positive electrode plate or a negative electrode plate, and the "active substance" in the electrode plate refers to a substance that enables reversible intercalation and deintercalation of active ions. Unless otherwise specified, the "negative electrode active substance" refers to a substance that is used for a negative electrode plate and enables reversible intercalation and deintercalation of active ions; the "positive electrode active substance" refers to a substance that is used for a positive electrode plate and enables reversible deintercalation and intercalation of active ions. When the secondary battery is charged, the active ions are deintercalated from the positive electrode and intercalated into the negative electrode through the electrolyte; when the secondary battery is discharged, the active ions are deintercalated from the negative electrode and intercalated into the positive electrode. The active ions are not particularly limited. They may be lithium ions, and in this case, the corresponding battery is a lithium-ion secondary battery.

In the present application, the "active material" and the "active substance" have the same meaning and may be used interchangeably; the "positive electrode active substance" and the "positive electrode active material" have the same meaning and may be used interchangeably; the "negative electrode active substance" and the "negative electrode active material" have the same meaning and may be used interchangeably.

In the present application, unless otherwise specified, the "metal component" or the "metal" may refer to an elemental metal, or may refer to an alloy.

In the present application, unless otherwise specified, the "current collector particle" contains a metal component suitable for the current collector. The metal component suitable for the current collector usually refers to a metal component capable of conducting electricity and collecting current in the current collector. It can be understood that the metal component in the current collector is usually a conductive component. The metal component suitable for the current collector usually includes a metal component M0 suitable for the metal substrate of the current collector, and may or may not include a metal component Mx for modifying the performance of the current collector. In the metal component suitable for the current collector, the mass percentage of the metal component M0 may satisfy the condition of ≥ 50%, may further satisfy the condition of ≥ 60%, may still further be selected from 80%-100%, and may even further be 100%. The mass percentage of the metal component M0 in the metal component suitable for the current collector may also be selected from any one of the following percentages, or selected from an interval composed of any one of the following percentages and 100%, or selected from an interval composed of any two of the following percentages: 50%, 60%, 70%, 80%, 90%, 95%, 96%, 98%, 99%, etc. In the metal component suitable for the current collector, the mass percentage of the metal component Mx may satisfy the condition of ≤ 50%, may further satisfy the condition of ≤ 40%, may still further satisfy the condition of ≤ 10%, and may even further be 0 (i.e., not contained). The mass percentage of the metal component Mx in the metal component suitable for the current collector may also be selected from any one of the following percentages, or selected from an interval composed of 0% and any one of the following percentages, or selected from an interval composed of any two of the following percentages: 1%, 5%, 10%, 20%, 30%, 40%, 50%, etc. In addition to the metal component suitable for the current collector, the current collector particle may further contain or may not contain a nonmetal element, and the nonmetal element and the metal component suitable for the current collector form a compound or are alloyed. For example, the current collector particle may contain an oxide of the metal component suitable for the current collector.

The current collector particle located in the positive electrode plate may be denoted as a "positive electrode current collector particle", which includes a metal component suitable for the positive electrode current collector. The positive electrode current collector particle includes a metal component M0_{P} suitable for a positive electrode current collector substrate, and may further include or may not include a metal component Mx_{P} capable of being used for modifying the positive electrode current collector. The metal component M0_{P} as the positive electrode current collector substrate may be a metal component with a high redox potential, so as to maintain good chemical stability at the positive electrode. The metal component Mx_{P} capable of being used for modifying the positive electrode current collector may be appropriately selected according to the performance requirements of the positive electrode current collector, for example, for improving the conductivity, ductility, and the like of the positive electrode current collector. The positive electrode current collector particle may further contain or not contain a nonmetal element, and the nonmetal element is usually present in the positive electrode current collector particle in the form of a compound or an alloy. Without limitation, the positive electrode current collector particle may contain an oxide of the metal component suitable for the positive electrode current collector, such as an oxide of the metal component M0_{P} or an oxide of the metal component Mx_{P}. Non-limiting examples of the metal component M0_{P} as the positive electrode current collector substrate include one or more of aluminum and aluminum alloys. Non-limiting examples of the metal component Mx_{P} capable of being used for modifying the positive electrode current collector include one or more of nickel, nickel alloys, titanium, titanium alloys, silver, and silver alloys.

In the present application, unless otherwise specified, the "metal component suitable for the positive electrode current collector" usually refers to a metal component that will not be oxidized at the positive electrode at a potential > 2.0 V.

In the present application, unless otherwise specified, whether a certain metal component is a "metal component suitable for the positive electrode current collector" can be determined by the following method: A metal component having an active ion intercalation potential higher than the intercalation potential of the negative electrode active substance is determined as a "metal component suitable for the positive electrode current collector". Taking the active ions being lithium ions and the negative electrode active substance being a graphite material as an example, the lithium intercalation potential of the negative electrode material graphite is usually 0.01 V to 0.2 V.

In the present application, whether a certain metal component is a "metal component suitable for the positive electrode current collector" can be determined according to the cyclic voltammetry curve. Similarly, whether a metal component in a certain current collector is a "metal component suitable for the positive electrode current collector" can also be determined according to the cyclic voltammetry curve.

In the present application, determining whether a certain metal component is a "metal component suitable for the positive electrode current collector" according to the cyclic voltammetry curve can be implemented in the following manner: A current collector foil made from a metal component to be tested is used as the cathode and assembled, together with a lithium foil as a reference electrode, into a coin cell, with the lithium foil being used as the anode; the cyclic voltammetry curve is obtained by using a cyclic voltammetry method, and whether the metal component is a "metal component suitable for the positive electrode current collector" is determined according to the peak characteristics of the metal component on the cyclic voltammetry curve.

In the present application, the peak characteristics on the cyclic voltammetry curve may include an oxidation peak, a reduction peak, and no peak.

In the present application, determining whether a metal component constituting a certain current collector is a "metal component suitable for the positive electrode current collector" according to the cyclic voltammetry curve can be implemented in the following manner: A current collector to be tested is used as the cathode and assembled, together with a lithium foil as a reference electrode, into a coin cell, with the lithium foil being used as the anode; the cyclic voltammetry curve is obtained by using a cyclic voltammetry method, and whether the metal component is a "metal component suitable for the positive electrode current collector" is determined according to the peak characteristics of the current collector on the cyclic voltammetry curve.

In the present application, unless otherwise specified, an electrolytic solution with the following composition can be used in the cyclic voltammetry method: A mixed solvent of ethylene carbonate (EC) and dimethyl carbonate (DMC) with a volume ratio of 50%:50% is used, and 1 mol/L lithium hexafluorophosphate (LiPF₆) is contained. The electrolytic solution can be used in a cyclic voltammetry test for determining "whether a metal component is a metal component suitable for the positive electrode current collector".

In the present application, when the "metal component suitable for the positive electrode current collector" is identified, testing using the cyclic voltammetry method and analysis based on the obtained cyclic voltammetry curve can be performed in the following manner: A cyclic voltammetry test is performed on a coin cell at 25 °C by scanning from the open circuit potential to 4.5 V vs. Li/Li⁺ and then back to 2.0 V vs. Li/Li⁺ to obtain the cyclic voltammetry curve (optionally, the scanning speed is 10 mV/s), with at least 5 cycles completed; when the oxidation peak current in the scanning curve from 2.0 V vs. Li/Li⁺ to 4.5 V vs. Li/Li⁺ on the cyclic voltammetry curve after 3 cycles is < 10 µA·cm⁻², it is determined that the metal component to be tested is a "metal component suitable for the positive electrode current collector", where the metal component to be tested at this time is also classified as the "metal component that will not be oxidized at the positive electrode at a potential > 2.0 V". In principle, the "metal component suitable for the positive electrode current collector" does not exhibit a reduction peak after 3 cycles.

In some embodiments, the metal component suitable for the positive electrode current collector is identified and confirmed according to the cyclic voltammetry curve.

In the present application, unless otherwise specified, the following method is used to determine whether a certain metal component at the positive electrode is a "metal component suitable for the positive electrode current collector": A current collector foil made from a metal component to be tested or a current collector foil containing a metal component to be tested is used as the cathode and assembled, together with a lithium foil as a reference electrode, into a coin cell, with the lithium foil being used as the anode, and the electrolytic solution employs a mixed solvent of ethylene carbonate (EC) and dimethyl carbonate (DMC) with a volume ratio of 50%:50% and contains 1 mol/L lithium hexafluorophosphate (LiPF₆). The following cyclic voltammetry method can be used to obtain a cyclic voltammetry curve: A cyclic voltammetry test is performed on a coin cell at 25 °C by scanning from the open circuit potential to 4.5 V vs. Li/Li⁺ and then back to 2.0 V vs. Li/Li⁺ at a scanning speed of 10 mV/s to obtain the cyclic voltammetry curve, with at least 5 cycles completed. On the cyclic voltammetry curve, a peak present on the curve formed by "scanning from the open circuit potential to 4.5 V vs. Li/Li+" corresponds to an "oxidation peak", and a peak present on the curve formed by "scanning back to 2.0 V vs. Li/Li+" corresponds to a "reduction peak". When the oxidation peak current in the scanning curve from 2.0 V vs. Li/Li⁺ to 4.5 V vs. Li/Li⁺ on the cyclic voltammetry curve after 3 cycles is < 10 µA·cm⁻², it is determined that the metal component to be tested is a "metal component suitable for the positive electrode current collector". It should be noted that in principle, the metal component does not exhibit a reduction peak on the scanning curve of "scanning from 4.5 V to 2.0 V vs. Li/Li+" after 3 cycles.

In the present application, when it is determined whether a certain metal component is a "metal component suitable for the positive electrode current collector", unless otherwise specified, the temperature condition may include at least one temperature of 20 °C to 30 °C. Without limitation, the temperature condition may include at least one of the following temperatures, or may further include at least one temperature within a temperature interval composed of any two of the following temperatures: 20 °C, 22 °C, 24 °C, 25 °C, 26 °C, 28 °C, 30 °C, etc., or may also be selected from a temperature interval composed of any two of the foregoing temperatures. Non-limiting examples of the foregoing temperature interval include 24 °C to 26 °C, 22 °C to 28 °C, or the like.

The current collector particle located in the negative electrode plate may be denoted as a "negative electrode current collector particle", which includes a metal component suitable for the negative electrode current collector. The negative electrode current collector particle includes a metal component M0_{N} suitable for a negative electrode current collector substrate, and may further or may not include a metal component Mx_{N} capable of being used for modifying the negative electrode current collector. The metal component M0_{N} as the negative electrode current collector substrate may be a metal component that is not prone to irreversible loss at the negative electrode under charging and discharging conditions, so as to avoid, as much as possible, consumption or a conductivity loss during cycling. The metal component Mx_{N} capable of being used for modifying the negative electrode current collector may be appropriately selected according to the performance requirements of the negative electrode current collector, for example, for improving the conductivity, ductility, and the like of the negative electrode current collector. The negative electrode current collector particle may further contain or not contain a nonmetal element, and the nonmetal element is present in the negative electrode current collector particle in the form of a compound or an alloy. Without limitation, the negative electrode current collector particle may contain an oxide of the metal component suitable for the negative electrode current collector, such as an oxide of the metal component M0_{N} or an oxide of the metal component Mx_{N}. Non-limiting examples of the metal component M0_{N} as the negative electrode current collector substrate include one or more of copper and copper alloys. Non-limiting examples of the metal component Mx_{N} capable of being used for modifying the negative electrode current collector include one or more of nickel, nickel alloys, titanium, titanium alloys, silver, and silver alloys.

In principle, a metal component can be used as a negative electrode current collector material as long as the metal component can play the role of conducting electricity and collecting current at the negative electrode, has certain chemical stability in the charging and discharging process, and is not prone to irreversible loss. A non-limiting example of the irreversible loss is, for example, a mass loss of the negative electrode current collector caused by an irreversible chemical reaction with the active ions, or for another example, a conductivity loss caused by an oxidation reaction. At present, a commonly used negative electrode current collector material is a copper foil. It can be understood that in the present application, a material suitable for the negative electrode current collector may not be limited to the copper foil.

In the present application, unless otherwise specified, a "metal component suitable for the negative electrode current collector" refers to a metal component capable of having chemical stability at the negative electrode under charging and discharging conditions, and the charging and discharging conditions may at least include: performing at least one charging and discharging cycle within a cut-off voltage range, where the number of charging and discharging cycles within the cut-off voltage range may also be ≥ 10, ≥ 50, ≥ 100, or the like. The "having chemical stability" can be understood as substantially no irreversible loss within the service life of the battery.

In the present application, unless otherwise specified, whether a certain metal component is a "metal component suitable for the negative electrode current collector" can be determined by the following method: The metal component has a standard potential higher than the standard potential of the active ions, is inert in reaction relative to the active ions, and has no reactivity with the active ions. Taking the active ions being lithium ions as an example, the standard potential of lithium (Li) is -3.04 V, while the standard potential of copper (Cu) is +0.34 V, and Cu is not reactive to lithium. Therefore, Cu is a commonly used metal component suitable for the negative electrode current collector.

In the present application, when it is determined whether a certain metal component is a "metal component suitable for the negative electrode current collector", unless otherwise specified, the temperature condition may include at least one temperature of 10 °C to 80 °C. Without limitation, the temperature condition may include at least one of the following temperatures, or may further include at least one temperature within a temperature interval composed of any two of the following temperatures: 10 °C, 15 °C, 20 °C, 22 °C, 24 °C, 25 °C, 26 °C, 28 °C, 30 °C, 35 °C, 36 °C, 40 °C, 45 °C, 50 °C, 60 °C, 70 °C, 80 °C, etc., or may also be selected from a temperature interval composed of any two of the foregoing temperatures. Non-limiting examples of the foregoing temperature interval include 24 °C to 26 °C, 22 °C to 28 °C, 10 °C to 30 °C, 20 °C to 30 °C, 20 °C to 40 °C, 10 °C to 40 °C, 20 °C to 35 °C, 15 °C to 35 °C, 10 °C to 35 °C, 10 °C to 60 °C, 20 °C to 60°C, etc.

In the present application, whether a certain metal component is a "metal component suitable for the negative electrode current collector" can be determined according to the voltammetry curve. Similarly, whether a metal component in a certain current collector is a "metal component suitable for the negative electrode current collector" can also be determined according to the voltammetry curve.

In the present application, determining whether a certain metal component is a "metal component suitable for the negative electrode current collector" according to the voltammetry curve can be implemented in the following manner: A current collector foil made from a metal component to be tested is used as the cathode and assembled, together with a lithium foil as a reference electrode, into a coin cell, with the lithium foil being used as the anode; the voltammetry curve is obtained by using a voltammetry method, and whether the metal component is a "metal component suitable for the negative electrode current collector" is determined according to the peak characteristics of the metal component on the voltammetry curve.

In the present application, determining whether a metal component constituting a certain current collector is a "metal component suitable for the negative electrode current collector" according to the voltammetry curve can be implemented in the following manner: A current collector to be tested is used as the cathode and assembled, together with a lithium foil as a reference electrode, into a coin cell, with the lithium foil being used as the anode; the voltammetry curve is obtained by using a voltammetry method, and whether the metal component is a "metal component suitable for the negative electrode current collector" is determined according to the peak characteristics of the current collector on the voltammetry curve.

In the present application, unless otherwise specified, an electrolytic solution with the following composition can be used in the voltammetry method: A mixed solvent of ethylene carbonate (EC) and dimethyl carbonate (DMC) with a volume ratio of 50%:50% is used, and 1 mol/L lithium hexafluorophosphate (LiPF₆) is contained. The electrolytic solution can be used in a voltammetry test for determining "whether a metal component is a metal component suitable for the negative electrode current collector".

In the present application, when the "metal component suitable for the negative electrode current collector" is identified, testing using the voltammetry method and analysis based on the obtained voltammetry curve can be performed in the following manner: cathodic polarization is first performed on a coin cell at 25 °C by scanning from the open circuit potential to 0 V vs. Li/Li+, followed by anodic polarization up to 3 V vs. Li/Li+ to obtain the voltammetry curve (optionally, the scanning speed is 10 mV/s); when no reduction peak corresponding to the alloying of the current collector with Li appears in the cathodic polarization section of 0-0.3 V vs. Li/Li+ and no oxidation peak corresponding to dissolution of the current collector material appears in the anodic polarization section, it is determined that the metal component to be tested is a "metal component suitable for the negative electrode current collector". Multiple cycles (e.g., 2, 3, 4, 5, or more cycles) can also be performed using the cyclic voltammetry method to improve the accuracy of the determination result.

In some embodiments, the metal component suitable for the negative electrode current collector is identified and confirmed according to the voltammetry curve.

In the present application, unless otherwise specified, the following method is used to determine whether a certain metal component at the negative electrode is a "metal component suitable for the negative electrode current collector": A current collector foil made from a metal component to be tested or a current collector foil containing a metal component to be tested is used as the cathode and assembled, together with a lithium foil as a reference electrode, into a coin cell, with the lithium foil being used as the anode, and the electrolytic solution employs a mixed solvent of ethylene carbonate (EC) and dimethyl carbonate (DMC) with a volume ratio of 50%:50% and contains 1 mol/L lithium hexafluorophosphate (LiPF₆). The following voltammetry method can be used to obtain the voltammetry curve: A voltammetry test is performed on a coin cell at 25 °C, where cathodic polarization is first performed by scanning from the open circuit potential to 0 V vs. Li/Li+, followed by anodic polarization up to 3 V vs. Li/Li+; when no reduction peak corresponding to the alloying of the current collector with Li appears in the cathodic polarization section of 0-0.3 V vs. Li/Li+ and no oxidation peak corresponding to dissolution of the current collector material appears in the anodic polarization section, it is determined that the metal component to be tested is a "metal component suitable for the negative electrode current collector".

In the electrode plate provided in the first aspect of the present application, the active material layer on at least one side of the current collector includes a first active material layer and a second active material layer located on a side of the first active material layer distal to the current collector. That is, the active material layer is of a multi-layer structure on at least one side of the current collector and includes at least a first active material layer and a second active material layer. The active material layers in the electrode plate may not be limited to the first active material layer and the second active material layer. There may be no other active material layer between the first active material layer and the current collector, or other active material layers may be provided. There may be no other active material layer between the first active material layer and the second active material layer, or other active material layers may be further disposed.

In the present application, unless otherwise specified, the "first active material layer" is an active material layer that is not in direct contact with the separator, other active material layers are present between the first active material layer and the separator, and at least the "second active material layer" is present between the first active material layer and the separator. In the present application, unless otherwise specified, the "second active material layer" is an active material layer located on a side of the first active material layer farthest away from the current collector. The first active material layer and the second active material layer each contain an active substance. The active substance in the first active material layer may be denoted as a first active substance, the active substance in the second active material layer may be denoted as a second active substance, and the first active substance and the second active substance may be the same or different.

In the electrode plate provided in the first aspect of the present application, the first active material layer contains a "current collector particle" in addition to the first active substance. The current collector particle may be from the current collector impurity in the recycled active substance stock, but is not limited thereto.

The electrode plate provided in the first aspect of the present application may adopt a multi-layer structure including a first active material layer and a second active material layer. The multi-layer structured active material layer is disposed on the current collector, the first active material layer on the side proximal to the current collector may also be denoted as a lower layer, and the second active material layer on the side distal to the current collector may also be denoted as an upper layer. By disposing the recycled active substance stock with residual current collector impurity in the lower layer of the active material layer and utilizing the barrier effect of the upper layer of the active material layer, the current collector impurity can be prevented from directly contacting the separator, which can reduce the risk of piercing the separator, thereby reducing the risk of short circuits between the two electrodes and self-discharge, improving the Hi-pot test yield, and enhancing the high-temperature storage performance and reliability of the battery.

The multi-layered active material layer is not only applicable to preparing a new positive electrode plate with the recycled positive electrode active substance stock containing the positive electrode current collector impurity, but also applicable to preparing a new negative electrode plate with the recycled negative electrode active substance stock containing the negative electrode current collector impurity. This can reduce the manufacturing cost of the electrode plate.

The current collector impurity from the current collector in the recycled electrode plate may be denoted as the current collector particle, and the main component thereof is from the current collector in the recycled electrode plate. Therefore, all metal components currently applicable to the current collector in the technical field of secondary batteries may be included in the current collector particle. For the positive electrode plate and the negative electrode plate, all metal components applicable to the positive electrode current collector in the current secondary battery technical field may be included in the positive electrode current collector particle, and all metal components currently applicable to the negative electrode current collector in the technical field of secondary batteries may be included in the negative electrode current collector particle.

It should be noted that the source of the current collector particle in the electrode plate may not be limited to the recycling process of the active substance of the electrode plate; as long as the structure and components of the electrode plate are consistent with those of the electrode plate in any one embodiment of the present application, the electrode plate is fall within the scope of the "electrode plate" provided in the first aspect of the present application.

When the electrode plate is a positive electrode plate, the first active material layer is denoted as a first positive electrode active material layer, the first active substance is denoted as a first positive electrode active substance, and the current collector particle is denoted as a positive electrode current collector particle; the second active material layer is denoted as a second positive electrode active material layer, and the second active substance is denoted as a second positive electrode active substance. In this case, the active substance in the first positive electrode active material layer is denoted as a first positive electrode active substance. The first positive electrode active material layer contains a "positive electrode current collector particle" in addition to the first positive electrode active substance. The positive electrode current collector particle may be from the positive electrode current collector impurity in the recycled positive electrode active substance stock, but is not limited thereto. The first positive electrode active substance and the second positive electrode active substance may be the same or different.

When the electrode plate is a negative electrode plate, the first active material layer is denoted as a first negative electrode active material layer, the first active substance is denoted as a first negative electrode active substance, and the current collector particle is denoted as a negative electrode current collector particle; the second active material layer is denoted as a second negative electrode active material layer, and the second active substance is denoted as a second negative electrode active substance. In this case, the active substance in the first negative electrode active material layer is denoted as a first negative electrode active substance. The first negative electrode active material layer contains a "negative electrode current collector particle" in addition to the first negative electrode active substance. The negative electrode current collector particle may be from the negative electrode current collector impurity in the recycled negative electrode active substance stock, but is not limited thereto. The first negative electrode active substance and the second negative electrode active substance may be the same or different.

Based on any suitable embodiment in the present application, in still some embodiments, the second active material layer includes or does not include the current collector particle; the mass percentage of the current collector particle in the second active material layer is less than the mass percentage of the current collector particle in the first active material layer.

The second active material layer may or may not include the current collector particle. The lower the content of the current collector particle in the second active material layer, the stronger the barrier effect, the more beneficial it is for improving the high-temperature storage performance and reliability of the battery. It can be understood that when the second active material layer includes the current collector particle, the content of the current collector particle in the second active material layer should be limited to the extent that the second active material layer can still play the role of reducing the risk of piercing the separator. The higher the content of the current collector particle in the first active material layer, the more beneficial it is for reducing the manufacturing cost of the electrode plate. It can be understood that the content of the current collector particle in the second active material layer should be limited to the extent that the risk of piercing the separator can be reduced by the second active material layer. Allowing the mass percentage of the current collector particle in the second active material layer to be less than the mass percentage of the current collector particle in the first active material layer can balance the manufacturing cost and performance of the electrode plate.

Based on any suitable embodiment in the present application, in still some embodiments, the metal component suitable for the positive electrode current collector refers to a metal component that will not be oxidized at the positive electrode at a potential > 2.0 V, with temperature condition including at least one temperature value of 20 °C to 30 °C.

Those skilled in the art can determine the type of the metal component suitable for the positive electrode current collector based on the well-known meaning of "positive electrode current collector" in the technical field and the guidance in the present application.

Based on any suitable embodiment in the present application, in still some embodiments, the metal component suitable for the negative electrode current collector refers to a metal component capable of having chemical stability at the negative electrode under charging and discharging conditions, and the charging and discharging conditions at least include: performing at least one charging and discharging cycle within a cut-off voltage range, with the temperature for performing the charging and discharging cycles including at least one temperature value of 10 °C to 80 °C.

Those skilled in the art can determine the type of the metal component suitable for the negative electrode current collector based on the well-known meaning of "negative electrode current collector" in the technical field and the guidance in the present application. A metal component can facilitate the improvement in the high-temperature stability of the negative electrode plate if it has chemical stability under high temperature conditions.

In the electrode plate provided in the first aspect of the present application, the second active material layer may contain no or only a small amount of current collector particles. When the second active material layer contains the current collector particle, unless otherwise specified, whether "acceptable content of the current collector particle in the second active material layer" is appropriate can be determined by adopting the following criteria: if the cell qualification rate is ≥ 99% when the resistance value is ≥ 20 MΩ under the voltage condition of 250 V, the content is considered to be "appropriate". The "acceptable content of the current collector particle in the second active material layer" in the positive electrode plate and the negative electrode plate may be the same or different.

For the positive electrode plate or the negative electrode plate, when the multi-layered active material layer includes other active material layers in addition to the first active material layer and the second active material layer, the content of the current collector particle in the other active material layers may be less than or equal to the content of the current collector particle in the corresponding first active material layer, and the "content" can be quantified by the mass percentage.

Unless otherwise specified, the following method can be used to test and analyze the cell qualification rate when the resistance value is ≥ 20 MΩ under the voltage condition of 250 V: A cell is placed horizontally on a Hi-pot tester, a high-voltage probe is connected to the insulating surface of an assembly to be tested and a ground wire, a high-voltage source is turned on, and the test results are recorded, such that the resistance value can be obtained from the Hi-pot tester after the test is completed.

Unless otherwise specified, the following method can be used to determine the mass percentage of the current collector particle in the first active material layer and the second active material layer: using an inductively coupled plasma (ICP) method for testing.

The structure and components of the "electrode plate" provided in the first aspect of the present application can be tested and analyzed by a focused ion beam (FIB) technology, a scanning electron microscope (SEM), an elemental analysis technology, and the like. For example, the structure and components can be obtained through the combined use of cryo-FIB serial sectioning, cross-sectional SEM morphology observation, energy-dispersive spectroscopy (EDS, elemental spectroscopy), and analysis by three-dimensional reconstruction analysis software. For example, the cryo-FIB is used to finely section the sample layer by layer along the transverse direction at different thickness positions (the minimum slice thickness down to the nanometer scale), and different layers of samples at different positions along the thickness direction are separated. SEM test can also be used to analyze the morphology, structure, and elemental distribution of the cross section of each layer resulting from FIB serial sectioning, and the three-dimensional structure of the sample can be reconstructed by using the three-dimensional structure reconstruction software, thus enabling estimation of the mass and/or volume of different regions of the sample to be tested. The active material layer sample of the electrode plate can be obtained by disassembling a battery, and the active material layer can be further analyzed by the following method: The three-dimensional structure of the sample is reconstructed by using the nano-spatial dynamic resolution and layer-by-layer cutting technology of the FIB-SEM, the distribution and percentage of each element are obtained by EDS elemental spectroscopy analysis, and finally parameters such as the composition and thickness of each structural layer of the active material layer are obtained by software quantitative analysis. As a non-limiting example, an FEI Scios 2HiVac device can be used for the testing and analysis of the above parameters.

In the present application, unless otherwise specified, the "transverse direction" refers to a direction orthogonal to the thickness direction of the electrode plate. When the thickness of each position of the electrode plate is uniform, the transverse direction is parallel to the surface of the electrode plate.

For the particle components in different active material layers, methods such as an energy dispersive spectrometer (EDS) and an inductively coupled plasma (ICP) method can also be used for testing and analysis. The EDS can be used to identify different types of particles, and the ICP can be used for the quantitative testing and analysis of the component content. Samples of different active material layers can be extracted from different positions of the electrode plate, the solid particles are collected by using methods including, but not limited to, solvent washing, ultrasonic dispersion, etc., and then the elemental composition of the solid particles is analyzed by using an inductively coupled plasma optical emission spectrometer. For example, the negative electrode active material layer can be digested with a reagent (e.g., aqua regia, reverse aqua regia, a combination of aqua regia and hydrogen fluoride, etc.), and the content of impurity elements in the negative electrode active material is tested by the inductively coupled plasma optical emission spectrometer.

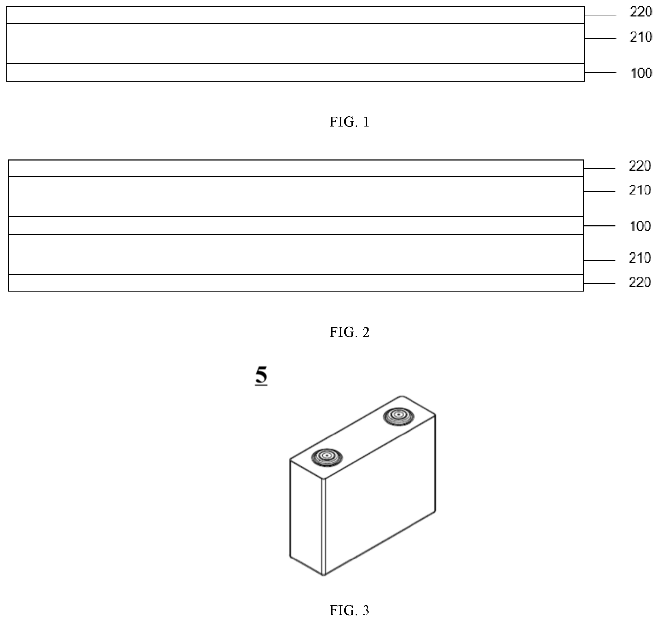

In some embodiments, the electrode plate provided in the first aspect of the present application includes a current collector 100, a first active material layer 210 located on one side of the current collector 100, and a second active material layer 220 located on a side of the first active material layer 210 distal to the current collector, where the first active material layer 210 includes a current collector particle, and the definition of the current collector particle is the same as that described above. Reference may be made to the schematic structural view of the electrode plate shown in FIG. 1.

In some embodiments, the electrode plate provided in the first aspect of the present application includes a current collector 100, a first active material layer 210 located on one side of the current collector 100, and a second active material layer 220 located on a side of the first active material layer 210 distal to the current collector; the first active material layer 210 and the second active material layer 220 each independently include an active substance, the active substance in the first active material layer 210 is denoted as a first active substance, and the active substance in the second active material layer 220 is denoted as a second active substance, where the first active material layer 210 includes the first active substance and a current collector particle, the second active material layer 220 includes the second active substance, and the first active substance and the second active substance may be the same or different; the definition of the current collector particle is the same as that described above. Further, the first active material layer 210 and the second active material layer 220 each further independently include a conductive agent, and the conductive agents in the two active material layers may be the same or different.

In some embodiments, the electrode plate provided in the first aspect of the present application includes a current collector 100, two first active material layers 210 respectively located on both sides of the current collector 100, and two second active material layers 220 respectively located on both sides of the current collector 100; on any one side of the current collector, the second active material layer 220 is located on a side of the first active material layer 210 distal to the current collector. Reference may be made to the schematic structural view of the electrode plate shown in FIG. 2. Further, the two first active material layers 210 may be the same or different, and the two second active material layers 220 may be the same or different.

Based on any suitable embodiment in the present application, in still some embodiments, the electrode plate is a positive electrode plate, and the current collector particle includes one or more metal components of aluminum, aluminum alloys, nickel, nickel alloys, titanium, titanium alloys, silver, and silver alloys;
the first active material layer is denoted as a first positive electrode active material layer, the current collector particle is denoted as a positive electrode current collector particle, and the second active material layer is denoted as a second positive electrode active material layer. In this case, it is equivalent to providing an electrode plate including a current collector and a multi-layered active material layer located on at least one side of the current collector, and the multi-layered active material layer includes a first active material layer and a second active material layer, where the second active material layer is an active material layer farthest away from the current collector, and the first active material layer is located between the second active material layer and the current collector; the first active material layer includes a current collector particle; the electrode plate is a positive electrode plate and the current collector particle includes one or more metal components of aluminum, aluminum alloys, nickel, nickel alloys, titanium, titanium alloys, silver, and silver alloys, or the electrode plate is a negative electrode plate and the current collector particle contains a metal component suitable for a negative electrode current collector.

When the electrode plate is a positive electrode plate, recycled positive electrode active substance stock may be obtained from the recycled positive electrode plate, and the recycled positive electrode active substance stock incorporates the positive electrode current collector impurity. The recycled positive electrode active substance stock may be used in the first positive electrode active material layer located at the lower layer, such that the positive electrode current collector impurity is incorporated into the first positive electrode active material layer, and the positive electrode current collector impurity may correspond to the "positive electrode current collector particle" in the new positive electrode plate. By utilizing the barrier effect of the second positive electrode active material layer at the upper layer, direct contact of the positive electrode current collector impurity with the separator may be avoided, which can reduce the risk of piercing the separator, thereby reducing the risks of short circuits between the two electrodes and self-discharge, improving the Hi-pot test yield, reducing the risk of thermal runaway, and enhancing the high-temperature storage performance and reliability of the battery.

The positive electrode current collector impurity from the positive electrode current collector in the recycled positive electrode plate may be denoted as the positive electrode current collector particle, and the main component thereof is from the positive electrode current collector in the recycled positive electrode plate. Therefore, all metal components currently applicable to the positive electrode current collector in the technical field of secondary batteries may be included in the positive electrode current collector particle. The metal component included in the positive electrode current collector particle may include, but is not limited to, one or more metal components of aluminum, aluminum alloys, nickel, nickel alloys, titanium, titanium alloys, silver, and silver alloys, and the foregoing metal components may all be used as the metal components in the positive electrode current collector.

Based on any suitable embodiment in the present application, in still some embodiments, the electrode plate is a positive electrode plate, and the current collector particle includes one or more metal components of aluminum, aluminum alloys, nickel, nickel alloys, titanium, titanium alloys, silver, and silver alloys;
the first active material layer is denoted as a first positive electrode active material layer, the current collector particle is denoted as a positive electrode current collector particle, and the second active material layer is denoted as a second positive electrode active material layer;
the first positive electrode active material layer includes a first positive electrode active substance, the second positive electrode active material layer includes a second positive electrode active substance, and the first positive electrode active substance and the second positive electrode active substance are the same or different;
further, for the definitions of the first positive electrode active substance and the second positive electrode active substance, reference may be made to any suitable embodiment in the context.

Based on any suitable embodiment in the present application, in still some embodiments, the metal element in the positive electrode current collector particle is denoted as an element M1, and the mass percentage of the element M1 in the positive electrode current collector particle is ≥ 50%, optionally 60%-100%. The mass percentage of the element M1 in the positive electrode current collector particle may also be any one of the following percentages, or selected from an interval composed of any one of the following percentages and 100%, or selected from an interval composed of any two of the following percentages: 50%, 60%, 70%, 80%, 90%, 95%, 96%, 98%, 99%, etc. Without limitation, the mass percentage of the element M1 in the positive electrode current collector particle may be 100%.

In the process of extracting the recycled positive electrode active substance stock from the recycled positive electrode plate, the incorporated positive electrode current collector may undergo some chemical changes to change some components of the original positive electrode current collector into derived components, such that the mass percentage of the components in the original positive electrode current collector in the current collector particle of the new electrode plate may not be 100%, but the mass percentage is usually ≥ 50%. The mass percentage of the derived components may be adjusted through the recycling process, thereby regulating the proportion of the components of the original positive electrode current collector in the positive electrode active material layer of the new electrode plate.

Based on any suitable embodiment in the present application, in still some embodiments, the maximum particle diameter of the positive electrode current collector particle is ≤ 150 µm, optionally 10 µm to 150 µm. The maximum particle diameter of the positive electrode current collector particle may also be any one of the following sizes or selected from an interval composed of any two of the following sizes: 10 µm, 15 µm, 20 µm, 30 µm, 40 µm, 50 µm, 60 µm, 70 µm, 80 µm, 90 µm, 100 µm, 110 µm, 120 µm, 130 µm, 135 µm, 150 µm, etc. The maximum particle diameter of the positive electrode current collector particle may also be less than or equal to any one of the following sizes: 100 µm, 110 µm, 120 µm, 130 µm, 135 µm, 150 µm, etc. The maximum particle diameter of the positive electrode current collector particle may also be selected from any one of the following ranges: 50 µm to 150 µm, 50 µm to 140 µm, 50 µm to 135 µm, 50 µm to 120 µm, 50 µm to 110 µm, 50 µm to 100 µm, 40 µm to 150 µm, 40 µm to 140 µm, 40 µm to 135 µm, 40 µm to 120 µm, 40 µm to 110 µm, 40 µm to 100 µm, 30 µm to 150 µm, 30 µm to 140 µm, 30 µm to 135 µm, 30 µm to 120 µm, 30 µm to 110 µm, 30 µm to 100 µm, 20 µm to 150 µm, 20 µm to 140 µm, 20 µm to 135 µm, 2 µm to 120 µm, 20 µm to 110 µm, 20 µm to 100 µm, 10 µm to 140 µm, 10 µm to 135 µm, 10 µm to 120 µm, 10 µm to 110 µm, 10 µm to 100 µm, etc.

In the electrode plate, the particle size of the first active substance in the first active material layer can be appropriately selected according to the performance requirements of the electrode plate and the type of the first active substance. It can be understood that the particle size of the first active substance in the first active material layer is related to the particle size of the recycled active substance stock and the percentage of the recycled active substance stock in the active substance raw material. Taking the active substance raw material being completely the recycled active substance stock as an example, in this case, the particle size and particle size distribution characteristics of the first active substance are substantially the same as those in the recycled active substance stock, the particle size and particle size distribution characteristics of the current collector particle in the electrode plate are substantially the same as those of the current collector impurity in the recycled active substance stock, and the particle size and particle size distribution characteristics of the mixed particle composed of the first active substance and the current collector particle are also substantially the same as those in the recycled active substance stock. Reference may be made to particle size characteristics such as Dᵥ50 and Dᵥ99 of the recycled positive electrode active substance stock or the recycled negative electrode active substance stock, the maximum particle diameter of the positive electrode current collector impurity, and the maximum particle diameter of the negative electrode current collector impurity.

For the positive electrode plate, the particle size of the first positive electrode active substance in the first positive electrode active material layer can be appropriately selected according to the performance requirements of the positive electrode plate and the type of the first positive electrode active substance. For the negative electrode plate, the particle size of the first negative electrode active substance in the first negative electrode active material layer can be appropriately selected according to the performance requirements of the negative electrode plate and the type of the first negative electrode active substance.

In the present application, unless otherwise specified, a two-dimensional image in which different components are marked with different colors can be obtained by using an EDS test, the active substance and the current collector impurity can be distinguished according to the types of the components, and then the maximum particle diameter of the current collector particle can be obtained by analyzing using the bundled software of the EDS instrument according to the particle boundary of the current collector particle. For both the particle size of the positive electrode current collector impurity and the particle size of the negative electrode current collector impurity, the above method can be used for testing and analysis. Unless otherwise specified, the test and analysis results of the maximum particle diameters of the positive electrode current collector particle and the negative electrode current collector particle are typically based on a statistical analysis of at least 5 particles. During the recycling process, the positive electrode current collector may undergo chemical changes such as oxidation reaction of the surface components of the current collector particle, and the derived component at this time includes the oxide of the component of the original positive electrode current collector. In addition, during the recycling process of the recycled positive electrode active substance stock, the positive electrode current collector impurities with a large particle size are easily removed by sieving, but some of the positive electrode current collector impurities have a particle size close to that of the positive electrode active substance to be recycled, and thus it is difficult to separate these positive electrode current collector impurities from the positive electrode active substance to be recycled by a simple physical method. The particle size of these residual positive electrode current collector impurities can be adjusted through the particle size screening step in the recycling process.

Based on any suitable embodiment in the present application, in still some embodiments, the positive electrode current collector particle includes a body B1, and further includes or does not include a coating layer L1 located on at least a part of the surface of the body B1, the body B1 is composed of the element M1, the coating layer L1 includes a derived form of the element M1, and the derived form of the element M1 includes an oxidized form of the element M1.

In some embodiments, the positive electrode current collector particle includes a body B1, and further includes a coating layer L1 located on at least a part of the surface of the body B1.

During the recycling process, the chemical changes that the positive electrode current collector may undergo are likely to occur on the surface of the positive electrode current collector particle, such that the original positive electrode current collector particle is changed into a coated structure. The coated structure includes a body and a coating layer located on at least a part of the surface of the body, the inside is the body composed of the component of the original positive electrode current collector, and at least a part of the surface of the body is the coating layer composed of the derived component.

Based on any suitable embodiment in the present application, in still some embodiments, the positive electrode current collector particle satisfies one or more of the following features:
the positive electrode current collector particle includes a body B1, and further includes or does not include a coating layer L1 located on at least a part of the surface of the body B1, the body B1 is composed of the element M1, the coating layer L1 includes a derived form of the element M1, and the derived form of the element M1 includes an oxidized form of the element M1;
the mass percentage of the element M1 in the positive electrode current collector particle is ≥ 50%, optionally 60%-100% (the mass percentage of the element M1 in the positive electrode current collector particle may also be selected from any suitable numerical value or range in the context);
the maximum particle diameter of the positive electrode current collector particle is ≤ 150 µm, optionally 10 µm to 150 µm (the maximum particle diameter of the positive electrode current collector particle may also be selected from any suitable numerical value or range in the context).

Based on any suitable embodiment in the present application, in still some embodiments, the positive electrode current collector particle includes an aluminum-based particle, and the aluminum-based particle includes an aluminum-based body, and further includes or does not include an aluminum oxide layer located on the surface of the aluminum-based body.

The positive electrode current collector in the recycled positive electrode plate may be an aluminum-based material. During the recycling process, the surface of the aluminum-based material may be oxidized to form an aluminum oxide layer, such that the positive electrode current collector impurity in the recycled stock includes an aluminum-based particle having a coated structure. The aluminum-based particle is internally a body composed of the aluminum-based component, and at least a part of the surface of the aluminum-based body is covered with the aluminum oxide layer.

Based on any suitable embodiment in the present application, in still some embodiments, the mass percentage of the element aluminum in the positive electrode current collector particle is ≥ 50%; optionally, the mass percentage of the element aluminum in the positive electrode current collector particle is 60%-100%. The mass percentage of the element aluminum in the positive electrode current collector particle may also be selected from any one of the following percentages, or selected from an interval composed of any one of the following percentages and 100%, or selected from an interval composed of any two of the following percentages: 50%, 60%, 70%, 80%, 90%, 95%, 96%, 98%, 99%, etc. Without limitation, the mass percentage of the element aluminum in the positive electrode current collector particle may be 100%.

Based on any suitable embodiment in the present application, in still some embodiments, the mass percentage of the element aluminum in the aluminum-based particle is ≥ 50%; optionally, the mass percentage of the element aluminum in the aluminum-based particle is 60%-100%. The mass percentage of the element aluminum in the aluminum-based particle may also be selected from any one of the following percentages, or selected from an interval composed of any one of the following percentages and 100%, or selected from an interval composed of any two of the following percentages: 50%, 60%, 70%, 80%, 90%, 95%, 96%, 98%, 99%, etc. Without limitation, the mass percentage of the element aluminum in the aluminum-based particle may be 100%.

Based on any suitable embodiment in the present application, in still some embodiments, the aluminum-based body includes an aluminum-based component with a mass percentage of ≥ 70%; optionally, the mass percentage of the aluminum-based component in the aluminum-base body is 90%-100%. The mass percentage of the aluminum-based component in the aluminum-based body may also be selected from any one of the following percentages, or selected from an interval composed of any one of the following percentages and 100%, or selected from an interval composed of any two of the following percentages: 70%, 80%, 90%, 95%, 96%, 98%, 99%, etc. Without limitation, the mass percentage of the aluminum-based component in the aluminum-based body may be 100%.

Based on any suitable embodiment in the present application, in still some embodiments, the aluminum-based component is aluminum or an aluminum alloy.

Based on any suitable embodiment in the present application, in still some embodiments, the positive electrode current collector particle includes an aluminum-based particle, and the aluminum-based particle includes an aluminum-based body, and further includes or does not include an aluminum oxide layer located on the surface of the aluminum-based body;
optionally, the positive electrode current collector particle satisfies one or more of the following features:
the mass percentage of the element aluminum in the positive electrode current collector particle is ≥ 50%; optionally, the mass percentage of the element aluminum in the positive electrode current collector particle is 60%-100% (the mass percentage of the element aluminum in the positive electrode current collector particle may also be selected from any suitable numerical value or range in the context);
the aluminum-based body includes an aluminum-based component with a mass percentage of ≥ 70%; optionally, the mass percentage of the aluminum-based component in the aluminum-based body is 90%-100%, where the aluminum-based component may be aluminum or an aluminum alloy (the mass percentage of the aluminum-based component in the aluminum-based body may also be selected from any suitable numerical value or range in the context).

In some embodiments, the aluminum-based particle includes an aluminum-based body, and further includes an aluminum oxide layer located on the surface of the aluminum-based body.

In the recycled positive electrode active substance stock, the content of the aluminum-based component in the aluminum-based body mainly depends on the composition of the original positive electrode current collector in the recycled positive electrode plate, and the aluminum-based material may be aluminum or an aluminum alloy, but is not limited thereto. The mass percentage of the element aluminum in the positive electrode current collector impurity is mainly related to the composition of the original positive electrode current collector in the recycled positive electrode plate.

Based on any suitable embodiment in the present application, in still some embodiments, the second positive electrode active material layer does not include or includes the positive electrode current collector particle, and the mass percentage of the positive electrode current collector particle in the second positive electrode active material layer is less than the mass percentage of the positive electrode current collector particle in the first positive electrode active material layer.

Based on any suitable embodiment in the present application, in still some embodiments, the second positive electrode active material layer does not include the positive electrode current collector particle.

Based on any suitable embodiment in the present application, in still some embodiments, the second positive electrode active material layer includes the positive electrode current collector particle.

Without limitation, the mass percentage of the positive electrode current collector particle in the second positive electrode active material layer may be less than any one of the following percentages: 0.05%, 0.04%, 0.03%, 0.02%, 0.01%, etc. For example, the mass percentage of the positive electrode current collector particle in the second positive electrode active material layer may be 0.

Without limitation, the mass percentage of the positive electrode current collector particle in the first positive electrode active material layer may be greater than or equal to any one of the following percentages: 0.4%, 0.35%, 0.3%, 0.25%, 0.2%, 0.15%, 0.1%, 0.05%, 0.04%, 0.03%, 0.02%, 0.01%, etc.

Based on any suitable embodiment in the present application, in still some embodiments, the mass percentage of the positive electrode current collector particle in the second positive electrode active material layer is < 0.05%, and the mass percentage of the positive electrode current collector particle in the first positive electrode active material layer is ≥ 0.05%.

Based on any suitable embodiment in the present application, in still some embodiments, the mass percentage of the positive electrode current collector particle in the second positive electrode active material layer is < 0.04%, and the mass percentage of the positive electrode current collector particle in the first positive electrode active material layer is ≥ 0.04%.

Based on any suitable embodiment in the present application, in still some embodiments, the mass percentage of the positive electrode current collector particle in the second positive electrode active material layer is < 0.01%, and the mass percentage of the positive electrode current collector particle in the first positive electrode active material layer is ≥ 0.01%.

The second positive electrode active material layer located at the upper layer may not use the recycled positive electrode active substance stock, such that the positive electrode current collector impurity is not incorporated.

A small amount of the recycled positive electrode active substance stock may also be introduced into the second positive electrode active material layer, as long as the amount of the introduced positive electrode current collector impurity is small enough and thus the risk of causing short circuits between the two electrodes and self-discharge is low enough, the adverse effect on the Hi-pot test yield is small enough, and the battery can still have good high-temperature storage performance and reliability.

The second positive electrode active material layer may or may not include the positive electrode current collector particle. The lower the content of the positive electrode current collector particle in the second positive electrode active material layer, the stronger the barrier effect, the more beneficial it is for improving the high-temperature storage performance and reliability of the battery. It can be understood that when the second positive electrode active material layer includes the positive electrode current collector particle, the mass percentage of the positive electrode current collector particle in the second positive electrode active material layer should be limited to the extent that the second positive electrode active material layer can still play the role of reducing the risk of piercing the separator. The higher the content of the positive electrode current collector particle in the first positive electrode active material layer, the more beneficial it is for reducing the manufacturing cost of the positive electrode plate. It can be understood that the mass percentage of the positive electrode current collector particle in the second positive electrode active material layer should be limited to the extent that the risk of piercing the separator can be reduced by the second positive electrode active material layer. Allowing the mass percentage of the positive electrode current collector particle in the second positive electrode active material layer to be less than the mass percentage of the positive electrode current collector particle in the first positive electrode active material layer can balance the manufacturing cost and performance of the positive electrode plate.

Based on any suitable embodiment in the present application, in still some embodiments, the mass percentage (which may be denoted as R_{P1}) of the positive electrode current collector particle in the first positive electrode active material layer is ≤ 1.0%, optionally 0.05%-0.9%, further optionally 0.05%-0.8%, and still further optionally 0.1%-0.8%. The mass percentage of the positive electrode current collector particle in the first positive electrode active material layer may also be any one of the following percentages, or selected from an interval composed of any two of the following percentages: 0.05%, 0.055%, 0.06%, 0.065%, 0.07%, 0.075%, 0.08%, 0.085%, 0.09%, 0.095%, 0.1%, 0.15%, 0.2%, 0.25%, 0.3%, 0.35%, 0.4%, 0.45%, 0.5%, 0.6%, 0.7%, 0.8%, 0.9%, 1.0%, etc. The mass percentage of the positive electrode current collector particle in the first positive electrode active material layer may also be less than or equal to any one of the following percentages: 0.75%, 0.8%, 0.85%, 0.9%, 0.95%, etc. The mass percentage of the positive electrode current collector particle in the first positive electrode active material layer may also be selected from any suitable range of the following ranges: 0.01%-0.9%, 0.01%-0.8%, 0.04%-1%, 0.04%-0.9%, 0.04%-0.8%, 0.05%-1%, 0.05%-0.9%, 0.05%-0.8%, 0.05%-0.6%, 0.05%-0.5%, 0.06%-0.5%, 0.06%-0.6%, 0.06%-0.8%, 0.06%-0.9%, 0.06%-1.0%, 0.1%-1%, 0.1%-0.9%, 0.1%-0.8%, 0.15%-1%, 0.15%-0.9%, 0.15%-0.8%, 0.18%-1%, 0.18%-0.9%, 0.18%-0.8%, 0.2%-1%, 0.2%-0.9%, 0.2%-0.8%, 0.4%-1%, 0.4%-0.9%, 0.4%-0.8%, greater than 0.2% and less than or equal to 1%, greater than 0.2% and less than or equal to 0.9%, greater than 0.2% and less than or equal to 0.8%, greater than 0.15% and less than or equal to 1%, greater than 0.15% and less than or equal to 0.9%, greater than 0.15% and less than or equal to 0.8%, greater than 0.18% and less than or equal to 1%, greater than 0.18% and less than or equal to 0.18%, greater than 0.2% and less than or equal to 0.8%, etc.

In the present application, the different features of the mass percentage of the positive electrode current collector particle in the first positive electrode active material layer may be combined in any suitable manner. For example, features of ≥ 0.4%, ≥ 0.35%, ≥ 0.3%, ≥ 0.25%, ≥ 0.2%, ≥ 0.15%, ≥ 0.1%, ≥ 0.05%, ≥ 0.04%, ≥ 0.03%, ≥ 0.02%, ≥ 0.01%, etc., may be combined with features of ≤ 1%, ≤ 0.95%, ≤ 0.9%, ≤ 0.85%, ≤ 0.8%, ≤ 0.75%, etc., in any suitable manner.

In the present application, the percentage can be converted to ppm (parts per million), and 1% = 10,000 ppm. For example, 0.05% = 500 ppm, 0.1% = 1000 ppm, 0.15% = 1500 ppm, 0.5% = 5000 ppm, etc.

Based on any suitable embodiment in the present application, in still some embodiments, in the first positive electrode active material layer, the percentage (which may be denoted as R_{P2}) of the mass of the positive electrode current collector particle relative to the sum of the mass of the positive electrode current collector particle and the mass of the first positive electrode active substance is ≤ 1.0%, optionally ≤ 0.9%, and further optionally ≤ 0.8%. In the first positive electrode active material layer, the percentage (R_{P2}) of the mass of the positive electrode current collector particle relative to the sum of the mass of the positive electrode current collector particle and the mass of the first positive electrode active substance may also be selected from any one of the following percentages or selected from an interval composed of any two of the following percentages: 0.05%, 0.055%, 0.06%, 0.065%, 0.07%, 0.075%, 0.08%, 0.085%, 0.09%, 0.095%, 0.1%, 0.15%, 0.2%, 0.25%, 0.3%, 0.35%, 0.4%, 0.45%, 0.5%, 0.6%, 0.7%, 0.8%, 0.85%, 0.9%, 0.95%, 1.0%, etc. In the first positive electrode active material layer, R_{P2} may also be less than or equal to any one of the following percentages: 0.7%, 0.8%, 0.85%, 0.9%, 0.95%, 1.0%, etc. With reference to the content of the positive electrode current collector impurity in the recycled positive electrode active substance stock, R_{P2} may also be selected from any suitable range of the following ranges: 0.01%-1.0%, 0.01%-0.9%, 0.01%-0.8%, 0.05%-1%, 0.05%-0.9%, 0.05%-0.8%, 0.05%-0.6%, 0.05%-0.5%, 0.06%-0.5%, 0.06%-0.6%, 0.06%-0.8%, 0.06%-0.9%, 0.06%-1.0%, 0.1%-1%, 0.1%-0.9%, 0.1%-0.8%, 0.15%-1%, 0.15%-0.9%, 0.15%-0.8%, 0.18%-1%, 0.18%-0.9%, 0.18%-0.8%, 0.2%-1%, 0.2%-0.9%, 0.2%-0.8%, greater than 0.2% and less than or equal to 1%, greater than 0.2% and less than or equal to 0.9%, greater than 0.2% and less than or equal to 0.8%, greater than 0.15% and less than or equal to 1%, greater than 0.15% and less than or equal to 0.9%, greater than 0.15% and less than or equal to 0.8%, greater than 0.18% and less than or equal to 1%, greater than 0.18% and less than or equal to 0.18%, greater than 0.2% and less than or equal to 0.8%, etc.

The mass percentage of the positive electrode current collector particle in the first positive electrode active material layer (which may be denoted as R_{P1}) and the percentage of the mass of the positive electrode current collector particle in the first positive electrode active material layer relative to the sum of the mass of the positive electrode current collector particle and the mass of the first positive electrode active substance (which may be denoted as R_{P2}) are mainly related to the following factors: the residual amount of the positive electrode current collector impurity in the recycled positive electrode active substance stock, and the content of the recycled positive electrode active substance stock in the first positive electrode active material layer. The smaller the R_{P1} and R_{P2}, the lower the risk of piercing the separator caused by the positive electrode current collector impurity in the battery including the corresponding positive electrode plate.

Based on any suitable embodiment in the present application, in still some embodiments, in the positive electrode plate, the multi-layered active material layer is a double-layered positive electrode active material layer. In this case, the multi-layered active material layer is of a double-layer structure having two positive electrode active material layers, that is, a first positive electrode active material layer and a second positive electrode active material layer.

In the positive electrode plate, the foregoing multi-layered active material layer may be of a double-layer structure having two positive electrode active material layers, that is, a corresponding second positive electrode active material layer distal to the positive electrode current collector and a corresponding first positive electrode active material layer between the positive electrode current collector and the second positive electrode active material layer.

Based on any suitable embodiment in the present application, in still some embodiments, the thickness of the first positive electrode active material layer is greater than the thickness of the second positive electrode active material layer. In some of the embodiments, the ratio of the thickness of the second positive electrode active material layer relative to the thickness of the first positive electrode active material layer is 0.05-0.4; optionally, the ratio of the thickness of the second positive electrode active material layer relative to the thickness of the first positive electrode active material layer is 0.1-0.35. The ratio of the thickness of the second positive electrode active material layer relative to the thickness of the first positive electrode active material layer may also be selected from any one of the following numerical values or selected from an interval composed of any two of the following numerical values: 0.05, 0.06, 0.08, 0.10, 0.125, 0.15, 0.16, 0.18, 0.20, 0.24, 0.25, 0.30, 0.32, 0.33, 0.35, 0.36, 0.40, etc.

Based on any suitable embodiment in the present application, in still some embodiments, the thickness of the first positive electrode active material layer is 40 µm to 125 µm; optionally, the thickness of the first positive electrode active material layer is 45 µm to 120 µm; further optionally, the thickness of the first positive electrode active material layer is 50 µm to 110 µm. The thickness of the first positive electrode active material layer may also be selected from any one of the following thicknesses or selected from an interval composed of any two of the following thicknesses: 40 µm, 45 µm, 50 µm, 55 µm, 60 µm, 65 µm, 70 µm, 75 µm, 80 µm, 90 µm, 100 µm, 110 µm, 120 µm, 125 µm, etc.

Based on any suitable embodiment in the present application, in still some embodiments, the thickness of the second positive electrode active material layer is 3 µm to 45 µm; optionally, the thickness of the second positive electrode active material layer is 5 µm to 40 µm; further optionally, the thickness of the second positive electrode active material layer is 10 µm to 35 µm. The thickness of the second positive electrode active material layer may also be selected from any one of the following thicknesses or selected from an interval composed of any two of the following thicknesses: 3 µm, 4 µm, 5 µm, 6 µm, 8 µm, 9 µm, 10 µm, 12 µm, 15 µm, 16 µm, 18 µm, 20 µm, 22 µm, 24 µm, 25 µm, 26 µm, 28 µm, 30 µm, 32 µm, 35 µm, 36 µm, 40 µm, 42 µm, 44 µm, 45 µm, etc.

Based on any suitable embodiment in the present application, in still some embodiments, the positive electrode plate satisfies one or more of the following features:
the thickness of the first positive electrode active material layer is greater than the thickness of the second positive electrode active material layer; optionally, the ratio of the thickness of the second positive electrode active material layer relative to the thickness of the first positive electrode active material layer is 0.05-0.4, further optionally 0.1-0.35;
the thickness of the first positive electrode active material layer is 40 µm to 125 µm, optionally 45 µm to 120 µm, and further optionally 50 µm to 110 µm;
the thickness of the second positive electrode active material layer is 3 µm to 45 µm, optionally 5 µm to 40 µm, and further optionally 10 µm to 35 µm.

The thickness of the first positive electrode active material layer (located at the lower layer) and the thickness of the second positive electrode active material layer (located at the upper layer) in the multi-layer structured positive electrode active material layer can be adjusted to adjust the amount of the recycled positive electrode active substance stock in the new positive electrode plate. By allowing the thickness of the first positive electrode active material layer to be greater than the thickness of the second positive electrode active material layer, more recycled stock can be introduced, which is more beneficial for cost control. By adjusting the first positive electrode active material layer to a more appropriate thickness, the recycled positive electrode active substance stock can be more reasonably utilized. By adjusting the thickness of the second positive electrode active material layer, the magnitude of the barrier effect of the second positive electrode active material layer between the first positive electrode active material layer and the separator can be adjusted. Further, by adjusting the second positive electrode active material layer to a more appropriate thickness, the positive electrode current collector particle in the first positive electrode active material layer can be better blocked while controlling the cost, which is more beneficial for reducing the risk of piercing the separator, improving the Hi-pot test yield, and enhancing the high-temperature storage performance and reliability of the battery.

Based on any suitable embodiment in the present application, in still some embodiments, the positive electrode plate satisfies one or more of the following features:
the thickness of the first positive electrode active material layer is greater than the thickness of the second positive electrode active material layer; optionally, the ratio of the thickness of the second positive electrode active material layer relative to the thickness of the first positive electrode active material layer is 0.05-0.4, further optionally 0.1-0.35 (the ratio of the thickness of the second positive electrode active material layer relative to the thickness of the first positive electrode active material layer may also be selected from any suitable numerical value or range in the context);
the thickness of the first positive electrode active material layer is 40 µm to 125 µm, optionally 45 µm to 120 µm, and further optionally 50 µm to 110 µm (the thickness of the first positive electrode active material layer may also be selected from any suitable numerical value or range in the context);
the thickness of the second positive electrode active material layer is 3 µm to 45 µm, optionally 5 µm to 40 µm, and further optionally 10 µm to 35 µm (the thickness of the second positive electrode active material layer may also be selected from any suitable numerical value or range in the context);
the mass percentage of the positive electrode current collector particle in the first positive electrode active material layer is ≤ 1.0%, optionally 0.05%-1.0%, further optionally 0.05%-0.9%, still further optionally 0.05%-0.8%, and even further optionally 0.1%-0.8% (the mass percentage of the positive electrode current collector particle in the first positive electrode active material layer may also be selected from any suitable numerical value or range in the context);
in the first positive electrode active material layer, the percentage of the mass of the positive electrode current collector particle relative to the sum of the mass of the positive electrode current collector particle and the mass of the first positive electrode active substance is ≤ 1.0%, optionally ≤ 0.9%, and further optionally ≤ 0.8% (the percentage of the mass of the positive electrode current collector particle relative to the sum of the mass of the positive electrode current collector particle and the mass of the first positive electrode active substance may also be selected from any suitable numerical value or range in the context).

By controlling one or more parameters of the thickness of the first positive electrode active material layer, the thickness of the second positive electrode active material layer, the mass percentage (R_{P1}) of the positive electrode current collector particle in the first positive electrode active material layer, and the percentage (R_{P2}) of the mass of the positive electrode current collector particle in the first positive electrode active material layer relative to the sum of the mass of the positive electrode current collector particle and the mass of the first positive electrode active substance to be within the above suitable ranges, the adverse effects caused by the positive electrode current collector impurity can be better reduced while introducing the recycled positive electrode active substance stock, which is beneficial for achieving better high-temperature storage performance and reliability of the battery while reducing the cost.

Based on any suitable embodiment in the present application, in some embodiments, the electrode plate is a positive electrode plate, the current collector particle is denoted as a positive electrode current collector particle, the metal element in the positive electrode current collector particle is denoted as an element M1, the first active material layer is denoted as a first positive electrode active material layer, and the second active material layer is denoted as a second positive electrode active material layer;
the positive electrode current collector particle includes a body B1, and further includes a coating layer L1 located on at least a part of the surface of the body B1, the body B1 is composed of the element M1, the coating layer L1 includes a derived form of the element M1, and the derived form of the element M1 includes an oxidized form of the element M1;
optionally, the mass percentage of the positive electrode current collector particle in the first positive electrode active material layer is ≤ 1.0%;
optionally, the mass percentage of the positive electrode current collector particle in the second positive electrode active material layer is < 0.05%.

Based on any suitable embodiment in the present application, in still some embodiments, the first positive electrode active material layer includes a first positive electrode active substance, the second positive electrode active material layer includes a second positive electrode active substance, and the first positive electrode active substance and the second positive electrode active substance are the same or different.

Based on any suitable embodiment in the present application, in still some embodiments, any one of the first positive electrode active substance and the second positive electrode active substance may independently include a lithium ion active material, and further, any one of the first positive electrode active substance and the second positive electrode active substance may independently be a lithium ion active material.

Based on any suitable embodiment in the present application, in still some embodiments, the first positive electrode active substance and the second positive electrode active substance may be the same or different. The first positive electrode active substance and the second positive electrode active substance may each independently be a positive electrode active substance for batteries known in the art. As a non-limiting example, the positive electrode active substance may include one or more of the following materials or substances: a lithium transition metal oxide with an olivine structure and respective modified compounds thereof. However, the present application is not limited to these materials or substances, and other conventional materials or substances that can be used as positive electrode active substances for batteries may also be used. These positive electrode active substances may be used alone or in combination of two or more. Non-limiting examples of the lithium transition metal oxide may include, but are not limited to, one or more of lithium cobalt oxides, lithium nickel oxides, lithium manganese oxides, lithium nickel cobalt oxides, lithium manganese cobalt oxides, lithium nickel manganese oxides, lithium nickel cobalt manganese oxides, lithium nickel cobalt aluminum oxides, and modified compounds thereof. Non-limiting examples of the lithium cobalt oxides may include LiCoO₂; non-limiting examples of the lithium nickel oxides may include LiNiO₂; non-limiting examples of the lithium manganese oxides include LiMnO₂, LiMn₂O₄, and the like; non-limiting examples of the lithium nickel cobalt manganese oxides may include LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁), and the like. Non-limiting examples of the lithium nickel cobalt aluminum oxides may include LiNi_{0.8}Co_{0.15}Al_{0.05}O₂.

Based on any suitable embodiment in the present application, in still some embodiments, any one of the first positive electrode active substance and the second positive electrode active substance may independently include one or more of a ternary material and a modified ternary material. The modified ternary material is a ternary material including a modifying element, and the modifying element is present in the form of a doping element, in the form of a coating element, or in the form of a combination of a doping element and a coating element.

In the present application, unless otherwise specified, the "ternary material" and "ternary positive electrode material" have the same meaning and can be used interchangeably; unless otherwise specified, the "modified ternary material" and "modified ternary positive electrode material" have line meanings and can be used interchangeably. Unless otherwise specified, the "doping element" involved in the positive electrode active substance refers to a modifying element doped into the positive electrode active substance; unless otherwise specified, the "coating element" involved in the positive electrode active substance refers to that the positive electrode active substance includes a positive electrode active particle body and a coating layer located on at least a part of the surface of the positive electrode active particle body, where the coating element is a modifying element located in the coating layer. As a non-limiting example, in the positive electrode active substance, "the modifying element is present in the form of a combination of a doping element and a coating element" means that the positive electrode active substance includes a positive electrode active particle body and a coating layer located on at least a part of the surface of the positive electrode active particle body, at least a part of the modifying element is doped into the positive electrode active substance body, and at least a part of the modifying element is further contained in the coating layer. The positive electrode active particle body may be a ternary positive electrode material, and may be a modified ternary positive electrode material, but is not limited thereto.

In the technical field of secondary batteries, the "NCM ternary material" usually refers to a lithium nickel cobalt manganate material, and the "NCA ternary material" usually refers to a lithium nickel cobalt aluminate ternary material. The NCM ternary material, the NCA ternary material, the modified NCM ternary material, and the modified NCA material are usually used as a positive electrode active substance.

Based on any suitable embodiment in the present application, in still some embodiments, any one of the first positive electrode active substance and the second positive electrode active substance may independently include one or more of an NCM ternary material, an NCA ternary material, a modified NCM ternary material, and a modified NCA ternary material, where the modified NCM ternary material is an NCM ternary material containing a modifying element, and the modified NCA ternary material is an NCA ternary material containing a modifying element. Without limitation, the modifying element in the modified ternary material may include one or more of Na, K, Ca, Ba, Sb, Ti, Zr, W, Sr, Nb, Mo, Si, Mg, B, Cr, and Ta.

Based on any suitable embodiment in the present application, in still some embodiments, any one of the first positive electrode active substance and the second positive electrode active substance may independently include the following positive electrode active substance (with a mass percentage of 80%-100%, further 90%-100%, and still further 100%): a substance with a chemical formula of Liₓ(NiₐCo_{b}M_{c}M'_{d})O₂₋ₑ (which is a nickel-containing lithium oxide), where 0.9 ≤ x ≤ 1.1, 0 < a < 1, 0 < b < 1, 0 < c < 1, 0 < d < 1, a + b + c + d = 1, -0.1 ≤ e ≤ 0.1, M may include at least one of Mn and Al, and M' may include one or more of Na, K, Ca, Ba, Sb, Ti, Zr, W, Sr, Nb, Mo, Si, Mg, B, Cr, and Ta; further optionally, a ≥ 0.8; still further optionally, 0.8 ≤ a < 1; even further optionally, 0.9 ≤ a < 1. a may also be any one of the following numerical values, or greater than or equal to any one of the following numerical values and less than 1, or selected from an interval composed of any two of the following numerical values: 0.8, 0.83, 0.85, 0.86, 0.88, 0.90, 0.91, 0.92, 0.93, 0.94, 0.95, etc. Without limitation, x may also be any one of the following numerical values, or greater than or equal to any one of the following numerical values and less than 1, or selected from an interval composed of any two of the following numerical values: 0.90, 0.91, 0.92, 0.93, 0.94, 0.95, 0.96, 0.98, 1, 1.02, 1.04, 1.05, 1.02, 1.1, etc.

For a secondary battery in which the active ions include lithium ions, the above constraints on x encompass the atomic molar content of Li across various charging and discharging states of the battery (the battery voltage typically ranges between 2-5 V). It can be understood that as the charging and discharging process of the battery is accompanied by lithium (Li) deintercalation and consumption, the content of Li in the positive electrode plate varies when the battery is discharged to different states.

In the enumeration related to the positive electrode active substance in the present application, unless otherwise specified, the content of Li refers to that of the material in its initial state. When the positive electrode active substance is applied to the positive electrode plate in a battery system, the content of Li in the positive electrode active substance contained in the positive electrode plate usually changes after charging and discharging cycles. The content of Li can be quantified by the atomic molar content, but is not limited thereto. With respect to "the content of Li refers to that of the material in its initial state", the initial state of the material refers to a state before the material is added to form the positive electrode slurry. It can be understood that new materials or new substances obtained by appropriate modification on the basis of the listed positive electrode active substances are also within the scope of the positive electrode active substances. The foregoing appropriate modification refers to a modification method acceptable to the positive electrode active substances, and non-limiting examples include coating modification.

In the enumeration related to the positive electrode active substance in the present application, the content of oxygen (O) is only a theoretical state value; the atomic molar content of oxygen will vary due to oxygen release from the crystal lattice, and the actual content of O will fluctuate. The content of O can be quantified by the atomic molar content, but is not limited thereto.

Based on any suitable embodiment in the present application, in still some embodiments, any one of the first positive electrode active substance and the second positive electrode active substance may independently include the following positive electrode active substance (with a mass percentage of 80%-100%, further 90%-100%, and still further 100%): a nickel-containing lithium oxide, where the atomic stoichiometry of the element nickel is denoted as n based on the total stoichiometry of non-lithium and non-oxygen elements being 1. In some embodiments, n ≥ 0.8; optionally, 0.8 ≤ n < 1; further optionally, 0.9 ≤ n < 1. n may also be any one of the following numerical values, or greater than or equal to any one of the following numerical values and less than 1, or selected from an interval composed of any two of the following numerical values: 0.8, 0.83, 0.833, 0.85, 0.86, 0.88, 0.90, 0.91, 0.92, 0.93, 0.94, 0.95, etc. n may also be expressed in percentage. For example, it may be 80%, 90%, 95%, etc.

Based on any suitable embodiment in the present application, in still some embodiments, the first positive electrode active substance includes one or more of a lithium-containing phosphate, a lithium transition metal oxide, and a modified form of any one of the foregoing substances, where the modified form includes one or more of doping modification and coating modification. Both the doping modification method and the coating modification method can adopt or refer to the existing modification methods in the art, including but not limited to the selection of element types and doping amounts.

Based on any suitable embodiment in the present application, in still some embodiments, the first positive electrode active substance includes one or more of lithium iron phosphate, lithium manganese iron phosphate, lithium vanadium phosphate, lithium cobalt phosphate, lithium nickel phosphate, lithium manganate, lithium nickel cobalt manganate, lithium nickel cobalt manganese aluminate, lithium nickel cobalt aluminate, lithium cobaltate, and a modified form of any one of the foregoing substances, where the modified form includes one or more of doping modification and coating modification.

The positive electrode active substance in the recycled positive electrode active substance stock may have any known structure and/or component, may or may not contain a doping element, and may or may not have a coating layer. A recycled positive electrode plate having an appropriate type of positive electrode active substance can be selected as needed.

Based on any suitable embodiment in the present application, in still some embodiments, the first positive electrode active substance includes an element lithium and a modifying element X1, and the modifying element X1 includes at least one of an element nickel and an element cobalt; in the first positive electrode active substance, the atomic molar ratio of the modifying element X1 relative to the element lithium is 0.9-1.1. In the first positive electrode active substance, the atomic molar ratio of the modifying element X1 relative to the element lithium may also be any one of the following numerical values or selected from an interval composed of any two of the following numerical values: 0.90, 0.91, 0.92, 0.93, 0.94, 0.95, 1, 1.05, 1.1, etc.

Based on any suitable embodiment in the present application, in still some embodiments, in the first positive electrode active substance, the ratio of the sum of the atomic molar amount of the element cobalt and the element nickel relative to the atomic molar amount of the element lithium is 0.9-1.1. In the first positive electrode active substance, the ratio of the sum of the atomic molar amount of the element cobalt and the element nickel relative to the atomic molar amount of the element lithium may also be any one of the following numerical values or selected from an interval composed of any two of the following numerical values: 0.90, 0.91, 0.92, 0.93, 0.94, 0.95, 0.96, 1, 1.02, 1.04, 1.05, 1.08, 1.1, etc.

When the positive electrode active substance in the recycled positive electrode plate includes at least one element of the element nickel and the element cobalt, the applicability of the obtained recycled positive electrode active substance stock is high, where non-limiting examples of the positive electrode active substance include lithium cobalt phosphate, lithium cobaltate, lithium nickel cobalt manganate, lithium nickel cobalt manganese aluminate, lithium nickel cobalt aluminate, etc. The element cobalt in the positive electrode active substance is beneficial for improving the charge-discharge rate capability of the battery. The element nickel in the positive electrode active substance is beneficial for improving the energy density.

Based on any suitable embodiment in the present application, in still some embodiments, the first positive electrode active substance includes one or more of lithium iron phosphate and lithium nickel cobalt manganese oxides. In some embodiments, the first positive electrode active substance includes lithium iron phosphate. In some other embodiments, the first positive electrode active substance includes lithium nickel cobalt manganese oxide.

Based on any suitable embodiment in the present application, in still some embodiments, the second positive electrode active substance includes one or more of lithium iron phosphate, lithium manganese iron phosphate, lithium vanadium phosphate, lithium cobalt phosphate, lithium nickel phosphate, lithium manganate, lithium nickel cobalt manganate, lithium nickel cobalt manganese aluminate, lithium nickel cobalt aluminate, lithium cobaltate, and a modified form of any one of the foregoing substances, where the modified form includes one or more of doping modification and coating modification.

Based on any suitable embodiment in the present application, in still some embodiments, the second positive electrode active substance includes one or more of a lithium-containing phosphate, a lithium transition metal oxide, and a modified form of any one of the foregoing substances, where the modified form includes one or more of doping modification and coating modification.

The type of the second positive electrode active substance in the second negative electrode active material layer may be appropriately selected as needed. A suitable structure and/or component may be selected from known types of positive electrode active substances.

Based on any suitable embodiment in the present application, in still some embodiments, the positive electrode plate satisfies one or more of the following features:
the first positive electrode active substance includes one or more of a lithium-containing phosphate, a lithium transition metal oxide, and a modified form of any one of the foregoing substances, where the modified form includes one or more of doping modification and coating modification; optionally, the first positive electrode active substance includes one or more of lithium iron phosphate, lithium manganese iron phosphate, lithium vanadium phosphate, lithium cobalt phosphate, lithium nickel phosphate, lithium manganate, lithium nickel cobalt manganate, lithium nickel cobalt manganese aluminate, lithium nickel cobalt aluminate, lithium cobaltate, and a modified form of any one of the foregoing substances, where the modified form includes one or more of doping modification and coating modification;
the first positive electrode active substance includes an element lithium and a modifying element X1, and the modifying element X1 includes at least one of an element nickel and an element cobalt; in the first positive electrode active substance, the atomic molar ratio of the modifying element X1 relative to the element lithium is 0.9-1.1; optionally, in the first positive electrode active substance, the ratio of the sum of the atomic molar amount of the element cobalt and the element nickel relative to the atomic molar amount of the element lithium is 0.95-1.05. In the first positive electrode active substance, the atomic molar ratio of the modifying element X1 relative to the element lithium may also be any one of the following numerical values or selected from an interval composed of any two of the following numerical values: 0.90, 0.91, 0.92, 0.93, 0.94, 0.95, 0.96, 1, 1.02, 1.04, 1.05, 1.08, 1.1, etc.

The second positive electrode active substance includes one or more of a lithium-containing phosphate, a lithium transition metal oxide, and a modified form of any one of the foregoing substances, where the modified form includes one or more of doping modification and coating modification; optionally, the second positive electrode active substance includes one or more of lithium iron phosphate, lithium manganese iron phosphate, lithium vanadium phosphate, lithium cobalt phosphate, lithium nickel phosphate, lithium manganate, lithium nickel cobalt manganate, lithium nickel cobalt manganese aluminate, lithium nickel cobalt aluminate, lithium cobaltate, and a modified form of any one of the foregoing substances, where the modified form includes one or more of doping modification and coating modification.

Based on any suitable embodiment in the present application, the foregoing positive electrode plate provided in the first aspect of the present application includes a positive electrode current collector and a positive electrode active material layer disposed on at least one side of the positive electrode current collector, and the positive electrode active material layer on the at least one side includes a first positive electrode active material layer and a second positive electrode active material layer located on a side of the first active material layer distal to the positive electrode current collector. That is, the positive electrode active material layer is of a multi-layer structure and includes at least a first positive electrode active material layer and a second positive electrode active material layer.

Any one of the active material layers in the positive electrode active material layer independently contains a positive electrode active substance, and may independently contain a positive electrode active substance for batteries known in the art, and reference may be made to the foregoing definition. In any one of the active material layers in the positive electrode active material layer (which may be the first positive electrode active material layer or the second positive electrode active material layer), the mass percentage of the positive electrode active substance may independently satisfy the condition of ≥ 80%, and may further independently satisfy the condition of ≥ 90%.

Based on any suitable embodiment in the present application, the foregoing positive electrode plate provided in the first aspect of the present application includes a positive electrode current collector and a first active material layer disposed on at least one side of the positive electrode current collector, and a second additional active material layer is further disposed on a side, distal to the positive electrode current collector, of the first positive electrode active material layer on any one side.

As a non-limiting example, the positive electrode current collector is provided with two surfaces facing away from each other in the thickness direction thereof, and the first active material layer is disposed on either or both of the two surfaces facing away from each other of the positive electrode current collector. For any one side of the positive electrode current collector, when the first active material layer is provided, a second active material layer is further disposed on a side of the first active material layer distal to the positive electrode current collector, so as to avoid or reduce the risk of the positive electrode current collector particle in the first active material layer piercing the separator.

Based on any suitable embodiment in the present application, in still some embodiments, the positive electrode current collector in the foregoing positive electrode plate provided in the first aspect of the present application may be a metal foil or a composite current collector. For example, as the metal foil, an aluminum foil may be used. The composite current collector may include a polymer material base layer and a metal layer formed on at least one surface of the polymer material base layer. The composite current collector can be obtained by forming a metal material on a polymer material substrate. In the positive electrode current collector, non-limiting examples of the metal material may include one or more of aluminum, aluminum alloys, nickel, nickel alloys, titanium, titanium alloys, silver, silver alloys, and the like. In the positive electrode current collector, non-limiting examples of the polymer material substrate may include one or more of substrates such as polypropylene (PP), polyethylene terephthalate (PET), polybutylene terephthalate (PBT), polystyrene (PS), and polyethylene (PE).

Based on any suitable embodiment in the present application, in still some embodiments, any one of the active material layers in the positive electrode active material layer (which may be the first positive electrode active material layer or the second positive electrode active material layer) may independently include a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin. In any one of the active material layers in the positive electrode active material layer (which may be the first positive electrode active material layer or the second positive electrode active material layer), the mass percentage of the binder may be independently 0-10%, further 0-8%, still further 1%-5%, and even further optionally 1%-3%.

Based on any suitable embodiment in the present application, in still some embodiments, any one of the active material layers in the positive electrode active material layer (which may be the first positive electrode active material layer or the second positive electrode active material layer) may independently include a conductive agent. As a non-limiting example, the conductive agent may include one or more of superconducting carbon, acetylene black, carbon black, Ketjen black, a carbon dot, a carbon nanotube, graphene, and a carbon nanofiber. In any one of the active material layers in the positive electrode active material layer (which may be the first positive electrode active material layer or the second positive electrode active material layer), the mass percentage of the conductive agent may be independently 0-8%, further 0-5%, still further 0.3%-3%, and even further optionally 0.5%-2%.

For the preparation method for the foregoing positive electrode plate provided in the first aspect of the present application, reference may be made to the fourth aspect of the present application.

Based on any suitable embodiment in the present application, in still some embodiments, the electrode plate is a negative electrode plate, and the current collector particle includes one or more metal components of copper, copper alloys, nickel, nickel alloys, titanium, titanium alloys, silver, and silver alloys;
the first active material layer is denoted as a first negative electrode active material layer, the current collector particle is denoted as a negative electrode current collector particle, and the second active material layer is denoted as a second negative electrode active material layer. In this case, it is equivalent to providing an electrode plate including a current collector and a multi-layered active material layer located on at least one side of the current collector, and the multi-layered active material layer includes a first active material layer and a second active material layer, where the second active material layer is an active material layer farthest away from the current collector, and the first active material layer is located between the second active material layer and the current collector; the first active material layer includes a current collector particle; the electrode plate is a positive electrode plate and the current collector particle contains a metal component suitable for the positive electrode current collector, or the electrode plate is a negative electrode plate and the current collector particle includes one or more metal components of copper, copper alloys, nickel, nickel alloys, titanium, titanium alloys, silver, and silver alloys.

When the electrode plate is a negative electrode plate, recycled negative electrode active substance stock may be obtained from the recycled negative electrode plate, and the recycled negative electrode active substance stock incorporates the negative electrode current collector impurity. The recycled negative electrode active substance stock may be used in the first negative electrode active material layer located at the lower layer, such that the negative electrode current collector impurity is incorporated into the first negative electrode active material layer, and the negative electrode current collector impurity may correspond to the "negative electrode current collector particle" in the new negative electrode plate. By utilizing the barrier effect of the second negative electrode active material layer at the upper layer, direct contact of the negative electrode current collector impurity with the separator may be avoided, which can reduce the risk of piercing the separator, thereby reducing the risks of short circuits between the two electrodes and self-discharge, improving the Hi-pot test yield, reducing the risk of thermal runaway, and enhancing the high-temperature storage performance and reliability of the battery.

The negative electrode current collector impurity from the negative electrode current collector in the recycled negative electrode plate may be denoted as the negative electrode current collector particle, and the main component thereof is from the negative electrode current collector in the recycled negative electrode plate. Therefore, all metal components currently applicable to the negative electrode current collector in the technical field of secondary batteries may be included in the negative electrode current collector particle. The metal component suitable for the negative electrode current collector included in the negative electrode current collector particle may include, but is not limited to, one or more metal components of copper, copper alloys, nickel, nickel alloys, titanium, titanium alloys, silver, and silver alloys, and the foregoing metal components may all be used as the metal components in the electrode current collector.

Based on any suitable embodiment in the present application, in still some embodiments, the electrode plate is a negative electrode plate, and the current collector particle includes one or more metal components of copper, copper alloys, nickel, nickel alloys, titanium, titanium alloys, silver, and silver alloys;
the first active material layer is denoted as a first negative electrode active material layer, the current collector particle is denoted as a negative electrode current collector particle, and the second active material layer is denoted as a second negative electrode active material layer;
the first negative electrode active material layer includes a first negative electrode active substance, the second negative electrode active material layer includes a second negative electrode active substance, and the first negative electrode active substance and the second negative electrode active substance are the same or different;
further, for the definitions of the first negative electrode active substance and the second negative electrode active substance, reference may be made to any suitable embodiment in the context.

In some embodiments, an electrode plate is provided. The electrode plate includes a current collector and a multi-layered active material layer located on at least one side of the current collector, and the multi-layered active material layer includes a first active material layer and a second active material layer, where the second active material layer is an active material layer farthest away from the current collector, and the first active material layer is located between the second active material layer and the current collector; the first active material layer includes a current collector particle; the electrode plate is a positive electrode plate and the current collector particle includes one or more metal components of aluminum, aluminum alloys, nickel, nickel alloys, titanium, titanium alloys, silver, and silver alloys; or the electrode plate is a negative electrode plate and the current collector particle includes one or more metal components of copper, copper alloys, nickel, nickel alloys, titanium, titanium alloys, silver, and silver alloys.

In some embodiments, the positive electrode current collector particle includes at least one of elemental aluminum and aluminum alloys.

In some embodiments, the positive electrode current collector particle includes at least elemental aluminum.

In some embodiments, the negative electrode current collector particle includes at least one of elemental copper and copper alloys.

In some embodiments, the negative electrode current collector particle includes at least elemental copper.

Based on any suitable embodiment in the present application, in still some embodiments, the metal element in the negative electrode current collector particle is denoted as an element M2, and the mass percentage of the element M2 in the negative electrode current collector particle is ≥ 50%, optionally 60%-100%. The mass percentage of the element M2 in the negative electrode current collector particle may also be any one of the following percentages, or selected from an interval composed of any one of the following percentages and 100%, or selected from an interval composed of any two of the following percentages: 50%, 60%, 70%, 80%, 90%, 95%, 96%, 98%, 99%, etc. Without limitation, the mass percentage of the element M2 in the negative electrode current collector particle may be 100%.

In the process of extracting the recycled negative electrode active substance stock from the recycled negative electrode plate, the incorporated negative electrode current collector may undergo some chemical changes to change some components of the original negative electrode current collector into derived components, such that the mass percentage of the components in the original negative electrode current collector in the current collector particle of the new electrode plate may not be 100%, but the mass percentage is usually ≥ 50%. The mass percentage of the derived components may be adjusted through the recycling process, thereby regulating the proportion of the components of the original negative electrode current collector in the negative electrode active material layer of the new electrode plate.

Based on any suitable embodiment in the present application, in still some embodiments, the maximum particle diameter of the negative electrode current collector particle is ≤ 120 µm, optionally ≤ 100 µm. The maximum particle diameter of the negative electrode current collector particle may also be any one of the following sizes or selected from an interval composed of any two of the following sizes: 10 µm, 20 µm, 30 µm, 40 µm, 50 µm, 60 µm, 70 µm, 80 µm, 90 µm, 100 µm, 110 µm, 120 µm, etc. The maximum particle diameter of the negative electrode current collector particle may also be less than or equal to any one of the following sizes: 100 µm, 110 µm, 120 µm, etc. The maximum particle diameter of the negative electrode current collector particle may also be selected from any one of the following ranges: 50 µm to 120 µm, 50 µm to 115 µm, 50 µm to 110 µm, 50 µm to 100 µm, 10 µm to 120 µm, 10 µm to 115 µm, 10 µm to 110 µm, 10 µm to 100 µm, 20 µm to 120 µm, 20 µm to 115 µm, 20 µm to 110 µm, 20 µm to 100 µm, 30 µm to 120 µm, 30 µm to 115 µm, 30 µm to 110 µm, 30 µm to 100 µm, etc.

The maximum particle diameter of the negative electrode current collector can be tested and analyzed by using the foregoing test and analysis methods such as EDS.

During the recycling process, the negative electrode current collector may undergo chemical changes such as oxidation reaction of the surface components of the current collector particle, and the derived component at this time includes the oxide of the component of the original negative electrode current collector. In addition, during the recycling process of the recycled negative electrode active substance stock, the negative electrode current collector impurities with a large particle size are easily removed by sieving, but some of the negative electrode current collector impurities have a particle size close to that of the negative electrode active substance to be recycled, and thus it is difficult to separate these negative electrode current collector impurities from the negative electrode active substance to be recycled by a simple physical method. The particle size of these residual negative electrode current collector impurities can be adjusted through the particle size screening step in the recycling process.

Based on any suitable embodiment in the present application, in still some embodiments, the negative electrode current collector particle includes a body B2, and further includes or does not include a coating layer L2 located on at least a part of the surface of the body B2, the body B1 is composed of the element M1, the coating layer L2 includes a derived form of the element M2, and the derived form of the element M2 includes one or more of oxidized forms of the element M2.

In some embodiments, the negative electrode current collector particle includes a body B2, and further includes a coating layer L2 located on at least a part of the surface of the body B2.

During the recycling process, the chemical changes that the negative electrode current collector may undergo are likely to occur on the surface of the negative electrode current collector particle, such that the original negative electrode current collector particle is changed into a coated structure. The coated structure includes a body and a coating layer located on at least a part of the surface of the body, the inside is the body composed of the component of the original negative electrode current collector, and at least a part of the surface of the body is the coating layer composed of the derived component.

Based on any suitable embodiment in the present application, in still some embodiments, the negative electrode current collector particle satisfies one or more of the following features:
the negative electrode current collector particle includes a body B2, and further includes or does not include a coating layer L2 located on at least a part of the surface of the body B2, the body B2 is composed of the element M2, the coating layer L2 includes a derived form of the element M2, and the derived form of the element M2 includes one or more of oxidized forms of the element M2;
the mass percentage of the element M2 in the negative electrode current collector particle is ≥ 50%, optionally 60%-100% (the mass percentage of the element M2 in the negative electrode current collector particle may also be selected from any suitable numerical value or range in the context);
the maximum particle diameter of the negative electrode current collector particle is ≤ 120 µm, optionally ≤ 100 µm (the maximum particle diameter of the negative electrode current collector particle may also be selected from any suitable numerical value or range in the context).

Based on any suitable embodiment in the present application, in still some embodiments, the negative electrode current collector particle includes a copper-based particle, and the copper-based particle includes a copper-based body, and further includes or does not include a copper oxide layer located on the surface of the copper-based body.

The negative electrode current collector in the recycled negative electrode plate may be a copper-based material. During the recycling process, the surface of the copper-based material may be oxidized to form a copper oxide layer, such that the negative electrode current collector impurity in the recycled stock includes a copper-based particle having a coated structure. The copper-based particle is internally a body composed of the copper-based component, and at least a part of the surface of the copper-based body is covered with the copper oxide layer.

Based on any suitable embodiment in the present application, in still some embodiments, the mass percentage of the element copper in the negative electrode current collector particle is ≥ 50%; optionally, the mass percentage of the element copper in the negative electrode current collector particle is 80%-100%. The mass percentage of the element copper in the negative electrode current collector particle may also be selected from any one of the following percentages, or selected from an interval composed of any one of the following percentages and 100%, or selected from an interval composed of any two of the following percentages: 50%, 60%, 70%, 80%, 90%, 95%, 96%, 98%, 99%, etc. Without limitation, the mass percentage of the element copper in the negative electrode current collector particle may be 100%.

Based on any suitable embodiment in the present application, in still some embodiments, the mass percentage of the element copper in the copper-based particle is ≥ 50%; optionally, the mass percentage of the element copper in the copper-based particle is 80%-100%. The mass percentage of the element copper in the copper-based particle may also be selected from any one of the following percentages, or selected from an interval composed of any one of the following percentages and 100%, or selected from an interval composed of any two of the following percentages: 50%, 60%, 70%, 80%, 90%, 95%, 96%, 98%, 99%, etc. Without limitation, the mass percentage of the element copper in the copper-based particle may be 100%.

Based on any suitable embodiment in the present application, in still some embodiments, the copper-based body includes a copper-based component with a mass percentage of ≥ 70%; optionally, the mass percentage of the copper-based component in the copper-base body is 90%-100%. The mass percentage of the copper-based component in the copper-based body may also be selected from any one of the following percentages, or selected from an interval composed of any one of the following percentages and 100%, or selected from an interval composed of any two of the following percentages: 70%, 80%, 90%, 95%, 96%, 98%, 99%, etc. Without limitation, the mass percentage of the copper-based component in the copper-based body may be 100%.

Based on any suitable embodiment in the present application, in still some embodiments, the copper-based component may be copper or a copper alloy.

Based on any suitable embodiment in the present application, in still some embodiments, the negative electrode current collector particle includes a copper-based particle, and the copper-based particle includes a copper-based body, and further includes or does not include a copper oxide layer located on the surface of the copper-based body;
optionally, the negative electrode current collector particle satisfies one or more of the following features:
the mass percentage of the element copper in the negative electrode current collector particle is ≥ 50%; optionally, the mass percentage of the element copper in the negative electrode current collector particle is 80%-100% (the mass percentage of the element copper in the negative electrode current collector particle may also be selected from any suitable numerical value or range in the context);
the copper-based body includes a copper-based component with a mass percentage of ≥ 70%; optionally, the mass percentage of the copper-based component in the copper-based body is 90%-100%, where the copper-based component may be copper or a copper alloy (the mass percentage of the copper-based component in the copper-based body may also be selected from any suitable numerical value or range in the context).

In some embodiments, the copper-based particle includes a copper-based body, and further includes a copper oxide layer located on the surface of the copper-based body.

In the recycled negative electrode active substance stock, the content of the copper-based component in the copper-based body mainly depends on the composition of the original negative electrode current collector in the recycled negative electrode plate, and the copper-based material may be copper or a copper alloy, but is not limited thereto. The mass percentage of the element copper in the negative electrode current collector impurity is mainly related to the composition of the original negative electrode current collector in the recycled negative electrode plate.

Based on any suitable embodiment in the present application, in still some embodiments, the second negative electrode active material layer includes or does not include the negative electrode current collector particle, and the mass percentage of the negative electrode current collector particle in the second negative electrode active material layer is less than the mass percentage of the negative electrode current collector particle in the first negative electrode active material layer.

Based on any suitable embodiment in the present application, in still some embodiments, the second negative electrode active material layer does not include the negative electrode current collector particle.

Based on any suitable embodiment in the present application, in still some embodiments, the second negative electrode active material layer includes the negative electrode current collector particle.

Based on any suitable embodiment in the present application, in still some embodiments, the mass percentage of the negative electrode current collector particle in the second negative electrode active material layer may be less than any one of the following percentages: 0.005%, 0.004%, 0.003%, 0.002%, 0.001%, etc. For example, the mass percentage of the negative electrode current collector particle in the second negative electrode active material layer may be 0.

Based on any suitable embodiment in the present application, in still some embodiments, the mass percentage of the negative electrode current collector particle in the first negative electrode active material layer may be greater than or equal to any one of the following percentages: 0.08%, 0.06%, 0.05%, 0.04%, 0.03%, 0.02%, 0.015%, 0.01%, 0.005%, etc.

Based on any suitable embodiment in the present application, in still some embodiments, the mass percentage of the negative electrode current collector particle in the second negative electrode active material layer is < 0.002%, and the mass percentage of the negative electrode current collector particle in the first negative electrode active material layer is ≥ 0.002%.

Based on any suitable embodiment in the present application, in still some embodiments, the mass percentage of the negative electrode current collector particle in the second negative electrode active material layer is < 0.001%, and the mass percentage of the negative electrode current collector particle in the first negative electrode active material layer is ≥ 0.001%.

The second negative electrode active material layer located at the upper layer may not use the recycled negative electrode active substance stock, such that the negative electrode current collector impurity is not incorporated.

A small amount of the recycled negative electrode active substance stock may also be introduced into the second negative electrode active material layer, as long as the amount of the introduced negative electrode current collector impurity is small enough and thus the risk of causing short circuits between the two electrodes and self-discharge is low enough, the adverse effect on the Hi-pot test yield is small enough, and the battery can still have good high-temperature storage performance and reliability.

The second negative electrode active material layer may or may not include the negative electrode current collector particle. The lower the content of the negative electrode current collector particle in the second negative electrode active material layer, the stronger the barrier effect, the more beneficial it is for improving the high-temperature storage performance and reliability of the battery. It can be understood that when the second negative electrode active material layer includes the negative electrode current collector particle, the mass percentage of the negative electrode current collector particle in the second negative electrode active material layer should be limited to the extent that the second negative electrode active material layer can still play the role of reducing the risk of piercing the separator. The higher the content of the negative electrode current collector particle in the first negative electrode active material layer, the more beneficial it is for reducing the manufacturing cost of the negative electrode plate. It can be understood that the mass percentage of the negative electrode current collector particle in the second negative electrode active material layer should be limited to the extent that the risk of piercing the separator can be reduced by the second negative electrode active material layer. Allowing the mass percentage of the negative electrode current collector particle in the second negative electrode active material layer to be less than the mass percentage of the negative electrode current collector particle in the first negative electrode active material layer can balance the manufacturing cost and performance of the negative electrode plate.

Based on any suitable embodiment in the present application, in still some embodiments, the mass percentage (which may be denoted as R_{N1}) of the negative electrode current collector particle in the first negative electrode active material layer is ≤ 0.5%, optionally 0.001%-0.5%, further optionally 0.005%-0.5%, still further optionally 0.005%-0.4%, and even further optionally 0.01%-0.35%. The mass percentage of the negative electrode current collector particle in the first negative electrode active material layer may also be selected from any one of the following percentages, or selected from an interval composed of any two of the following percentages: 0.001%, 0.005%, 0.01% (corresponding to 100 ppm), 0.02%, 0.03%, 0.04%, 0.05%, 0.055%, 0.06%, 0.065%, 0.07%, 0.075%, 0.08%, 0.085%, 0.09%, 0.095%, 0.1%, 0.15%, 0.2%, 0.25%, 0.3%, 0.35%, 0.4%, 0.45%, 0.5% (corresponding to 5000 ppm), etc. The mass percentage of the negative electrode current collector particle in the first negative electrode active material layer may also be less than or equal to any one of the following percentages: 0.2%, 0.25%, 0.3%, 0.35%, 0.4%, 0.45%, 0.5%, etc. In some embodiments, the mass percentage of the negative electrode current collector particle in the first negative electrode active material layer may be selected from any one of the following ranges: 0.01%-0.15% (100 ppm to 1500 ppm), 0.01%-0.5%, 0.02%-0.5%, 0.02%-0.4%, 0.02%-0.35%, 0.05%-0.5%, 0.05%-0.4%, 0.05%-0.35%, 0.08%-0.5%, 0.08%-0.4%, 0.08%-0.35%, etc.

In the present application, the different features of the mass percentage of the negative electrode current collector particle in the first negative electrode active material layer may be combined in any suitable manner. For example, features of ≥ 0.08%, ≥ 0.06%, ≥ 0.05%, ≥ 0.04%, ≥ 0.03%, ≥ 0.02%, ≥ 0.015%, ≥ 0.01%, ≥ 0.005%, ≥ 0.001%, etc., may be combined with features of ≤ 0.2%, ≤ 0.25%, ≤ 0.3%, ≤ 0.35%, ≤ 0.4%, ≤ 0.45%, ≤ 0.5%, etc., in any suitable manner.

Based on any suitable embodiment in the present application, in still some embodiments, in the first negative electrode active material layer, the percentage (which may be denoted as R_{N2}) of the mass of the negative electrode current collector particle relative to the sum of the mass of the negative electrode current collector particle and the mass of the first negative electrode active substance is ≤ 0.5%, optionally ≤ 0.4%, and further optionally ≤ 0.35%. R_{N2} may also be selected from any one of the following percentages or selected from an interval composed of any two of the following percentages: 0.001%, 0.005%, 0.01%, 0.02%, 0.03%, 0.04%, 0.05%, 0.055%, 0.06%, 0.065%, 0.07%, 0.075%, 0.08%, 0.085%, 0.09%, 0.095%, 0.1%, 0.15%, 0.2%, 0.25%, 0.3%, 0.35%, 0.4%, 0.45%, 0.5%, etc. In the first positive electrode active material layer, R_{N2} may also be less than or equal to any one of the following percentages: 0.25%, 0.3%, 0.35%, 0.4%, 0.45%, 0.5, etc. With reference to the content of the negative electrode current collector impurity in the recycled negative electrode active substance stock, R_{N2} may also be selected from any suitable range of the following ranges: 0.001%-0.5%, 0.005%-0.5%, 0.01%-0.5%, 0.01%-0.4%, 0.01%-0.3%, 0.02%-0.5%, 0.02%-0.4%, 0.02%-0.35%, 0.05%-0.5%, 0.05%-0.4%, 0.05%-0.35%, 0.08%-0.5%, 0.08%-0.4%, 0.08%-0.35%, etc.

The mass percentage of the negative electrode current collector particle in the first negative electrode active material layer (which may be denoted as R_{N1}) and the percentage of the mass of the negative electrode current collector particle in the first negative electrode active material layer relative to the sum of the mass of the negative electrode current collector particle and the mass of the first negative electrode active substance (which may be denoted as R_{N2}) are mainly related to the following factors: the residual amount of the negative electrode current collector impurity in the recycled negative electrode active substance stock, and the content of the recycled negative electrode active substance stock in the first negative electrode active material layer. The smaller the R_{N1} and R_{N2}, the lower the risk of piercing the separator caused by the negative electrode current collector impurity in the battery including the corresponding negative electrode plate.

Based on any suitable embodiment in the present application, in still some embodiments, in the negative electrode plate, the multi-layered active material layer is a double-layered negative electrode active material layer. In this case, the multi-layered active material layer is of a double-layer structure having two negative electrode active material layers, that is, a first negative electrode active material layer and a second negative electrode active material layer.

In the negative electrode plate, the foregoing multi-layered active material layer may be of a double-layer structure having two negative electrode active material layers, that is, a corresponding second negative electrode active material layer distal to the negative electrode current collector and a corresponding first negative electrode active material layer between the negative electrode current collector and the second negative electrode active material layer.

Based on any suitable embodiment in the present application, in still some embodiments, the thickness of the first negative electrode active material layer is greater than the thickness of the second negative electrode active material layer. In some of the embodiments, the ratio of the thickness of the second negative electrode active material layer relative to the thickness of the first negative electrode active material layer is 0.05-0.5, further optionally 0.1-0.4. The ratio of the thickness of the second negative electrode active material layer relative to the thickness of the first negative electrode active material layer may also be selected from any one of the following values or selected from an interval composed of any two of the following values: 0.05, 0.06, 0.08, 0.10, 0.125, 0.15, 0.16, 0.18, 0.20, 0.24, 0.25, 0.30, 0.32, 0.33, 0.35, 0.36, 0.40, 0.45, 0.50, etc.

Based on any suitable embodiment in the present application, in still some embodiments, the thickness of the first negative electrode active material layer is 45 µm to 125 µm, optionally 55 µm to 120 µm, and further optionally 60 µm to 110 µm. The thickness of the first negative electrode active material layer may also be selected from any one of the following thicknesses or selected from an interval composed of any two of the following thicknesses: 45 µm, 50 µm, 55 µm, 60 µm, 65 µm, 70 µm, 75 µm, 80 µm, 90 µm, 100 µm, 110 µm, 120 µm, 125 µm, etc.

Based on any suitable embodiment in the present application, in still some embodiments, the thickness of the second negative electrode active material layer is 5 µm to 60 µm, optionally 10 µm to 50 µm, and further optionally 15 µm to 45 µm. The thickness of the second negative electrode active material layer may also be selected from any one of the following thicknesses or selected from an interval composed of any two of the following thicknesses: 5 µm, 6 µm, 8 µm, 9 µm, 10 µm, 12 µm, 15 µm, 16 µm, 18 µm, 20 µm, 22 µm, 24 µm, 25 µm, 26 µm, 28 µm, 30 µm, 32 µm, 35 µm, 36 µm, 40 µm, 42 µm, 44 µm, 45 µm, 50 µm, 55 µm, 60 µm, etc.

Based on any suitable embodiment in the present application, in still some embodiments, the negative electrode plate satisfies one or more of the following features:
the thickness of the first negative electrode active material layer is greater than the thickness of the second negative electrode active material layer; optionally, the ratio of the thickness of the second negative electrode active material layer relative to the thickness of the first negative electrode active material layer is 0.05-0.5, further optionally 0.1-0.4 (the ratio of the thickness of the second negative electrode active material layer relative to the thickness of the first negative electrode active material layer may also be selected from any suitable numerical value or range in the context);
the thickness of the first negative electrode active material layer is 45 µm to 125 µm, optionally 55 µm to 120 µm, and further optionally 60 µm to 110 µm (the thickness of the first negative electrode active material layer may also be selected from any suitable numerical value or range in the context);
the thickness of the second negative electrode active material layer is 5 µm to 60 µm, optionally 10 µm to 50 µm, and further optionally 15 µm to 45 µm (the thickness of the second negative electrode active material layer may also be selected from any suitable numerical value or range in the context).

The thickness of the first negative electrode active material layer (located at the lower layer) and the thickness of the second negative electrode active material layer (located at the upper layer) in the multi-layer structured negative electrode active material layer can be adjusted to adjust the amount of the recycled negative electrode active substance stock in the new negative electrode plate. By allowing the thickness of the first negative electrode active material layer to be greater than the thickness of the second negative electrode active material layer, more recycled stock can be introduced, which is more beneficial for cost control. By adjusting the first negative electrode active material layer to a more appropriate thickness, the recycled negative electrode active substance stock can be more reasonably utilized. By adjusting the thickness of the second negative electrode active material layer, the magnitude of the barrier effect of the second negative electrode active material layer between the first negative electrode active material layer and the separator can be adjusted. Further, by adjusting the second negative electrode active material layer to a more appropriate thickness, the negative electrode current collector particle in the first negative electrode active material layer can be better blocked while controlling the cost, which is more beneficial for reducing the risk of piercing the separator, improving the Hi-pot test yield, and enhancing the high-temperature storage performance and reliability of the battery.

Based on any suitable embodiment in the present application, in still some embodiments, the negative electrode plate satisfies one or more of the following features:
the thickness of the first negative electrode active material layer is greater than the thickness of the second negative electrode active material layer; optionally, the ratio of the thickness of the second negative electrode active material layer relative to the thickness of the first negative electrode active material layer is 0.05-0.5, further optionally 0.1-0.4 (the ratio of the thickness of the second negative electrode active material layer relative to the thickness of the first negative electrode active material layer may also be selected from any suitable numerical value or range in the context);
the thickness of the first negative electrode active material layer is 45 µm to 125 µm, optionally 55 µm to 120 µm, and further optionally 60 µm to 110 µm (the thickness of the first negative electrode active material layer may also be selected from any suitable numerical value or range in the context);
the thickness of the second negative electrode active material layer is 5 µm to 60 µm, optionally 10 µm to 50 µm, and further optionally 15 µm to 45 µm (the thickness of the second negative electrode active material layer may also be selected from any suitable numerical value or range in the context);
the mass percentage of the negative electrode current collector particle in the first negative electrode active material layer is ≤ 0.5%, optionally 0.001%-0.5%, further optionally 0.005%-0.4%, and still further optionally 0.01%-0.35% (the mass percentage of the negative electrode current collector particle in the first negative electrode active material layer may also be selected from any suitable numerical value or range in the context);
in the first negative electrode active material layer, the percentage of the mass of the negative electrode current collector particle relative to the sum of the mass of the negative electrode current collector particle and the mass of the first negative electrode active substance is ≤ 0.5%, optionally ≤ 0.4%, and further optionally ≤ 0.35% (the percentage of the mass of the negative electrode current collector particle relative to the sum of the mass of the negative electrode current collector particle and the mass of the first negative electrode active substance may also be selected from any suitable numerical value or range in the context).

By controlling one or more parameters of the thickness of the first negative electrode active material layer, the thickness of the second negative electrode active material layer, the mass percentage (R_{N1}) of the negative electrode current collector particle in the first negative electrode active material layer, and the percentage (R_{N2}) of the mass of the negative electrode current collector particle in the first negative electrode active material layer relative to the sum of the mass of the negative electrode current collector particle and the mass of the first negative electrode active substance to be within the above suitable ranges, the adverse effects caused by the negative electrode current collector impurity can be better reduced while introducing the recycled negative electrode active substance stock, which is beneficial for achieving better high-temperature storage performance and reliability of the battery while reducing the cost.

Based on any suitable embodiment in the present application, in still some embodiments, when the electrode plate is a negative electrode plate, the current collector particle is denoted as a negative electrode current collector particle, the metal element in the negative electrode current collector particle is denoted as an element M2, the first active material layer is denoted as a first negative electrode active material layer, and the second active material layer is denoted as a second negative electrode active material layer;
the negative electrode current collector particle includes a body B2, and further includes a coating layer L2 located on at least a part of the surface of the body B2, the body B2 is composed of the element M2, the coating layer L2 includes a derived form of the element M2, and the derived form of the element M2 includes an oxidized form of the element M2;
optionally, the mass percentage of the negative electrode current collector particle in the first negative electrode active material layer is ≤ 0.5%;
optionally, the mass percentage of the negative electrode current collector particle in the second negative electrode active material layer is < 0.005%.

Based on any suitable embodiment in the present application, in still some embodiments, the first negative electrode active material layer includes a first negative electrode active substance, the second negative electrode active material layer includes a second negative electrode active substance, and the first negative electrode active substance and the second negative electrode active substance are the same or different.

Based on any suitable embodiment in the present application, in still some embodiments, the first negative electrode active substance and the second negative electrode active substance may be the same or different. The first negative electrode active substance and the second negative electrode active substance may each independently be a negative electrode active substance for batteries known in the art. As a non-limiting example, the negative electrode active substance may include one or more of the following substances or materials: artificial graphite, natural graphite, soft carbon, hard carbon, a silicon-based material, a tin-based material, lithium titanate, and the like. The silicon-based material may include one or more of elemental silicon, a silicon-oxygen compound, a silicon-carbon composite, a silicon-nitrogen composite, and a silicon alloy. The tin-based material may include one or more of elemental tin, a tinoxygen compound, and a tin alloy. However, the present application is not limited to these substances or materials, and other conventional materials or substances that can be used as negative electrode active substances for batteries may also be used. These negative electrode active substances may be used alone or in combination of two or more.

Based on any suitable embodiment in the present application, in still some embodiments, the first negative electrode active substance includes one or more of a carbon-based material, a silicon-based material, a tin-based material, lithium titanate, and a modified form of any one of the foregoing substances, where the modified form includes one or more of doping modification and coating modification. Both the doping modification method and the coating modification method can adopt or refer to the existing modification methods in the art, including but not limited to the selection of element types and doping amounts.

Without limitation, the carbon-based material may include one or more of a graphite material, soft carbon, and hard carbon. Without limitation, the graphite material may include one or more of artificial graphite and natural graphite.

Based on any suitable embodiment in the present application, in still some embodiments, the first negative electrode active substance includes one or more of a carbon-based material and a modified form of the foregoing carbon-based material, where the modified form includes one or more of doping modification and coating modification.

Based on any suitable embodiment in the present application, in still some embodiments, the first negative electrode active substance includes one or more of graphite, hard carbon, soft carbon, and a modified form of any one of the foregoing substances, where the modified form includes one or more of doping modification and coating modification.

Based on any suitable embodiment in the present application, in still some embodiments, the first negative electrode active substance includes one or more of graphite and a modified form of any one of the foregoing substances, where the modified form includes one or more of doping modification and coating modification.

The negative electrode active substance in the recycled negative electrode active substance stock may have any known structure and/or component, may or may not contain a doping element, and may or may not have a coating layer. A recycled negative electrode plate having an appropriate type of negative electrode active substance can be selected as needed.

Based on any suitable embodiment in the present application, in still some embodiments, the second negative electrode active substance includes one or more of graphite, hard carbon, soft carbon, and a modified form of any one of the foregoing substances, where the modified form includes one or more of doping modification and coating modification.

Based on any suitable embodiment in the present application, in still some embodiments, the second negative electrode active substance includes one or more of graphite and a modified form of any one of the foregoing substances, where the modified form includes one or more of doping modification and coating modification.

The type of the second negative electrode active substance in the second negative electrode active material layer may be appropriately selected as needed. A suitable structure and/or component may be selected from known types of negative electrode active substances.

Based on any suitable embodiment in the present application, in still some embodiments, the negative electrode plate satisfies one or more of the following features:
the first negative electrode active substance includes one or more of a carbon-based material, a silicon-based material, a tin-based material, lithium titanate, and a modified form of any one of the foregoing substances, where the modified form includes one or more of doping modification and coating modification; optionally, the first negative electrode active substance includes one or more of graphite and a modified form of any one of the foregoing substances, where the modified form includes one or more of doping modification and coating modification; optionally, the carbon-based material includes one or more of a graphite material, soft carbon, and hard carbon;
the second negative electrode active substance includes one or more of a graphite material, soft carbon, hard carbon, a silicon-based material, a tin-based material, lithium titanate, and a modified form of any one of the foregoing substances, where the modified form includes one or more of doping modification and coating modification; optionally, the second negative electrode active substance includes one or more of graphite and a modified form of any one of the foregoing substances, where the modified form includes one or more of doping modification and coating modification.

Based on any suitable embodiment in the present application, the foregoing negative electrode plate provided in the first aspect of the present application includes a negative electrode current collector and a negative electrode active material layer disposed on at least one side of the negative electrode current collector, and the negative electrode active material layer on the at least one side includes a first negative electrode active material layer and a second negative electrode active material layer located on a side of the first active material layer distal to the negative electrode current collector. That is, the negative electrode active material layer is of a multi-layer structure and includes at least a first negative electrode active material layer and a second negative electrode active material layer.

Any one of the active material layers in the negative electrode active material layer independently contains a negative electrode active substance, and may independently contain a negative electrode active substance for batteries known in the art, and reference may be made to the foregoing definition. In any one of the active material layers in the negative electrode active material layer (which may be the first negative electrode active material layer or the second negative electrode active material layer), the mass percentage of the negative electrode active substance may independently satisfy the condition of ≥ 70%, further ≥ 80%, and still further ≥ 90%.

In some embodiments, an electrode plate is provided. The electrode plate includes a current collector and a multi-layered active material layer located on at least one side of the current collector, and the multi-layered active material layer includes a first active material layer and a second active material layer, where the second active material layer is an active material layer farthest away from the current collector, and the first active material layer is located between the second active material layer and the current collector;
the first active material layer includes a current collector particle;
the electrode plate is a positive electrode plate, and the current collector particle includes one or more metal components of aluminum, aluminum alloys, nickel, nickel alloys, titanium, titanium alloys, silver, and silver alloys; or the electrode plate is a negative electrode plate, and the current collector particle includes one or more metal components of copper, copper alloys, nickel, nickel alloys, titanium, titanium alloys, silver, and silver alloys;
when the electrode plate is a positive electrode plate, the current collector particle is denoted as a positive electrode current collector particle, the metal element in the positive electrode current collector particle is denoted as an element M1, the first active material layer is denoted as a first positive electrode active material layer, and the second active material layer is denoted as a second positive electrode active material layer; the positive electrode current collector particle includes a body B1, and further includes a coating layer L1 located on at least a part of the surface of the body B1, the body B1 is composed of the element M1, the coating layer L1 includes a derived form of the element M1, and the derived form of the element M1 includes an oxidized form of the element M1; the mass percentage of the positive electrode current collector particle in the first positive electrode active material layer is ≤ 1.0%; the mass percentage of the positive electrode current collector particle in the second positive electrode active material layer is < 0.05%;
when the electrode plate is a negative electrode plate, the current collector particle is denoted as a negative electrode current collector particle, the metal element in the negative electrode current collector particle is denoted as an element M2, the first active material layer is denoted as a first negative electrode active material layer, and the second active material layer is denoted as a second negative electrode active material layer; the negative electrode current collector particle includes a body B2, and further includes a coating layer L2 located on at least a part of the surface of the body B2, the body B2 is composed of the element M2, the coating layer L2 includes a derived form of the element M2, and the derived form of the element M2 includes an oxidized form of the element M2; the mass percentage of the negative electrode current collector particle in the first negative electrode active material layer is ≤ 0.5%; the mass percentage of the negative electrode current collector particle in the second negative electrode active material layer is < 0.005%.

In some embodiments, an electrode plate is provided. The electrode plate includes a current collector and a multi-layered active material layer located on at least one side of the current collector, and the multi-layered active material layer includes a first active material layer and a second active material layer, where the second active material layer is an active material layer farthest away from the current collector, and the first active material layer is located between the second active material layer and the current collector;
the first active material layer includes a current collector particle;
the electrode plate is a positive electrode plate and the current collector particle contains a metal component suitable for the positive electrode current collector, or the electrode plate is a negative electrode plate and the current collector particle contains a metal component suitable for the negative electrode current collector, where the metal component suitable for the positive electrode current collector refers to a metal component that will not be oxidized at the positive electrode at a potential > 2.0 V, with temperature condition including at least one temperature of 20 °C to 30 °C; the metal component suitable for the negative electrode current collector refers to a metal component capable of having chemical stability at the negative electrode under charging and discharging conditions, and the charging and discharging conditions at least include: performing at least one charging and discharging cycle within a cut-off voltage range, with the temperature for performing the charging and discharging cycles including at least one temperature of 10 °C to 80 °C;
when the electrode plate is a positive electrode plate, the current collector particle is denoted as a positive electrode current collector particle, the metal element in the positive electrode current collector particle is denoted as an element M1, the first active material layer is denoted as a first positive electrode active material layer, and the second active material layer is denoted as a second positive electrode active material layer; the positive electrode current collector particle includes a body B1, and further includes a coating layer L1 located on at least a part of the surface of the body B1, the body B1 is composed of the element M1, the coating layer L1 includes a derived form of the element M1, and the derived form of the element M1 includes an oxidized form of the element M1; the mass percentage of the positive electrode current collector particle in the first positive electrode active material layer is ≤ 1.0%; the mass percentage of the positive electrode current collector particle in the second positive electrode active material layer is < 0.05%;
when the electrode plate is a negative electrode plate, the current collector particle is denoted as a negative electrode current collector particle, the metal element in the negative electrode current collector particle is denoted as an element M2, the first active material layer is denoted as a first negative electrode active material layer, and the second active material layer is denoted as a second negative electrode active material layer; the negative electrode current collector particle includes a body B2, and further includes a coating layer L2 located on at least a part of the surface of the body B2, the body B2 is composed of the element M2, the coating layer L2 includes a derived form of the element M2, and the derived form of the element M2 includes an oxidized form of the element M2; the mass percentage of the negative electrode current collector particle in the first negative electrode active material layer is ≤ 0.5%; the mass percentage of the negative electrode current collector particle in the second negative electrode active material layer is < 0.005%.

Based on any suitable embodiment in the present application, the foregoing negative electrode plate provided in the first aspect of the present application includes a negative electrode current collector and a first negative electrode active material layer disposed on at least one side of the negative electrode current collector, and a second negative electrode active material layer is further disposed on a side, distal to the negative electrode current collector, of the first negative electrode active material layer on any one side.

As a non-limiting example, the negative electrode current collector is provided with two surfaces facing away from each other in the thickness direction thereof, and the first active material layer is disposed on either or both of the two surfaces facing away from each other of the negative electrode current collector. For any one side of the negative electrode current collector, when the first active material layer is provided, a second active material layer is further disposed on a side of the first active material layer distal to the negative electrode current collector, so as to avoid the risk of the negative electrode current collector particle in the first active material layer piercing the separator as much as possible.

Based on any suitable embodiment in the present application, in still some embodiments, the negative electrode current collector in the foregoing negative electrode plate provided in the first aspect of the present application may be a metal foil or a composite current collector. For example, as the metal foil, a copper foil may be used. The composite current collector may include a polymer material base layer and a metal layer formed on at least one surface of the polymer material substrate. The composite current collector can be fabricated by forming a metal material on a polymer material substrate. The metal material may include, but is not limited to, copper, a copper alloy, nickel, a nickel alloy, titanium, a titanium alloy, silver, a silver alloy, and the like, and the polymer material substrate may include, but is not limited to, one or more of substrates such as polypropylene (PP), polyethylene terephthalate (PET), polybutylene terephthalate (PBT), polystyrene (PS), and polyethylene (PE).

Based on any suitable embodiment in the present application, in still some embodiments, any one of the active material layers in the negative electrode active material layer (which may be the first negative electrode active material layer or the second negative electrode active material layer) may independently include a binder. As a non-limiting example, the binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). In any one of the active material layers in the negative electrode active material layer (which may be the first negative electrode active material layer or the second negative electrode active material layer), the mass percentage of the binder may independently be 0-10%, further 0-5%, still further 1%-5%, and even further optionally 1%-3%.

Based on any suitable embodiment in the present application, in still some embodiments, any one of the active material layers in the negative electrode active material layer (which may be the first negative electrode active material layer or the second negative electrode active material layer) may independently include a conductive agent. As a non-limiting example, the conductive agent may include one or more of superconducting carbon, acetylene black, carbon black, Ketjen black, a carbon dot, a carbon nanotube, graphene, and a carbon nanofiber. In any one of the active material layers in the negative electrode active material layer (which may be the first negative electrode active material layer or the second negative electrode active material layer), the mass percentage of the conductive agent may independently be 0-10%, further 0-3%, still further 0.5%-3%, and even further optionally 1%-2%.

In some embodiments, any one of the active material layers in the negative electrode active material layer (which may be the first negative electrode active material layer or the second negative electrode active material layer) further optionally includes other auxiliary agents, such as one or more of a thickener (e.g., sodium carboxymethylcellulose (CMC-Na)) and the like. In any one of the active material layers in the negative electrode active material layer (which may be the first negative electrode active material layer or the second negative electrode active material layer), the mass percentage of the other auxiliary agent may independently be 0-15%, further optionally 0-10%, still further optionally 0-5%, even further optionally 0-3%, yet further optionally 0-1%.

For the preparation method for the foregoing negative electrode plate provided in the first aspect of the present application, reference may be made to the fifth aspect of the present application.

In a second aspect of the present application, a secondary battery is provided. The secondary battery includes one or more electrode plates described in the first aspect of the present application.

Based on any suitable embodiment in the present application, in still some embodiments, the secondary battery includes a positive electrode plate and a negative electrode plate, and the secondary battery satisfies any one or both of the following features:
the positive electrode plate includes the positive electrode plate described in the first aspect of the present application;
the negative electrode plate includes the negative electrode plate described in the first aspect of the present application.

By using the electrode plate described in the first aspect of the present application in the secondary battery, based on the multi-layer structure design of the electrode plate, the second active material layer can be used to reduce the risk of piercing the separator that might be caused by the current collector impurity in the first active material layer. Therefore, the recycled active substance stock incorporating the current collector impurity can be used as the raw material for preparing the electrode plate, which can reduce the cost, reduce the risk of piercing the separator caused by the current collector impurity, reduce the risk of battery failure caused by short circuits between the two electrodes, self-discharge, Hi-pot failure, etc., and achieve good high-temperature storage performance and reliability of the battery. The electrode plate may be a positive electrode plate incorporating the positive electrode current collector impurity, or may be a negative electrode plate incorporating the negative electrode current collector impurity, or may be a combination of the two electrode plates.

In some embodiments, the secondary battery includes the positive electrode plate described in the first aspect of the present application.

In some embodiments, the secondary battery includes the negative electrode plate described in the first aspect of the present application.

In some embodiments, the secondary battery includes the positive electrode plate and the negative electrode plate described in the first aspect of the present application.

In some embodiments, the secondary battery satisfies any one or both of the following features:
the positive electrode plate is the positive electrode plate described in the first aspect of the present application;
the negative electrode plate is the negative electrode plate described in the first aspect of the present application.

Based on any suitable embodiment in the present application, in still some embodiments, the positive electrode plate in the secondary battery is the positive electrode plate described in the first aspect of the present application.

Based on any suitable embodiment in the present application, in still some embodiments, the negative electrode plate in the secondary battery is the negative electrode plate described in the first aspect of the present application.

Based on any suitable embodiment in the present application, in still some embodiments, the secondary battery is a lithium-ion secondary battery.

Typically, the secondary battery includes a positive electrode plate, a negative electrode plate, an electrolyte, and a separator. During the charging and discharging process of the battery, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to primarily prevent the positive and negative electrodes from short-circuiting while allowing the passage of ions.

The electrolyte will be described below.

The electrolyte plays a role of conducting ions between the positive electrode plate and the negative electrode plate. The present application does not particularly limit the type of the electrolyte, which can be selected according to needs. For example, the electrolyte may be liquid, gel, or all solid.

In some embodiments, the electrolyte is an electrolytic solution.

In some embodiments, the electrolytic solution is a non-aqueous electrolyte. The non-aqueous electrolyte may include an electrolyte salt and a solvent.

In some embodiments, the secondary battery is a lithium-ion secondary battery, and the electrolyte salt may include an electrolyte lithium salt.

In some embodiments, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP). The concentration of the electrolyte salt is usually 0.5 mol/L to 5 mol/L.

In some embodiments, the solvent in the non-aqueous electrolyte may include one or more of fluoroethylene carbonate (FEC), ethylene carbonate (EC, 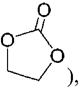 propylene carbonate (PC, 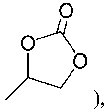 ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC, 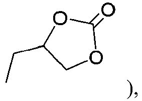 methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolytic solution further optionally includes an additive. For example, the additive may include a negative electrode film-forming additive and a positive electrode film-forming additive, and may further include an additive capable of improving certain properties of the battery, such as an additive for improving the overcharge performance of the battery and an additive for improving the high- or low-temperature performance of the battery.

In some embodiments, the additive in the electrolytic solution may include, but is not limited to, one or more of fluoroethylene carbonate (FEC), difluoroethylene carbonate (DFEC), trifluoromethyl ethylene carbonate (TFPC), and the like.

The separator will be described below.

In some embodiments, the secondary battery further includes a separator. The present application does not particularly limit the type of the separator, and any porous-structure separator known to have good chemical stability and mechanical stability may be selected.

In some embodiments, the material of the separator may include one or more of glass fiber, non-woven fabric, polyethylene, polypropylene, and polyvinylidene fluoride. The separator may be a single-layer film or a multi-layer composite film, and there is no particular limitation on this. When the separator is a multi-layer composite film, the materials of the layers may be the same or different, and there is no particular limitation on this.

In some embodiments, the thickness of the separator is 6 µm to 40 µm, optionally 12 µm to 20 µm.

In some embodiments, the positive electrode plate, the negative electrode plate, and the separator may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic; further, non-limiting examples of the plastic may include one or more of polypropylene, polybutylene terephthalate, polybutylene succinate, and the like.

The secondary battery includes at least one battery cell. The secondary battery may include one or more battery cells.

In the present application, unless otherwise specified, "battery cell" refers to a basic unit capable of implementing the mutual conversion of chemical energy and electric energy, and further, usually includes at least a positive electrode plate, a negative electrode plate, and an electrolyte. During the charging and discharging process of the battery, active ions are intercalated and deintercalated back and forth between the positive electrode plate and the negative electrode plate. The electrolyte conducts active ions between the positive electrode plate and the negative electrode plate.

The present application does not particularly limit the shape of the battery cell, and it may have a cylindrical shape, a prismatic shape, or any other shape. For example, FIG. 3 shows a battery cell 5 having a prismatic structure as an example.

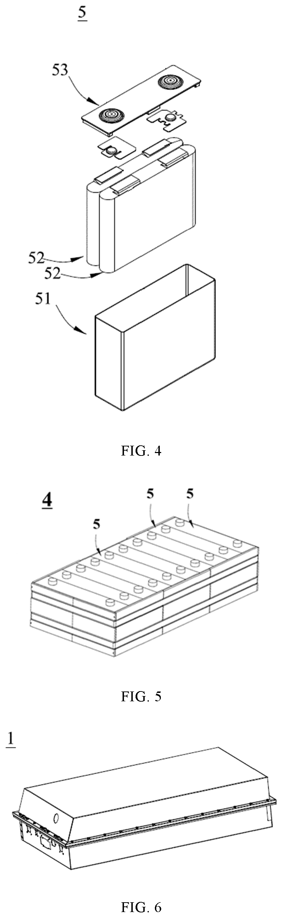

In some of the embodiments, reference may be made to FIG. 4 for an exploded view of the battery cell, and the outer packaging may include a housing 51 and a cover plate 53. The housing 51 may include a bottom plate and side plates connected to the bottom plate, and the bottom plate and the side plates define, in an enclosing manner, an accommodating cavity. The housing 51 is provided with an opening communicating with the accommodating cavity, and the cover plate 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of the electrode assembly 52 included in the battery cell 5 may be one or more, and those skilled in the art can select the number according to actual requirements.

Reference may be made to FIG. 4 for an exploded view of the battery cell according to one embodiment of the present application shown in FIG. 3.

The secondary battery may be a battery module 4 or a battery pack 1.

The battery module includes at least one battery cell. The number of the battery cells included in the battery module may be one or more, and those skilled in the art can select an appropriate number according to the application and capacity of the battery module.

FIG. 5 shows a battery module 4 as an example. Referring to FIG. 5, in the battery module 4, a plurality of battery cells 5 may be sequentially disposed in a length direction of the battery module 4. Certainly, the arrangement may also be in any other manner. Further, the plurality of battery cells 5 may be fixed by fasteners.

Optionally, the battery module 4 may further include an outer shell having an accommodating space in which the plurality of battery cells 5 are accommodated.

In some of the embodiments, the battery module described above may also be assembled into a battery pack, the number of the battery modules included in the battery pack may be one or more, and those skilled in the art can select an appropriate number according to the application and capacity of the battery pack.

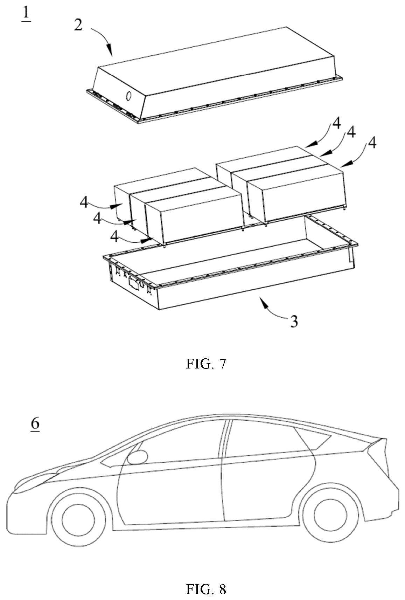

FIG. 6 and FIG. 7 show a battery pack 1 as an example. Referring to FIG. 6 and FIG. 7, the battery pack 1 may include a battery case and a plurality of battery modules 4 disposed in the battery case. The battery case includes an upper case body 2 and a lower case body 3. The upper case body 2 is capable of lidding the lower case body 3 to form a closed space for accommodating the battery modules 4. The plurality of battery modules 4 may be arranged in any manner in the battery case.

In a third aspect of the present application, an electric device is provided. The electric device includes at least one of the electrode plate described in the first aspect of the present application and the secondary battery described in the second aspect of the present application.

In some embodiments, the present application further provides an electric device. The electric device includes the secondary battery provided in the present application. The secondary battery may be used as a power source for the electric device, or as an energy storage unit for the electric device. The electric device may include a mobile device, an electric vehicle, an electric train, a ship, a satellite, an energy storage system, and the like, but is not limited thereto. The mobile device may be, for example, a mobile phone, a laptop computer, or the like; the electric vehicle may be, for example, a pure electric vehicle, a hybrid electric vehicle, a plug-in hybrid electric vehicle, an electric bicycle, an electric scooter, an electric golf cart, an electric truck, or the like, but is not limited thereto.

For the electric device, a secondary battery may be selected according to the usage requirements of the electric device.

FIG. 8 shows an electric device 6 as an example. The electric device is a pure electric vehicle, a hybrid electric vehicle, a plug-in hybrid electric vehicle, or the like. To meet the requirements of the electric device for high power and high energy density of the secondary battery, a battery pack or a battery module may be used.

As another example, the device may be a mobile phone, a tablet computer, a laptop computer, or the like. The device is generally required to be light and thin, and a secondary battery may thus be used as a power source.

In a fourth aspect of the present application, a preparation method for a regenerated positive electrode plate is provided. The preparation method includes the following steps:
providing a recycled positive electrode plate;
crushing the recycled positive electrode plate to obtain recycled positive electrode particles, performing a first sieving, calcining the recycled positive electrode particles left after the first sieving to remove a volatile matter, crushing the calcined recycled positive electrode particles, demagnetizing, performing a second sieving, and collecting solids with a target particle size to obtain recycled positive electrode active substance stock, where the recycled positive electrode active substance stock contains a positive electrode current collector impurity;
applying a first positive electrode slurry including the recycled positive electrode active substance stock to at least one side of a positive electrode current collector, and drying to form a positive electrode active lower layer; and
applying a second positive electrode slurry to a side of the positive electrode active lower layer distal to the positive electrode current collector, drying, and cold pressing to prepare the regenerated positive electrode plate, where the regenerated positive electrode plate is the positive electrode plate defined in the first aspect of the present application.

The positive electrode plate in the first aspect of the present application may be a regenerated positive electrode plate prepared by using recycled positive electrode active substance stock recycled by a physical method as the raw material. The positive electrode current collector impurity in the recycled positive electrode active substance stock is converted into the positive electrode current collector particle in the regenerated positive electrode plate. In the preparation process, the positive electrode active lower layer corresponds to the first positive electrode active material layer.

For the size of the positive electrode current collector impurity involved in the preparation method for the regenerated positive electrode plate, reference may be made to the size of the positive electrode current collector particle in the positive electrode plate described above, and for the content of the size of the positive electrode current collector impurity in the recycled positive electrode active substance stock, reference may be made to the relative content of the mass of the positive electrode current collector particle relative to the sum of the mass of the positive electrode current collector particle and the mass of the first positive electrode active substance described above.

Based on any suitable embodiment in the present application, in still some embodiments, the mass percentage of the positive electrode current collector impurity in the recycled positive electrode active substance stock is less than or equal to 1%, optionally 0.01%-1.0%, further optionally 0.05%-0.9%, still further optionally 0.05%-0.8%, and even further optionally 0.1%-0.8%. The mass percentage of the positive electrode current collector impurity in the recycled positive electrode active substance stock may also be selected from any one of the following percentages, or selected from an interval composed of any two of the following percentages: 0.05%, 0.055%, 0.06%, 0.065%, 0.07%, 0.075%, 0.08%, 0.085%, 0.09%, 0.095%, 0.1%, 0.15%, 0.2%, 0.25%, 0.3%, 0.35%, 0.4%, 0.45%, 0.5%, 0.6%, 0.7%, 0.8%, 0.9%, 1.0%, etc. Without limitation, the mass percentage of the positive electrode current collector impurity in the recycled positive electrode active substance stock may be greater than or equal to any one of the following percentages: ≥ 0.4%, ≥ 0.35%, ≥ 0.3%, ≥ 0.25%, ≥ 0.2%, ≥ 0.15%, ≥ 0.1%, ≥ 0.05%, ≥ 0.04%, ≥ 0.03%, ≥ 0.02%, ≥ 0.01%, etc. Without limitation, the mass percentage of the positive electrode current collector impurity in the recycled positive electrode active substance stock may be less than or equal to any one of the following percentages: 0.75%, 0.8%, 0.85%, 0.9%, 0.95%, etc. Without limitation, the mass percentage of the positive electrode current collector impurity in the recycled positive electrode active substance stock may also be selected from any suitable range of the following ranges: 0.01%-0.9%, 0.01%-0.8%, 0.05%-1%, 0.05%-0.9%, 0.05%-0.8%, 0.05%-0.6%, 0.05%-0.5%, 0.06%-0.5%, 0.06%-0.6%, 0.06%-0.8%, 0.06%-0.9%, 0.06%-1.0%, 0.1%-1%, 0.1%-0.9%, 0.1%-0.8%, 0.15%-1%, 0.15%-0.9%, 0.15%-0.8%, 0.18%-1%, 0.18%-0.9%, 0.18%-0.8%, 0.2%-1%, 0.2%-0.9%, 0.2%-0.8%, greater than 0.2% and less than or equal to 1%, greater than 0.2% and less than or equal to 0.9%, greater than 0.2% and less than or equal to 0.8%, greater than 0.15% and less than or equal to 1%, greater than 0.15% and less than or equal to 0.9%, greater than 0.15% and less than or equal to 0.8%, greater than 0.18% and less than or equal to 1%, greater than 0.18% and less than or equal to 0.18%, greater than 0.2% and less than or equal to 0.8%, etc.

In the present application, different features of the mass percentage of the positive electrode current collector impurity in the recycled positive electrode active substance stock may be combined in any suitable manner. For example, features of ≥ 0.4%, ≥ 0.35%, ≥ 0.3%, ≥ 0.25%, ≥ 0.2%, ≥ 0.15%, ≥ 0.1%, ≥ 0.05%, ≥ 0.04%, ≥ 0.03%, ≥ 0.02%, ≥ 0.01%, etc., may be combined with features of ≤ 1%, ≤ 0.95%, ≤ 0.9%, ≤ 0.85%, ≤ 0.8%, ≤ 0.75%, etc., in any suitable manner.

Based on any suitable embodiment in the present application, in still some embodiments, the maximum particle diameter of the positive electrode current collector impurity is ≤ 150 µm, optionally 10 µm to 150 µm. The maximum particle diameter of the positive electrode current collector impurity may also be any one of the following sizes or selected from an interval composed of any two of the following sizes: 10 µm, 15 µm, 20 µm, 30 µm, 40 µm, 50 µm, 60 µm, 70 µm, 80 µm, 90 µm, 100 µm, 110 µm, 120 µm, 130 µm, 135 µm, 150 µm, etc. The maximum particle diameter of the positive electrode current collector impurity may also be less than or equal to any one of the following sizes: 100 µm, 110 µm, 120 µm, 130 µm, 135 µm, 150 µm, etc. The maximum particle diameter of the positive electrode current collector impurity may also be selected from any one of the following ranges: 20 µm to 150 µm, 30 µm to 150 µm, 35 µm to 150 µm, 40 µm to 150 µm, 50 µm to 150 µm, ≤ 100 µm, 10 µm to 100 µm, 20 µm to 100 µm, 30 µm to 100 µm, 35 µm to 100 µm, 40 µm to 100 µm, 50 µm to 100 µm, ≤ 120 µm, 10 µm to 120 µm, 20 µm to 120 µm, 30 µm to 120 µm, 35 µm to 120 µm, 40 µm to 120 µm, 50 µm to 120 µm, etc.

In the present application, for the test and analysis method for the "maximum particle diameter of the positive electrode current collector impurity", reference may be made to the foregoing test and analysis method for the maximum particle diameter of the positive electrode current collector particle.

In the present application, unless otherwise specified, the particles that can pass through the sieve are collected in the "sieving treatment".

Based on any suitable embodiment in the present application, in still some embodiments, the first sieving uses a sieve of at least one mesh size between 80-400 mesh; that is, the first sieving uses a sieve of at least one mesh size between 80 mesh and 400 mesh.

Based on any suitable embodiment in the present application, in still some embodiments, the second sieving uses a sieve of at least one mesh size between 80-400 mesh; that is, the second sieving uses a sieve of at least one mesh size between 80 mesh and 400 mesh.

Based on any suitable embodiment in the present application, in still some embodiments, the Dᵥ50 of the material obtained by crushing the calcined recycled positive electrode particles is 0.6 µm to 20 µm, and may also be any one of the following particle sizes or selected from an interval composed of any two of the following particle sizes: 0.6 µm, 0.8 µm, 1 µm, 1.2 µm, 1.5 µm, 1.6 µm, 1.8 µm, 2 µm, 3 µm, 4 µm, 5 µm, 6 µm, 7 µm, 8 µm, 9 µm, 10 µm, 12 µm, 14 µm, 15 µm, 16 µm, 18 µm, 20 µm, etc. The Dᵥ50 of the material obtained by crushing the calcined recycled positive electrode particles may also be selected from any one of the following ranges: 1 µm to 20 µm, 0.6 µm to 16 µm, 1 µm to 16 µm, 0.6 µm to 15 µm, 1 µm to 15 µm, 0.6 µm to 14 µm, 1 µm to 14 µm, etc.

Based on any suitable embodiment in the present application, in still some embodiments, the Dᵥ50 of the recycled positive electrode active substance stock is 0.6 µm to 20 µm, and may also be any one of the following particle sizes or selected from an interval composed of any two of the following particle sizes: 0.6 µm, 0.8 µm, 1 µm, 1.2 µm, 1.5 µm, 1.6 µm, 1.8 µm, 2 µm, 3 µm, 4 µm, 5 µm, 6 µm, 7 µm, 8 µm, 9 µm, 10 µm, 12 µm, 14 µm, 15 µm, 16 µm, 18 µm, 20 µm, etc. The Dᵥ50 of the recycled positive electrode active substance stock may also be selected from any one of the following ranges: 1 µm to 20 µm, 0.6 µm to 16 µm, 1 µm to 16 µm, 0.6 µm to 15 µm, 1 µm to 15 µm, 0.6 µm to 14 µm, 1 µm to 14 µm, etc.

Based on any suitable embodiment in the present application, in still some embodiments, the Dᵥ99 of the recycled positive electrode active substance stock is ≤ 50 µm. Without limitation, the Dᵥ99 of the recycled positive electrode active substance stock may be any one of the following particle sizes, or less than or equal to any one of the following particle sizes, or selected from an interval composed of any two of the following particle sizes: 30 µm, 35 µm, 40 µm, 45 µm, 50 µm, etc. The Dᵥ99 of the recycled positive electrode active substance stock may also be selected from an interval composed of any two of the following particle sizes: 7.5 µm, 8 µm, 10 µm, 15 µm, 20 µm, 25 µm, 30 µm, 35 µm, 40 µm, 45 µm, 50 µm, etc. The Dᵥ99 of the recycled positive electrode active substance stock may also be selected from any one of the following ranges: 7.5 µm to 50 µm, 7.5 µm to 40 µm, 7.5 µm to 30 µm, 8 µm to 50 µm, 8 µm to 40 µm, 8 µm to 30 µm, etc.

In the context of the present application, the particle size of the material may be characterized by a cumulative volume distribution particle size DᵥN (where N represents any numerical value selected from 0-100), which refers to a particle size at which the cumulative volume distribution percentage of the material reaches N%, and the volume percentage of particles with a particle size less than or equal to DᵥN is N%. The DᵥN can be obtained from the cumulative volume distribution curve of the particle size of the material. Unless otherwise specified, the cumulative volume distribution curve starts accumulating from zero on the small particle size side. Dᵥ99 and Dᵥ50 are taken as examples for illustration. In the present application, unless otherwise specified, the Dᵥ99 refers to a particle size at which the cumulative volume distribution percentage of the material reaches 99%, and the parameter represents that the particle size of particles accounting for 99% of the volume of the material is less than or equal to Dᵥ99, and the particle size of particles accounting for 1% of the volume of the material is greater than Dᵥ99. In the present application, unless otherwise specified, the Dᵥ50 refers to a particle size at which the cumulative volume distribution percentage of the material reaches 50%, and the parameter represents that the particle size of particles accounting for 50% of the volume of the material is less than or equal to Dᵥ50, and the particle size of particles accounting for 50% of the volume of the material is greater than Dᵥ50. The meanings of Dᵥ99 and Dᵥ50 can be understood by those skilled in the art, and they can be determined by using instruments and methods well known in the art. For example, this can be conveniently determined by a laser particle size analyzer, such as Mastersizer 2000E laser particle size analyzer from Malvern Instruments Ltd., UK. and LS-909 laser particle size analyzer (OMEC), in accordance with the Particle Size Analysis-Laser Diffraction Methods (GB/T 19077-2016). Further, for example, testing can be performed by using equipment model such as Malvern 2000 (MasterSizer 2000) laser particle size analyzer, with reference to the standard process GB/T 19077-2016/ISO 13320:2009.

Based on any suitable embodiment in the present application, in still some embodiments, the preparation method for the regenerated positive electrode plate satisfies one or more of the following features:
the mass percentage of the positive electrode current collector impurity in the recycled positive electrode active substance stock is 0.01%-1.0% (the mass percentage of the positive electrode current collector impurity in the recycled positive electrode active substance stock may also be selected from any suitable numerical value or range in the context);
the Dᵥ50 of a material obtained by crushing the calcined recycled positive electrode particles is 0.6 µm to 20 µm, where the Dᵥ50 represents a particle size at which the cumulative volume distribution percentage of a multi-particle mixture reaches 50% (the Dᵥ50 of the material obtained by crushing the calcined recycled positive electrode particles may also be selected from any suitable numerical value or range in the context);
the second sieving uses a sieve of at least one mesh size between 80-400 mesh (the mesh size of the sieve used for the second sieving may also be selected from any suitable numerical value or range in the context);
the Dᵥ50 of the recycled positive electrode active substance stock is 0.6 µm to 20 µm (the Dᵥ50 of the recycled positive electrode active substance stock may also be selected from any suitable numerical value or range in the context);
the Dᵥ99 of the recycled positive electrode active substance stock is ≤ 50 µm, where the Dᵥ99 represents a particle size at which the cumulative volume distribution percentage of a multi-particle mixture reaches 99% (the Dᵥ99 of the recycled positive electrode active substance stock may also be selected from any suitable numerical value or range in the context);
the maximum particle diameter of the positive electrode current collector impurity is ≤ 150 µm (the maximum particle diameter of the positive electrode current collector impurity may also be selected from any suitable numerical value or range in the context).

By controlling parameters such as temperature and particle size screening during the process of recycling the positive electrode active substance by a physical method, the particle size and content of the positive electrode current collector impurity in the recycled positive electrode active substance stock can be better controlled, and thus the particle size, content, and distribution of the positive electrode current collector impurity in the positive electrode plate can be better controlled.

In the step of calcining the recycled positive electrode particles left after the first sieving to remove the volatile matter, those skilled in the art can select suitable calcination atmosphere, calcination temperature, and calcination time according to the characteristics of the positive electrode active substance and the volatile matter to be removed. Without limitation, the calcination temperature may be selected from 450 °C to 750 °C, further such as 500 °C to 650 °C and 600 °C to 750 °C. Without limitation, the calcination atmosphere may be nitrogen, oxygen, air, or the like.

Based on any suitable embodiment in the present application, in still some embodiments, the foregoing positive electrode plate provided in the first aspect of the present application and the regenerated positive electrode plate provided in the fourth aspect of the present application may be prepared in the following manner: dispersing the above components for preparing the positive electrode plate, such as the positive electrode active substance, the conductive agent, the binder, and other optional auxiliary agents, in a solvent to form a positive electrode slurry; applying the positive electrode slurry to the surface of at least one side of the positive electrode current collector, and performing drying, cold pressing, and other procedures to obtain the positive electrode plate. The type of the solvent may be selected from, but is not limited to, any one of the foregoing embodiments, for example, N-methylpyrrolidone (NMP). The surface of the positive electrode current collector coated with the positive electrode slurry may be a single surface of the positive electrode current collector, or may be two surfaces of the positive electrode current collector. The surface of the positive electrode current collector coated with the positive electrode slurry may be a single surface of the positive electrode current collector, or may be two surfaces of the positive electrode current collector. The solid content of the positive electrode slurry may be 40 wt% to 80 wt%. The viscosity of the positive electrode slurry at room temperature may be adjusted to 5000 mPa·s to 25,000 mPa·s. As a non-limiting example, when a lithium transition metal oxide having an olivine structure (e.g., lithium iron phosphate) or a modified compound thereof is used as the positive electrode active substance, the compaction density of the prepared positive electrode plate may be 2.2 g/cm³ to 2.7 g/cm³, optionally 2.3 g/cm³ to 2.7 g/cm³. As a non-limiting example, when a ternary material or a modified ternary material is used as the positive electrode active substance, the compaction density of the prepared positive electrode plate may be 3.0 g/cm³ to 3.6 g/cm³, optionally 3.3 g/cm³ to 3.5 g/cm³.

In the present application, wt% represents weight percentage.

In the present application, unless otherwise specified, for any one positive electrode plate and any one negative electrode plate, the area of the electrode plate before and after cold pressing does not change much, and the calculation formula for the corresponding compaction density is as follows: 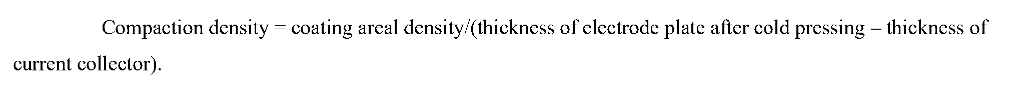 Compaction density = coating areal density/(thickness of electrode plate after cold pressing - thickness of current collector).$Coating areal density = dry weight of slurry / area of electrode plate before cold pressing .$

Without limitation, for the positive electrode active material layer with a double-layer structure, a double-sided, double-chamber coater may be used to complete one-pass coating, or a common transfer coater may be used to perform the coating in two steps.

In a fifth aspect of the present application, a preparation method for a regenerated negative electrode plate is provided. The preparation method includes the following steps:
providing a recycled negative electrode plate;
crushing the recycled negative electrode plate, performing winnowing, classification or water washing, and pressure filtration, drying to obtain recycled negative electrode particles, carbonizing the recycled negative electrode particles to remove a volatile matter, demagnetizing the carbonized recycled negative electrode particles, sieving, and collecting solids with a target particle size to obtain recycled negative electrode active substance stock, where the recycled negative electrode active substance stock contains a negative electrode current collector impurity;
applying a first negative electrode slurry including the recycled negative electrode active substance stock to at least one side of a negative electrode current collector, and drying to form a negative electrode active lower layer; and
applying a second negative electrode slurry to a side of the negative electrode active lower layer distal to the negative electrode current collector, drying, and cold pressing to prepare the regenerated negative electrode plate, where the regenerated negative electrode plate is the negative electrode plate defined in the first aspect of the present application.

The negative electrode plate in the first aspect of the present application may be a regenerated negative electrode plate prepared by using recycled negative electrode active substance stock recycled by a physical method as the raw material. The negative electrode current collector impurity in the recycled negative electrode active substance stock is converted into the negative electrode current collector particle in the regenerated negative electrode plate. In the preparation process, the negative electrode active lower layer corresponds to the first negative electrode active material layer.

For the size of the negative electrode current collector impurity involved in the preparation method for the regenerated negative electrode plate, reference may be made to the size of the negative electrode current collector particle in the negative electrode plate described above, and for the content of the size of the negative electrode current collector impurity in the recycled negative electrode active substance stock, reference may be made to the relative content of the mass of the negative electrode current collector particle relative to the sum of the mass of the negative electrode current collector particle and the mass of the first negative electrode active substance described above.

Based on any suitable embodiment in the present application, in still some embodiments, the mass percentage of the negative electrode current collector impurity in the recycled negative electrode active substance stock is ≤ 0.5%, optionally 0.001%-0.5%, further optionally 0.005%-0.5%, still further optionally 0.005%-0.4%, and even further optionally 0.01%-0.35%. The mass percentage of the negative electrode current collector impurity in the recycled negative electrode active substance stock may also be selected from any one of the following percentages, or selected from an interval composed of any two of the following percentages: 0.001%, 0.005%, 0.01%, 0.02%, 0.03%, 0.04%, 0.05%, 0.055%, 0.06%, 0.065%, 0.07%, 0.075%, 0.08%, 0.085%, 0.09%, 0.095%, 0.1%, 0.15%, 0.2%, 0.25%, 0.3%, 0.35%, 0.4%, 0.45%, 0.5%, etc. Without limitation, the mass percentage of the negative electrode current collector impurity in the recycled negative electrode active substance stock may be less than or equal to any one of the following percentages: 0.2%, 0.25%, 0.3%, 0.35%, 0.4%, 0.45%, 0.5%, etc. In some embodiments, the mass percentage of the negative electrode current collector impurity in the recycled negative electrode active substance stock may be selected from any one of the following ranges: 0.01%-0.15% (100 ppm to 1500 ppm), 0.01%-0.5%, 0.02%-0.5%, 0.02%-0.4%, 0.02%-0.35%, 0.05%-0.5%, 0.05%-0.4%, 0.05%-0.35%, 0.08%-0.5%, 0.08%-0.4%, 0.08%-0.35%, etc.

In the present application, different features of the mass percentages of the negative electrode current collector impurity in the recycled negative electrode active substance stock may be combined in any suitable manner. For example, features of ≥ 0.08%, ≥ 0.06%, ≥ 0.05%, ≥ 0.04%, ≥ 0.03%, ≥ 0.02%, ≥ 0.015%, ≥ 0.01%, ≥ 0.005%, ≥ 0.001%, etc., may be combined with features of ≤ 0.2%, ≤ 0.25%, ≤ 0.3%, ≤ 0.35%, ≤ 0.4%, ≤ 0.45%, ≤ 0.5%, etc., in any suitable manner.

Based on any suitable embodiment in the present application, in still some embodiments, the maximum particle diameter of the negative electrode current collector impurity is ≤ 120 µm, optionally ≤ 100 µm. The maximum particle diameter of the negative electrode current collector impurity may also be any one of the following sizes or selected from an interval composed of any two of the following sizes: 20 µm, 30 µm, 40 µm, 50 µm, 60 µm, 70 µm, 80 µm, 90 µm, 100 µm, 120 µm, etc. The maximum particle diameter of the negative electrode current collector impurity may also be selected from any one of the following ranges: 30 µm to 120 µm, 40 µm to 120 µm, 50 µm to 120 µm, 30 µm to 110 µm, 40 µm to 110 µm, 50 µm to 110 µm, 30 µm to 100 µm, 40 µm to 100 µm, 50 µm to 100 µm, 30 µm to 95 µm, 40 µm to 95 µm, 30 µm to 90 µm, 40 µm to 90 µm, etc.

In the present application, for the test and analysis method for the "maximum particle diameter of the negative electrode current collector impurity", reference may be made to the foregoing test and analysis method for the maximum particle diameter of the negative electrode current collector particle.

Based on any suitable embodiment in the present application, in still some embodiments, in the step of "demagnetizing the carbonized recycled negative electrode particles and sieving", the sieving uses a sieve of at least one mesh size between 200-400 mesh; that is, the sieving uses a sieve of at least one mesh size between 200 mesh and 400 mesh.

Based on any suitable embodiment in the present application, in still some embodiments, the Dᵥ50 of the recycled negative electrode particle is 10 µm to 30 µm, and may also be any one of the following particle sizes or selected from an interval composed of any two of the following particle sizes: 10 µm, 12 µm, 15 µm, 16 µm, 18 µm, 20 µm, 25 µm, 30 µm, etc. The Dᵥ50 of the recycled negative electrode particle may also be selected from any one of the following ranges: 10 µm to 25 µm, 10 µm to 20 µm, 12 µm to 25 µm, 12 µm to 20 µm, 15 µm to 25 µm, 15 µm to 20 µm, etc.

Based on any suitable embodiment in the present application, in still some embodiments, the Dᵥ50 of the recycled negative electrode active substance stock is 8 µm to 25 µm, and may also be any one of the following particle sizes or selected from an interval composed of any two of the following particle sizes: 8 µm, 9 µm, 10 µm, 12 µm, 15 µm, 16 µm, 18 µm, 20 µm, 25 µm, etc. The Dᵥ50 of the recycled negative electrode active substance stock may also be selected from any one of the following ranges: 10 µm to 25 µm, 10 µm to 20 µm, 12 µm to 25 µm, 12 µm to 20 µm, 15 µm to 25 µm, 15 µm to 20 µm, etc.

Based on any suitable embodiment in the present application, in still some embodiments, the Dᵥ99 of the recycled negative electrode active substance stock is ≤ 120 µm, optionally ≤ 100 µm. The Dᵥ99 of the recycled negative electrode active substance stock may also be any one of the following sizes or selected from an interval composed of any two of the following sizes: 10 µm, 20 µm, 30 µm, 40 µm, 50 µm, 60 µm, 70 µm, 80 µm, 90 µm, 100 µm, 110 µm, 120 µm, etc. The Dᵥ99 of the recycled negative electrode active substance stock may also be less than or equal to any one of the following sizes: 100 µm, 110 µm, 120 µm, etc. The Dᵥ99 of the recycled negative electrode active substance stock may also be selected from any one of the following ranges: 50 µm to 120 µm, 50 µm to 115 µm, 50 µm to 110 µm, 50 µm to 100 µm, 45 µm to 120 µm, 45 µm to 115 µm, 45 µm to 110 µm, 45 µm to 100 µm, 40 µm to 120 µm, 40 µm to 115 µm, 40 µm to 110 µm, 40 µm to 100 µm, 10 µm to 120 µm, 10 µm to 115 µm, 10 µm to 110 µm, 10 µm to 100 µm, 20 µm to 120 µm, 20 µm to 115 µm, 20 µm to 110 µm, 20 µm to 100 µm, etc.

Based on any suitable embodiment in the present application, in still some embodiments, the preparation method for the regenerated negative electrode plate satisfies one or more of the following features:
the mass percentage of the negative electrode current collector impurity in the recycled negative electrode active substance stock is 0.001%-0.5% (the mass percentage of the negative electrode current collector impurity in the recycled negative electrode active substance stock may also be selected from any suitable numerical value or range in the context);
the Dᵥ50 of the recycled negative electrode particle is 10 µm to 30 µm, where the Dᵥ50 represents a particle size at which the cumulative volume distribution percentage of a multi-particle mixture reaches 50% (the Dᵥ50 of the recycled negative electrode particle may also be selected from any suitable numerical value or range in the context);
the sieving uses a sieve of at least one mesh size between 200-400 mesh (the mesh size of the sieve used for the sieving may also be selected from any suitable numerical value or range in the context);
the Dᵥ50 of the recycled negative electrode active substance stock is 8 µm to 25 µm (the Dᵥ50 of the recycled negative electrode active substance stock may also be selected from any suitable numerical value or range in the context);
the Dᵥ99 of the recycled negative electrode active substance stock is ≤ 120 µm, where the Dᵥ99 represents a particle size at which the cumulative volume distribution percentage of a multi-particle mixture reaches 99% (the Dᵥ99 of the recycled negative electrode active substance stock may also be selected from any suitable numerical value or range in the context);
the maximum particle diameter of the negative electrode current collector impurity is ≤ 120 µm (the maximum particle diameter of the negative electrode current collector impurity may also be selected from any suitable numerical value or range in the context).

By controlling parameters such as temperature and particle size screening during the process of recycling the negative electrode active substance by a physical method, the particle size and content of the negative electrode current collector impurity in the recycled negative electrode active substance stock can be better controlled, and thus the particle size, content, and distribution of the negative electrode current collector impurity in the negative electrode plate can be better controlled.

Based on any suitable embodiment in the present application, in still some embodiments, the foregoing negative electrode plate provided in the first aspect of the present application and the regenerated negative electrode plate provided in the fifth aspect of the present application may be prepared in the following manner: dispersing the components for preparing the negative electrode plate, such as the negative electrode active substance, the conductive agent, the binder, and other optional auxiliary agents, in a solvent (a non-limiting example of the solvent is, e.g., deionized water) to form a negative electrode slurry; applying the negative electrode slurry to the surface of at least one side of the negative electrode current collector, and performing drying, cold pressing, and other procedures to obtain the negative electrode plate. The surface of the negative electrode current collector coated with the negative electrode slurry may be a single surface of the negative electrode current collector, or may be two surfaces of the negative electrode current collector. The solid content of the negative electrode slurry may be 30 wt% to 70 wt%, further optionally 40 wt% to 60 wt%. The viscosity of the negative electrode slurry at room temperature may be adjusted to 2000 mPa·s to 10,000 mPa·s. When the negative electrode slurry is applied, the areal loading on a dry basis (excluding the solvent) may be 75 g/m² to 220 g/m². The compaction density of the negative electrode plate may be 1.0 g/cm³ to 2.0 g/cm³, further optionally 1.2 g/cm³to 2.0 g/cm³, or 1.0 g/cm³ to 1.8 g/cm³.

In the step of carbonizing the recycled negative electrode particles to remove the volatile matter, those skilled in the art can select suitable carbonization atmosphere, carbonization temperature, and carbonization time according to the characteristics of the negative electrode active substance and the volatile matter to be removed. Without limitation, the carbonization atmosphere may be nitrogen. Without limitation, the carbonization temperature may be 1000 °C to 1300 °C. Without limitation, the carbonization time may be 1 h to 3 h.

Without limitation, for the negative electrode active material layer with a double-layer structure, a double-sided, double-chamber coater may be used to complete one-pass coating, or a common transfer coater may be used to perform the coating in two steps.

In a sixth aspect of the present application, a reusing method for a waste electrode plate is provided. The method includes the following steps:
obtaining at least one of a recycled positive electrode plate and a recycled negative electrode plate, where sources of the recycled positive electrode plate and the recycled negative electrode plate each independently include at least one of the following sources: a recycled plate obtained by disassembling a waste secondary battery and an intermediate product in a secondary battery production process, where the intermediate product includes at least one of an electrode plate before cold pressing and an electrode plate after cold pressing;
providing an electrode assembly, where the electrode assembly includes at least one of a regenerated positive electrode plate and a regenerated negative electrode plate, the regenerated positive electrode plate is prepared by using the preparation method described in the fourth aspect of the present application, and the regenerated negative electrode plate is prepared by using the preparation method described in the fifth aspect of the present application; and
preparing a regenerated secondary battery by using the electrode assembly.

Based on the electrode plate technology provided by the first aspect, the use of the recycled active substance stock containing the current collector impurity in the electrode plate is possible, such that the source of raw materials for electrode plates can be expanded, the utilization rate of raw materials can be improved, and the cost can be reduced; the active substance can be recycled from the waste electrode plate by a physical method, which is beneficial for reducing environmental pollution. The electrode plate may be a positive electrode plate incorporating the positive electrode current collector impurity, or may be a negative electrode plate incorporating the negative electrode current collector impurity, or may be a combination of the two electrode plates.

When at least one recycled electrode plate of a recycled positive electrode plate and a recycled negative electrode plate is obtained by disassembling a waste secondary battery, a reusing method for a waste secondary battery is also provided.

Hereinafter, some examples of the present application are described. The examples described below are illustrative and merely used to explain the present application, and they should not be construed as limiting the present application. The examples without techniques or conditions specified therein are implemented according to the above description, or according to techniques or conditions described in the literature in the art, or according to product instructions. Reagents or instruments used herein without specified manufacturers are all commercially available conventional products or can be synthesized in a conventional manner from commercially available products.

In the examples below, the room temperature refers to 20 °C to 30 °C.

For the recycled positive electrode active substance stock involved in the examples below, an Oxford energy dispersive spectroscopy (OXFORD EDS) can be used for testing its chemical components, and an inductively coupled plasma optical emission spectrometer (ICAP7400) can be used to test and analyze the content of impurity therein, including the components and content of the positive electrode current collector impurity. The Dᵥ50 values of the material obtained by crushing the calcined recycled positive electrode particles all satisfy 0.6 µm to 20 µm.

For the recycled negative electrode active substance stock involved in the examples below, an inductively coupled plasma optical emission spectrometer (ICAP7400) can be used to test and analyze its chemical components and obtain the content of impurity therein, including the components and content of the negative electrode current collector impurity. The Dᵥ50 values of the recycled negative electrode particles all satisfy 8 µm to 25 µm.

In each of the examples below, an electrode plate whose positive electrode active substance type or negative electrode active substance type is known is used as the recycled plate. However, it can be understood that similar processing can also be performed for an electrode plate whose active substance type is unknown. After the type of the active substance is determined through component assay, whether the active substance can be used is determined according to the material requirements of the regenerated positive electrode plate or the regenerated negative electrode plate.

### I. Preparation of Recycled Positive Electrode Active Substance Stock and Recycled Negative Electrode Active Substance Stock

### (I) Preparation of recycled stock

### 1. Preparation of recycled positive electrode active substance stock 1-7 (abbreviated as recycled positive electrode stock 1-7)

Obtaining of recycled positive electrode plate (using a positive electrode plate whose positive electrode active substance type was known as a recycled plate): A waste cell with no electrolytic solution injected was disassembled, and the positive electrode plate, the negative electrode plate, and the separator were separated, thus obtaining the recycled positive electrode plate.

Preparation method for recycled positive electrode active substance stock: the recycled positive electrode plate was crushed, a first sieving was performed, and the recycled positive electrode particles left after the first sieving were calcined at 500 °C to 750 °C to remove a volatile matter; the calcined recycled positive electrode particles were subjected to crushing, a second sieving, and demagnetizing, thus obtaining the recycled positive electrode active substance stock with a Dᵥ50 of 0.6 µm to 20 µm. For the mesh size of the sieve used for the two sievings, see Table 1.

Characterization results: See Table 1 for the following information of the recycled positive electrode active substance stock 1-7: the components of the positive electrode active substance, the type of positive electrode current collector impurity (all taking the aluminum-based particle as an example), the content of Al in the aluminum-based particle, the mass percentage of the current collector impurity in the recycled positive electrode active substance stock, the maximum particle size of the positive electrode current collector impurity, and the Dᵥ99 and Dᵥ50 of the recycled positive electrode active substance stock.

Taking the recycled positive electrode active substance stock 1 as an example, the calcination atmosphere was nitrogen, the calcination temperature was 550 °C, the calcination time was about 5 h, the positive electrode active substance is lithium iron phosphate, the mass percentage of the current collector impurity in the recycled stock was 0.65%, the current collector impurity was the aluminum-based particle, the aluminum-based component was aluminum, the aluminum-based body was aluminum, the mass percentage of the aluminum-based component in the aluminum-based body was 100%, and the mass content of Al in the aluminum-based particle was 75%. The Dᵥ99 and Dᵥ50 of the recycled positive electrode active substance stock were 8.5 µm and 1.3 µm, respectively, and the maximum particle diameter of the positive electrode current collector impurity was 85 µm.

### 2. Preparation of recycled negative electrode active substance stock 1-7 (abbreviated as recycled negative electrode stock 1-7)

Obtaining of recycled negative electrode plate (a negative electrode plate prepared by using a selected negative electrode active substance was used as a recycled plate): Obtaining of recycled negative electrode plate (using a negative electrode plate whose positive electrode active substance type was known as a recycled plate): A waste cell with no electrolytic solution injected was disassembled, and the positive electrode plate, the negative electrode plate, and the separator were separated, thus obtaining the recycled negative electrode plate.

A method for recycled negative electrode active substance stock: The recycled negative electrode plate was crushed, winnowing, classification or water washing, and pressure filtration were performed, and the resulting substance was dried to obtain recycled negative electrode particles; the recycled negative electrode particles were carbonized to remove a volatile matter, the carbonized recycled negative electrode particles were demagnetized and sieved, and solids with a target particle size were collected to obtain the recycled negative electrode active substance stock, where the recycled negative electrode active substance stock contained a negative electrode current collector impurity. The lightweight particles had been removed by winnowing, classification, water washing, etc., before sieving.

Characterization results: See Table 1 for the following information of the recycled negative electrode active substance stock 1-7: the components of the negative electrode active substance, the mass percentage of the current collector impurity in the recycled negative electrode active substance stock, the type of the negative electrode current collector impurity (all taking the copper-based particle as an example), the content of Cu in the copper-based particle, the Dᵥ99 and Dᵥ50 of the recycled negative electrode active substance stock, and the maximum particle diameter of the negative electrode current collector impurity.

Taking the recycled negative electrode active substance stock 1 as an example: the carbonization atmosphere was nitrogen atmosphere, the carbonization temperature was 1150 °C, the carbonization time was 2 h, the negative electrode active substance was pure artificial graphite, the mass percentage of the current collector impurity in the recycled stock was 0.15%, the current collector impurity was the copper-based particle, the copper-based component was copper, the copper-based body was copper, the mass percentage of the copper-based component in the copper-based body was 100%, and the mass content of Cu in the copper-based particle was 90%. The Dᵥ99 and Dᵥ50 of the recycled stock were 65 µm and 15 µm, respectively. The maximum particle diameter of the current collector impurity was 50 µm.

### (II) Test and analysis method

### 1. Component analysis of current collector impurity

### 1.1. Component analysis of positive electrode current collector impurity

The positive electrode current collector impurity in the recycled positive electrode active substance stock 1-7 was the aluminum-based particle. An Oxford energy dispersive spectroscopy (OXFORD EDS) was used for testing, thus obtaining the content of Al in the aluminum-based particle.

### 1.2. Test for content of negative electrode current collector impurity in recycled negative electrode active substance stock

The negative electrode current collector particles in the recycled negative electrode active substance stock 1-7 were all copper-based particles.

An inductively coupled plasma optical emission spectrometer (ICAP7400) was used for testing, thus obtaining the Cu content in the copper-based particle. See Table 1.

### 2. Analysis of content of current collector impurity in recycled active substance stock

### 2.1. Test for content of positive electrode current collector impurity in recycled positive electrode active substance stock

The content of the impurity element in the recycled positive electrode active substance stock was tested by an inductively coupled plasma optical emission spectrometer, thus obtaining the content of Al in the recycled positive electrode active substance stock of each example. The element Al was mainly derived from the current collector impurity.

### 2.2. Test for content of negative electrode current collector impurity in recycled negative electrode active substance stock

The content of the impurity element in the recycled negative electrode active substance stock was tested by an inductively coupled plasma optical emission spectrometer, thus obtaining the content of Cu in the recycled negative electrode active substance stock of each example. The element Cu was mainly derived from the current collector impurity.

### 3. Particle size test method

Types of particle sizes: tests for Dᵥ50 and Dᵥ99 of the recycled positive electrode active substance stock; tests for Dᵥ50 and Dᵥ99 of the recycled negative electrode active substance stock.

Equipment model: Malvern 2000 (MasterSizer 2000) laser particle size analyzer, with reference to the standard process: GB/T 19077-2016/ISO 13320:2009.

3.1. Particle size test process of recycled positive electrode active substance stock: A proper amount of a sample to be tested (ensuring a sample concentration that provides 8%-12% obscuration) was added to 20 mL of absolute ethanol, the mixture was subjected to ultrasonication (53 KHz/120 W) for 5 min to ensure complete dispersion of the sample, and then the sample was measured according to the GB/T 19077-2016/ISO 13320:2009 standard.

### 3.2. Particle size test process of recycled negative electrode active substance stock:

A proper amount of a sample to be tested (ensuring a sample concentration that provides 8%-12% obscuration) was added to 20 mL of water, sodium carboxymethylcellulose was then added, the mixture was subjected to ultrasonication (53 KHz/120 W) for 5 min to ensure complete dispersion of the sample, and then the sample was measured according to the GB/T 19077-2016/ISO 13320:2009 standard.

Standard referred to: GB/T 19077-2016/ISO 13320:2009 particle size distribution laser diffraction method; test equipment: Malvern laser particle size analyzer Master Size 3000.

**Table 1. Summary of parameters of recycled positive electrode active substance stock and recycled negative electrode active substance stock**

| Recycled positive electrode active substance stock | Process conditions | First positive electrode active substance | Mass percentage of Al in positive electrode current collector impurity | Mass percentage of positive electrode current collector impurity in recycled positive electrode active substance stock (wt%) | Maximum particle diameter of positive electrode current collector impurity (µm) | Dᵥ99 of recycled positive electrode active substance stock (µm) | Dᵥ50 of recycled positive electrode active substance stock (µm) |
|---|---|---|---|---|---|---|---|
| Recycled positive electrode stock 1 | Sieve mesh size 150 | Lithium iron phosphate | Content of aluminum 75% | 0.65 | 85 | 8.5 | 1.3 |
| Recycled positive electrode stock 2 | Sieve mesh size 150 | LiMn_{0.6}Fe_{0.4}PO₄ | Content of aluminum 80% | 0.68 | 92 | 7.9 | 1.4 |
| Recycled positive electrode stock 3 | Sieve mesh size 300 | LiNi_{0.5}Co_{0.2}Mn_{0.3}O₂ | Content of aluminum 70% | 0.44 | 40 | 28.4 | 12.5 |
| Recycled positive electrode stock 4 | Sieve mesh size 300 | LiNi_{0.89}Co_{0.07}Mn_{0.03}Al_{0.01}O₂ | Content of aluminum 85% | 0.42 | 45 | 25.2 | 12 |
| Recycled positive electrode stock 5 | Sieve mesh size 80 | Lithium iron phosphate | Content of aluminum 75% | 0.90 | 135 | 8.9 | 1.3 |
| Recycled positive electrode stock 6 | Sieve mesh size 100 | Lithium iron phosphate | Content of aluminum 74% | 0.82 | 110 | 8.6 | 1.3 |
| Recycled positive electrode stock 7 | Sieve mesh size 100 + adjusted air jet milling | Lithium iron phosphate | Content of aluminum 82% | 0.55 | 59 | 8.5 | 1.2 |

| Recycled negative electrode active substance stock | Sieve mesh size | First negative electrode active substance | Mass percentage of Cu in negative electrode current collector impurity | Mass percentage of negative electrode current collector impurity in recycled negative electrode active substance stock | Maximum particle diameter of negative electrode current collector impurity (µm) | Dᵥ99 (µm) of recycled negative electrode active substance stock | Dᵥ50 (µm) of recycled negative electrode active substance stock |
|---|---|---|---|---|---|---|---|
| Recycled negative electrode stock 1 | 200-mesh sieve | Pure artificial graphite | Content of copper 89% | 0.15 | 50 | 65 | 15 |
| Recycled negative electrode stock 2 | 200-mesh sieve | Artificial graphite + natural graphite (mass ratio: 7:3) | Content of copper 90% | 0.15 | 50 | 70 | 18 |
| Recycled negative electrode stock 3 | 200-mesh sieve | Silicon oxide + artificial graphite (mass ratio: 5%:95%) | Content of copper 91% | 0.15 | 50 | 62 | 15 |
| Recycled negative electrode stock 4 | 200-mesh sieve | Silicon-carbon composite + artificial graphite (mass ratio: 5%:95%) | Content of copper 91% | 0.15 | 50 | 60 | 15 |
| Recycled negative electrode stock 5 | 100-mesh sieve (150 µm) | Pure artificial graphite | Content of copper 93% | 0.25 | 95 | 100 | 20 |
| Recycled negative electrode stock 6 | 300-mesh sieve (48 µm) | Pure artificial graphite | Content of copper 88% | 0.10 | 45 | 48 | 14 |
| Recycled negative electrode stock 7 | 300-mesh sieve + crushing followed by air classification with adjusted airflow | Pure artificial graphite | Content of copper 88% | 0.08 | 34 | 50 | 15 |

### II. Preparation of Electrode Plate and Secondary Battery

### (I) Description of preparation parameters

### Coating areal density and compaction density

The "compaction density" used in the present application has a well-known meaning in the art and is one of the reference indicators for the energy density of materials. In the present application, unless otherwise specified, the compaction density of the electrode plate refers to the ratio of the mass of the active material layer to the volume thereof. The compaction density of the positive electrode plate refers to the ratio of the mass of the positive electrode active material layer to the volume thereof, and the compaction density of the negative electrode plate refers to the ratio of the mass of the negative electrode active material layer to the volume thereof. It can be obtained by testing using a conventional method in the art. There is little change in the area of the electrode plate before and after cold pressing. 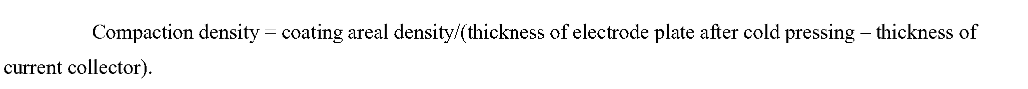 Compaction density = coating areal density/(thickness of electrode plate after cold pressing - thickness of current collector). $Coating areal density = dry weight of slurry / area of electrode plate before cold pressing .$

### (II) Using recycled positive electrode active substance stock in positive electrode plate

The type of a first positive electrode active substance in recycled positive electrode active substance stock used in a first positive electrode slurry was the same as the type of a second positive electrode active substance in a second positive electrode slurry (for example, both were lithium iron phosphate, or for example, both were lithium nickel cobalt manganate ternary materials or modified materials thereof, which might be doping and/or coating modification), and the atomic molar ratio of the constituent elements of the first positive electrode active substance was allowed to be different from that of the second positive electrode active substance. The first positive electrode slurry included a positive electrode current collector impurity, and the second positive electrode slurry might include no positive electrode current collector impurity or only a small amount of positive electrode current collector impurity. The presence of the positive electrode current collector impurity in the second positive electrode slurry could be achieved by incorporating a certain amount of recycled positive electrode active substance stock. In the examples below, unless otherwise specified, when the second positive electrode slurry incorporated the recycled positive electrode active substance stock, the recycled positive electrode active substance stock in the first positive electrode slurry was used.

### 2.1. Example P1

In this example, the first positive electrode active substance was derived from electrode plate recycling, the first positive electrode active material layer contained the positive electrode current collector impurity, and the type of the second positive electrode active substance was the same as that of the first positive electrode active substance, but the second positive electrode active material layer did not contain the positive electrode current collector impurity.

### 1) Preparation of first positive electrode slurry

The recycled positive electrode active substance stock 1 was used, where the positive electrode active substance therein was used as the first positive electrode active substance, and the positive electrode current collector impurity therein became the positive electrode current collector particle in the active material layer.

96 wt% of recycled positive electrode active substance stock 1 (the first positive electrode active substance was lithium iron phosphate containing an aluminum-based particle, and the content of Al was 75 wt%), 1.5 wt% of a conductive agent (conductive carbon black), and 2.5 wt% of a binder (polyvinylidene fluoride) were mixed, and then N-methylpyrrolidone was added. The resulting mixture was stirred and dispersed to prepare the first positive electrode slurry for preparing a first positive electrode active material layer.

### 2) Preparation of second positive electrode slurry

96 wt% of a second positive electrode active substance lithium iron phosphate, 1.5 wt% of a conductive agent (conductive carbon black), and 2.5wt% of a binder (polyvinylidene fluoride) were mixed, and then N-methylpyrrolidone was added. The resulting mixture was stirred and dispersed to prepare the second positive electrode slurry for preparing a second positive electrode active material layer.

### 3) Preparation of positive electrode plate

After the two prepared oil-based slurries were each stirred, the viscosity of each slurry was adjusted to 8000 mPa.s to 20,000 mPa.s, such that the prepared slurry was non-stratifying. Then, the first positive electrode slurry and the second positive electrode slurry were applied at preset positions of an Al foil in one-pass coating by using a double-sided, double-chamber coating device, where the first positive electrode slurry was located at a lower layer, and the second positive electrode slurry was located at an upper layer. After the double-sided coating was completed, drying, cold pressing, and slitting were performed to obtain the positive electrode plate. The compaction density was 2.35 g/cm³.

### 4) Preparation of negative electrode plate

95.5 wt% of a negative electrode active material (artificial graphite), 1.0 wt% of a conductive agent (conductive carbon black), 2.0 wt% of a binder (styrene-butadiene rubber (SBR)), and 1.5 wt% of a thickener (sodium carboxymethylcellulose) were mixed, and then deionized water was added. The resulting mixture was stirred and dispersed to prepare a negative electrode slurry. Then, the negative electrode slurry was applied to the surfaces on both sides of a Cu foil. After both sides were coated, drying, cold pressing, slitting, and tab forming were performed to obtain the negative electrode plate. The compaction density was 1.65 g/cm³. The single-side thickness of the negative electrode active material layer was about 110 µm.

### 5) Preparation of electrolytic solution

The electrolytic solution was a lithium hexafluorophosphate solution. The electrolyte lithium salt was 1.0 mol/L lithium hexafluorophosphate (LiPF₆), and the solvents were EC (ethylene carbonate) and DMC (dimethyl carbonate) in a volume ratio of 1:1.

### 6) Selection of separator

Celgard2400 polypropylene porous film was selected.

### 7) Assembly of secondary battery

The positive electrode plate, the separator, and the negative electrode plate were stacked in sequence to enable the separator to be located between the positive electrode and the negative electrode for isolation, and the stack was then wound to obtain a bare cell. The bare cell was disposed in an outer packaging, and the prepared electrolytic solution was injected, followed by packaging, injection of electrolytic solution, formation, degassing, and other procedures, and a lithium-ion secondary battery was obtained.

### 2.2. Example P2

The method employed was substantially the same as that in Example P1, except that the method for preparing the positive electrode plate was different, where the recycled positive electrode active substance stock 1 was replaced with recycled positive electrode active substance stock 2 (the first positive electrode active substance was LiMn_{0.6}Fe_{0.4}PO₄ containing an aluminum-based particle, and the content of Al was 80 wt%) in the first positive electrode slurry, and LiMn_{0.6}Fe_{0.4}PO₄ was used instead as the second layer active substance in the second positive electrode slurry. See Table 1 and Table 2.

### 2.3. Example P3

### 1) Preparation of first positive electrode slurry

96 wt% of recycled positive electrode active substance stock 3 (the first positive electrode active substance was LiNi_{0.5}Co_{0.2}Mn_{0.3}O₂ containing an aluminum-based particle, and the content of Al was 70 wt%), 2.6 wt% of a conductive agent (conductive carbon black), and 1.4 wt% of a binder (polyvinylidene fluoride) were mixed, and then N-methylpyrrolidone was added. The resulting mixture was stirred and dispersed to prepare the first positive electrode slurry for preparing a first positive electrode active material layer. See Table 1 and Table 2.

### 2) Preparation of second positive electrode slurry

96 wt% of a second positive electrode active substance LiNi_{0.5}Co_{0.2}Mn_{0.3}O₂, 2.6 wt% of a conductive agent (conductive carbon black), and 1.4 wt% of a binder (polyvinylidene fluoride) were mixed, and then N-methylpyrrolidone was added. The resulting mixture was stirred and dispersed to prepare the second positive electrode slurry for preparing a second positive electrode active material layer.

### 3) Preparation of positive electrode plate

After the two prepared oil-based slurries were each stirred, the viscosity of each slurry was adjusted to 3000 mPa.s to 8000 mPa.s, such that the prepared slurry was non-stratifying. Then, the first positive electrode slurry and the second positive electrode slurry were applied at preset positions of an Al foil in one-pass coating by using a double-sided, double-chamber coating device, where the first positive electrode slurry was located at a lower layer, and the second positive electrode slurry was located at an upper layer. After the double-sided coating was completed, drying, cold pressing, and slitting were performed to obtain the positive electrode plate.

### 4) Preparation of negative electrode plate

95.5 wt% of a negative electrode active material (artificial graphite), 1.0 wt% of a conductive agent (conductive carbon black), 2.0 wt% of a binder (styrene-butadiene rubber (SBR)), and 1.5 wt% of a thickener (sodium carboxymethylcellulose) were mixed, and then deionized water was added. The resulting mixture was stirred and dispersed to prepare a negative electrode slurry. Then, the negative electrode slurry was applied to the surfaces on both sides of a Cu foil. After both sides were coated, drying, cold pressing, slitting, and tab forming were performed to obtain the negative electrode plate.

### 5) Preparation of electrolytic solution

The electrolytic solution was a lithium hexafluorophosphate solution. The electrolyte lithium salt was 1.0 mol/L lithium hexafluorophosphate (LiPF₆), and the solvents were EC (ethylene carbonate) and DMC (dimethyl carbonate) in a volume ratio of 1:1.

### 6) Selection of separator

Celgard2400 polypropylene porous film was selected.

### 7) Assembly of secondary battery

The positive electrode plate, the separator, and the negative electrode plate were stacked in sequence to enable the separator to be located between the positive electrode and the negative electrode for isolation, and the stack was then wound to obtain a bare cell. The bare cell was disposed in an outer packaging, and the prepared electrolytic solution was injected, followed by packaging, injection of electrolytic solution, formation, degassing, and other procedures, and a lithium-ion secondary battery was obtained.

### 2.4. Example P4

The method employed was substantially the same as that in Example P1, except that the method for preparing the positive electrode plate was different, where the recycled positive electrode active substance stock 1 was replaced with recycled positive electrode active substance stock 4 (the first positive electrode active substance was LiNi_{0.89}Co_{0.07}Mn_{0.03}Al_{0.01}O₂ containing an aluminum-based particle, and the content of aluminum was 85 wt%) in the first positive electrode slurry, and the second positive electrode active substance in the second positive electrode slurry was LiNi_{0.89}Co_{0.07}Mn_{0.03}Al_{0.01}O₂. See Table 1 and Table 2.

### 2.5. Examples P5-P16

The method employed in Examples P5-P16 was substantially the same as that in Example P1, except that the method for preparing the positive electrode plate was different. Reference may be made to Table 1 and Table 2.

The method employed in Example P5 was substantially the same as that in Example P1, except that the method for preparing the positive electrode plate was different, where recycled positive electrode active substance stock 5 was used in the first positive electrode slurry.

The method employed in Example P6 was substantially the same as that in Example P1, except that the method for preparing the positive electrode plate was different, where recycled positive electrode active substance stock 6 was used in the first positive electrode slurry.

The method employed in Example P7 was substantially the same as that in Example P1, except that the method for preparing the positive electrode plate was different, where recycled positive electrode active substance stock 7 was used in the first positive electrode slurry.

The method employed in Example P8 was substantially the same as that in Example P1, except that the method for preparing the positive electrode plate was different, where the recycled positive electrode active substance stock 1 in the first positive electrode slurry was changed to a combination of the recycled positive electrode active substance stock 1 and the second positive electrode active substance in Example P1, where the recycled positive electrode active substance stock 1:the second positive electrode active substance in Example P1 (lithium iron phosphate):conductive carbon black:polyvinylidene fluoride = 76.8%:19.2%:1.5%:2.5%, where the total mass percentage of the recycled positive electrode active substance stock 1 and the second positive electrode active substance in Example P1 in the dry weight of the first positive electrode slurry was 96%. See Table 2.

The method employed in Examples P9 and P10 was substantially the same as that in Example P1, except that the method for preparing the positive electrode plate was different, where the recycled positive electrode active substance stock 1 in the first positive electrode slurry was changed to a combination of the recycled positive electrode active substance stock 1 and the second positive electrode active substance in Example P1. See Table 2.

The method employed in Example P11 was substantially the same as that in Example P1, except that the method for preparing the positive electrode plate was different, where after cold pressing, the thickness of the first active material layer was 95.6 µm, and the thickness of the second active material layer was 6.0 µm. The total thickness of the active material after cold pressing was kept substantially the same as in Example P1. See Table 2.

The method employed in Examples P12-14 was substantially the same as that in Example P1, except that the method for preparing the positive electrode plate was different, where the thicknesses of the first active material layer and the second active material layer after cold pressing were changed. The total thickness of the active material after cold pressing was kept substantially the same as in Example P1. See Table 2.

The method employed in Example P15 was substantially the same as that in Example P1, except that the method for preparing the positive electrode plate was different, where a small amount of the recycled positive electrode active substance stock 1 was added into the second positive electrode slurry, such that the second active material layer contained 0.04 wt% of the positive electrode current collector particle. See Table 2.

The method employed in Example P16 was substantially the same as that in Example P1, except that the method for preparing the positive electrode plate was different, where a small amount of the recycled positive electrode active substance stock 1 was added into the second positive electrode slurry, such that the second active material layer contained 0.01 wt% of the positive electrode current collector particle. See Table 2.

### 2.6. Comparative Examples

In Comparative Examples P1-P8, single-layer coating was performed, and only one positive electrode slurry was used. See Table 1 and Table 2.

### Comparative Example P1:

The method employed was substantially the same as that in Example P1, except that the recycled positive electrode active substance stock 1 was used for single-layer coating. In this comparative example, the compaction density was kept substantially unchanged, and the thickness of the positive electrode active material layer after cold pressing was kept substantially equal to the sum of the thickness of the first positive electrode active material layer and the thickness of the second positive electrode active material layer in Example P1. The positive electrode active material layer included only the first positive electrode active substance in Example P1.

### Comparative Example P2:

The method employed was substantially the same as that in Example P2, except that the recycled positive electrode active substance stock 2 was used for single-layer coating. In this comparative example, the compaction density was kept substantially unchanged, and the thickness of the positive electrode active material layer after cold pressing was kept substantially equal to the sum of the thickness of the first positive electrode active material layer and the thickness of the second positive electrode active material layer in Example P2. The positive electrode active material layer included only the first positive electrode active substance in Example P2.

### Comparative Example P3:

The method employed was substantially the same as that in Example P3, except that the recycled positive electrode active substance stock 3 was used for single-layer coating. In this comparative example, the compaction density was kept substantially unchanged, and the thickness of the positive electrode active material layer after cold pressing was kept substantially equal to the sum of the thickness of the first positive electrode active material layer and the thickness of the second positive electrode active material layer in Example P3. The positive electrode active material layer included only the first positive electrode active substance in Example P3.

### Comparative Example P4:

The method employed was substantially the same as that in Example P4, except that the recycled positive electrode active substance stock 4 was used for single-layer coating. In this comparative example, the compaction density was kept substantially unchanged, and the thickness of the positive electrode active material layer after cold pressing was kept substantially equal to the sum of the thickness of the first positive electrode active material layer and the thickness of the second positive electrode active material layer in Example P4. The positive electrode active material layer included only the first positive electrode active substance in Example P4.

### Comparative Example P5:

The method employed was substantially the same as that in Example P1, except that the second positive electrode slurry 1 in Example P1 was used for single-layer coating. In this comparative example, the compaction density was kept substantially unchanged, and the thickness of the positive electrode active material layer after cold pressing was kept substantially equal to the sum of the thickness of the first positive electrode active material layer and the thickness of the second positive electrode active material layer in Example P1. The positive electrode active material layer included only the second positive electrode active substance in Example P1.

### Comparative Example P6:

The method employed was substantially the same as that in Example P2, except that the second positive electrode slurry 2 in Example P2 was used for single-layer coating. In this comparative example, the compaction density was kept substantially unchanged, and the thickness of the positive electrode active material layer after cold pressing was kept substantially equal to the sum of the thickness of the first positive electrode active material layer and the thickness of the second positive electrode active material layer in Example P2. The positive electrode active material layer included only the second positive electrode active substance in Example P2.

### Comparative Example P7:

The method employed was substantially the same as that in Example P3, except that the second positive electrode slurry 3 in Example P3 was used for single-layer coating. In this comparative example, the compaction density was kept substantially unchanged, and the thickness of the positive electrode active material layer after cold pressing was kept substantially equal to the sum of the thickness of the first positive electrode active material layer and the thickness of the second positive electrode active material layer in Example P3. The positive electrode active material layer included only the second positive electrode active substance in Example P3.

### Comparative Example P8:

The method employed was substantially the same as that in Example P4, except that the second positive electrode slurry 4 in Example P4 was used for single-layer coating. In this comparative example, the compaction density was kept substantially unchanged, and the thickness of the positive electrode active material layer after cold pressing was kept substantially equal to the sum of the thickness of the first positive electrode active material layer and the thickness of the second positive electrode active material layer in Example P4. The positive electrode active material layer included only the first positive electrode active substance.

**Table 2. Relevant parameters of Examples and Comparative Examples for preparing positive electrode plates using recycled positive electrode active substance stock**

| No. | Positive electrode slurry | First positive electrode active material layer | | | Second positive electrode active material layer | | | Thickness ratio of second/fir st positive electrode active material layers |
|---|---|---|---|---|---|---|---|---|
| | Recycled positive electrode active substance stock | Mass percentag e of recycled positive electrode active stock (wt%) | Mass percentag e of positive electrode current collector particle (wt%) | Thickne ss (µm) | Second positive electrode active substance | Mass percentag e of positive electrode current collector particle (wt%) | Thickne ss (µm) | |
| Example P1 | Recycle d positive electrod e stock 1 | 96.0% | 0.624 | 85.6 | Lithium iron phosphate | 0 | 16 | 0.19 |
| Example P2 | Recycle d positive electrod e stock 2 | 96.0% | 0.653 | 85.0 | LiMn_{0.6}Fe_{0.4}PO₄ | 0 | 15 | 0.18 |
| Example P3 | Recycle d positive electrod e stock 3 | 96.0% | 0.422 | 51.0 | LiNi_{0.5}Co_{0.2}Mn_{0.3}O₂ | 0 | 11 | 0.22 |
| Example P4 | Recycled positive electrod e stock 4 | 96.0% | 0.403 | 52.0 | LiNi_{0.89}Co_{0.07}Mn_{0.03}Al_{0.0 1}O₂ | 0 | 10 | 0.19 |
| Example P5 | Recycle d positive electrod e stock 5 | 96.0% | 0.864 | 85.6 | Lithium iron phosphate | 0 | 16 | 0.19 |
| Example P6 | Recycle d positive electrod e stock 6 | 96.0% | 0.787 | 85.6 | Lithium iron phosphate | 0 | 16 | 0.19 |
| Example P7 | Recycle d positive electrod e stock 7 | 96.0% | 0.528 | 85.6 | Lithium iron phosphate | 0 | 16 | 0.19 |
| Example P8 | Recycle d positive electrod e stock 1 | 76.8% | 0.499 | 85.6 | Lithium iron phosphate | 0 | 16 | 0.19 |
| Example P9 | Recycle d positive electrod e stock 1 | 57.6% | 0.374 | 85.6 | Lithium iron phosphate | 0 | 16 | 0.19 |
| Example P10 | Recycle d positive electrod e stock 1 | 38.4% | 0.250 | 85.6 | Lithium iron phosphate | 0 | 16 | 0.19 |
| Example P11 | Recycle d positive electrod e stock 1 | 96.0% | 0.624 | 95.6 | Lithium iron phosphate | 0 | 6 | 0.06 |
| Example P12 | Recycle d positive electrod e stock 1 | 96.0% | 0.624 | 81.6 | Lithium iron phosphate | 0 | 20 | 0.25 |
| Example P13 | Recycle d positive electrod e stock 1 | 96.0% | 0.624 | 77.6 | Lithium iron phosphate | 0 | 24 | 0.31 |
| Example P14 | Recycle d positive electrod e stock 1 | 96.0% | 0.624 | 72.6 | Lithium iron phosphate | 0 | 29 | 0.40 |
| Example P15 | Recycle d positive electrod e stock 1 | 96.0% | 0.624 | 90.0 | Lithium iron phosphate | 0.04 | 16 | 0.18 |
| Example P16 | Recycle d positive electrod e stock 1 | 6.1% | 0.04 | 90.0 | Lithium iron phosphate | 0.01 | 16 | 0.18 |
| Comparati ve Example P1 | Recycle d positive electrod e stock 1 | 96.0% | 0.653 | 101.6 | None; the total thickness was kept consistent | / | / | 0 |
| Comparati ve Example P2 | Recycle d positive electrod e stock 1 | 96.0% | 0.422 | 100 | None; the total thickness was kept consistent | / | / | 0 |
| Comparati ve Example P3 | Recycle d positive electrod e stock 1 | 96.0% | 0.403 | 62 | None; the total thickness was kept consistent | / | / | 0 |
| Comparati ve Example P4 | Recycle d positive electrod e stock 1 | 96.0% | 0.624 | 62 | None; the total thickness was kept consistent | / | / | 0 |
| Comparati ve Example P5 | / | / | / | / | Lithium iron phosphate | 0 | 106 | / |
| Comparati ve Example P6 | / | / | / | / | LiMn_{0.6}Fe_{0.4}PO₄ | 0 | 100 | / |
| Comparati ve Example P7 | / | / | / | / | LiNi_{0.5}Co_{0.2}Mn_{0.3}O₂ | 0 | 62 | / |
| Comparati ve Example P8 | / | / | / | / | LiNi_{0.89}Co_{0.07}Mn_{0.03}Al_{0.0 1}O₂ | 0 | 62 | / |

In Table 2, the "mass ratio of the recycled positive electrode active stock" in the first positive electrode active material layer part represents the mass percentage of the recycled positive electrode active stock in the first positive electrode active material layer; the "mass percentage of the positive electrode current collector particle" in the first positive electrode active material layer part represents the mass percentage of the positive electrode current collector particle in the first positive electrode active material layer; the "mass percentage of the positive electrode current collector particle" in the second positive electrode active material layer part represents the mass percentage of the positive electrode current collector particle in the second positive electrode active material layer; the "thickness ratio of the second/first positive electrode active material layers" represents the thickness ratio of the second positive electrode active material layer to the first positive electrode active material layer.

"Thickness" in Table 2 refers to the thickness at a single side of the corresponding active material layer.

In the above Examples P1-P16 and Comparative Examples P1-P8, the first positive electrode active substance in the recycled positive electrode active substance stock corresponded to the first active substance in the first positive electrode active material layer, and the positive electrode current collector impurity in the recycled positive electrode active substance stock corresponded to the positive electrode current collector particle in the first positive electrode active material layer. In the first positive electrode active material layer, the mass percentage of the positive electrode current collector particle = the mass percentage of the recycled positive electrode active stock × the mass percentage of the positive electrode current collector impurity in the recycled positive electrode active substance stock. The maximum particle diameter of the positive electrode current collector particle in the first positive electrode active material layer was equal to the maximum particle diameter of the positive electrode current collector impurity in the recycled positive electrode active stock. The positive electrode current collector particles contained in the first positive electrode active material layer were all aluminum-based particles, where the mass percentage of the element aluminum in the aluminum-based particle was equal to the mass percentage of Al in the positive electrode current collector impurity. In addition, the percentage of the mass of the positive electrode current collector particle in the first positive electrode active material layer relative to the sum of the mass of the positive electrode current collector particle and the mass of the first positive electrode active substance was equal to the mass percentage of the positive electrode current collector impurity in the recycled positive electrode active stock. See Table 1.

### (III) Using recycled negative electrode active substance stock in negative electrode plate

The type of a first negative electrode active substance in recycled negative electrode active substance stock used in a first negative electrode slurry was the same as the type of a second negative electrode active substance in a second negative electrode slurry (for example, both were graphite materials, or for example, both were a combination of a silicon-based material and a graphite material), and the material composition ratio of the first negative electrode active substance was allowed to be different from that of the second negative electrode active substance. The first negative electrode slurry included a negative electrode current collector impurity, and the second negative electrode slurry might include no negative electrode current collector impurity or only a small amount of negative electrode current collector impurity. The presence of the negative electrode current collector impurity in the second negative electrode slurry could be achieved by incorporating a certain amount of recycled negative electrode active substance stock. In the examples below, unless otherwise specified, when the second negative electrode slurry incorporated the recycled negative electrode active substance stock, the recycled negative electrode active substance stock in the first negative electrode slurry was used.

### 3.1. Negative electrode Example N1

In this example, the first negative electrode active substance was derived from electrode plate recycling, the first negative electrode active material layer contained the negative electrode current collector impurity, and the type of the second negative electrode active substance was the same as that of the first negative electrode active substance, but the second negative electrode active material layer did not contain the negative electrode current collector impurity.

### 1) Preparation of positive electrode plate

96 wt% of a positive electrode active substance lithium iron phosphate, 1.5 wt% of a conductive agent (conductive carbon black), and 2.5wt% of a binder (polyvinylidene fluoride) were mixed, and then N-methylpyrrolidone was added. The resulting mixture was stirred and dispersed to prepare a positive electrode slurry, and then the positive electrode slurry was applied to the surfaces on both sides of an aluminum foil. After double-sided coating was completed, drying, cold pressing, slitting, and tab forming were performed to obtain the positive electrode plate. The compaction density was 2.35 g/cm³. The single-side thickness of the positive electrode active material layer was about 106 µm.

### 2) Preparation of negative electrode plate

The recycled negative electrode active substance stock 1 was used, where the negative electrode active substance therein was used as the first negative electrode active substance, and the negative electrode current collector impurity therein became the negative electrode current collector particle in the active material layer. See Table 1.

95.5 wt% of recycled negative electrode active substance stock 1 (the first negative electrode active substance was artificial graphite and contained an copper-based particle, and the content of Cu in the recycled negative electrode active stock 1 was 0.15 wt%), 1.0 wt% of a conductive agent (conductive carbon black), 2.0 wt% of a binder (styrene-butadiene rubber (SBR)), and 1.5 wt% of a thickener (sodium carboxymethylcellulose) were mixed, and then deionized water was added. The resulting mixture was stirred and dispersed to prepare a first negative electrode slurry for preparing a first negative electrode active material layer. See Table 1 and Table 3.

95.5 wt% of artificial graphite (containing no negative electrode current collector impurity), 1.0 wt% of a conductive agent (conductive carbon black), 2.0 wt% of a binder (styrene-butadiene rubber (SBR)), and 1.5 wt% of a thickener (sodium carboxymethylcellulose) were mixed, and then deionized water was added. The resulting mixture was stirred and dispersed to prepare a second negative electrode slurry for preparing a second negative electrode active material layer.

The first negative electrode slurry and the second negative electrode slurry were sequentially applied to a Cu foil, where the first negative electrode slurry was located at a lower layer and the second negative electrode slurry was located at an upper layer. After both sides were coated, drying, cold pressing, slitting, and tab forming were performed to obtain the negative electrode plate. The compaction density was 1.65 g/cm³.

### 5) Preparation of electrolytic solution

The electrolytic solution was a lithium hexafluorophosphate solution. The electrolyte lithium salt was 1.0 mol/L lithium hexafluorophosphate (LiPF₆), and the solvents were EC (ethylene carbonate) and DMC (dimethyl carbonate) in a volume ratio of 1:1.

### 6) Selection of separator

Celgard2400 polypropylene porous film was selected.

### 7) Assembly of secondary battery

The positive electrode plate, the separator, and the negative electrode plate were stacked in sequence to enable the separator to be located between the positive electrode and the negative electrode for isolation, and the stack was then wound to obtain a bare cell. The bare cell was disposed in an outer packaging, and the prepared electrolytic solution was injected, followed by packaging, injection of electrolytic solution, formation, degassing, and other procedures, and a lithium-ion secondary battery was obtained.

### 3.2. Negative electrode Example N2

The method employed was substantially the same as that in Example N1, except that the preparation method for the negative electrode plate was different, where the recycled negative electrode active substance stock 1 was replaced with recycled negative electrode active substance stock 2 in the first negative electrode slurry. See Table 1 and Table 3.

### 3.3. Negative electrode Example N3

The method employed was substantially the same as that in Example N1, except that the preparation method for the negative electrode plate was different, where the recycled negative electrode active substance stock 1 was replaced with recycled negative electrode active substance stock 3 in the first negative electrode slurry. See Table 1 and Table 3.

### 3.4. Negative electrode Example N4

The method employed was substantially the same as that in Example N1, except that the preparation method for the negative electrode plate was different, where the recycled negative electrode active substance stock 1 was replaced with recycled negative electrode active substance stock 4 in the first negative electrode slurry. See Table 1 and Table 3.

### 2.5. Examples N5-N15

The method employed was substantially the same as that in Example N1, except that the method for preparing the negative electrode plate was different. See Table 1.

The method employed in Example N5 was substantially the same as that in Example N1, except that the method for preparing the negative electrode plate was different, where recycled negative electrode active substance stock 5 was used in the first negative electrode slurry. See Table 1 and Table 3.

The method employed in Example N6 was substantially the same as that in Example N1, except that the method for preparing the negative electrode plate was different, where recycled negative electrode active substance stock 6 was used in the first negative electrode slurry. See Table 1 and Table 3.

The method employed in Example N7 was substantially the same as that in Example N1, except that the method for preparing the negative electrode plate was different, where recycled negative electrode active substance stock 7 was used in the first negative electrode slurry. See Table 1 and Table 3.

The method employed in Example N8 was substantially the same as that in Example N1, except that the method for preparing the negative electrode plate was different, where the recycled negative electrode active substance stock 1 in the first negative electrode slurry was changed to a combination of the recycled negative electrode active substance stock 1 and the second negative electrode active substance in Example N1, where the recycled negative electrode active substance stock 1:the second negative electrode active substance:the conductive agent:the binder:the thickener = 76.4%:19.1:1%:2%:1.5%, where the total mass percentage of the recycled negative electrode active substance stock 1 and the second negative electrode active substance in the dry weight of the first negative electrode slurry was 95.5%. See Table 3.

The method employed in Examples P9 and N10 was substantially the same as that in Example N1, except that the method for preparing the negative electrode plate was different, where the recycled negative electrode active substance stock 1 in the first negative electrode slurry was changed to a combination of the recycled negative electrode active substance stock 1 and the second negative electrode active substance in Example N1. See Table 3.

The method employed in Example N11 was substantially the same as that in Example N1, except that the method for preparing the negative electrode plate was different, where after cold pressing, the thickness of the first active material layer was 90 µm, and the thickness of the second active material layer was 10 µm. The total thickness of the active material after cold pressing was kept substantially the same as in Example N1. See Table 3.

The method employed in Examples N12-14 was substantially the same as that in Example N1, except that the method for preparing the negative electrode plate was different, where the thicknesses of the first active material layer and the second active material layer after cold pressing were changed. The total thickness of the active material after cold pressing was kept substantially the same as in Example N1. See Table 3.

The method employed in Example N15 was substantially the same as that in Example N1, except that the method for preparing the negative electrode plate was different, where a small amount of recycled negative electrode active substance stock (the second negative electrode active substance was graphite, and the content of Cu was 20 ppm, i.e., 0.002%) was added into the second negative electrode slurry. See Table 3.

The method employed in Example N16 was substantially the same as that in Example N2, except that the method for preparing the negative electrode plate was different, where a small amount of recycled negative electrode active substance stock (the second negative electrode active substance was graphite, and the content of Cu was 20 ppm) was added to the second negative electrode slurry. See Table 3.

The method employed in Example N17 was substantially the same as that in Example N1, except that the method for preparing the negative electrode plate was different, where a small amount of recycled negative electrode active substance stock (the second negative electrode active substance was graphite, and the content of Cu was 10 ppm, i.e., 0.001%) was added into the second negative electrode slurry. See Table 3.

### 2.6. Comparative Examples

In Comparative Examples N1-N8, single-layer coating was performed, and only one negative electrode slurry was used. See Table 3.

### Comparative Example N1:

The method employed was substantially the same as that in Example N1, except that the recycled negative electrode active substance stock 1 was used for single-layer coating. In this comparative example, the compaction density was kept substantially unchanged, and the thickness of the negative electrode active material layer after cold pressing was kept substantially equal to the sum of the thickness of the first negative electrode active material layer and the thickness of the second negative electrode active material layer in Example N1. The negative electrode active material layer included only the first negative electrode active substance in Example N1.

### Comparative Example N2:

The method employed was substantially the same as that in Example N2, except that the recycled negative electrode active substance stock 2 was used for single-layer coating. In this comparative example, the compaction density was kept substantially unchanged, and the thickness of the negative electrode active material layer after cold pressing was kept substantially equal to the sum of the thickness of the first negative electrode active material layer and the thickness of the second negative electrode active material layer in Example N2. The negative electrode active material layer included only the first negative electrode active substance in Example N2.

### Comparative Example N3:

The method employed was substantially the same as that in Example N3, except that the recycled negative electrode active substance stock 3 was used for single-layer coating. In this comparative example, the compaction density was kept substantially unchanged, and the thickness of the negative electrode active material layer after cold pressing was kept substantially equal to the sum of the thickness of the first negative electrode active material layer and the thickness of the second negative electrode active material layer in Example N3. The negative electrode active material layer included only the first negative electrode active substance in Example N3.

### Comparative Example N4:

The method employed was substantially the same as that in Example N4, except that the recycled negative electrode active substance stock 4 was used for single-layer coating. In this comparative example, the compaction density was kept substantially unchanged, and the thickness of the negative electrode active material layer after cold pressing was kept substantially equal to the sum of the thickness of the first negative electrode active material layer and the thickness of the second negative electrode active material layer in Example N4. The negative electrode active material layer included only the first negative electrode active substance in Example N4.

### Comparative Example N5:

The method employed was substantially the same as that in Example N1, except that the second negative electrode slurry 1 in Example N1 was used for single-layer coating. In this comparative example, the compaction density was kept substantially unchanged, and the thickness of the negative electrode active material layer after cold pressing was kept substantially equal to the sum of the thickness of the first negative electrode active material layer and the thickness of the second negative electrode active material layer in Example N1. The negative electrode active material layer included only the second negative electrode active substance in Example N1.

### Comparative Example N6:

The method employed was substantially the same as that in Example N2, except that the second negative electrode slurry 2 in Example N2 was used for single-layer coating. In this comparative example, the compaction density was kept substantially unchanged, and the thickness of the negative electrode active material layer after cold pressing was kept substantially equal to the sum of the thickness of the first negative electrode active material layer and the thickness of the second negative electrode active material layer in Example N2. The negative electrode active material layer included only the second negative electrode active substance in Example N2.

### Comparative Example N7:

The method employed was substantially the same as that in Example N3, except that the second negative electrode slurry 3 in Example N3 was used for single-layer coating. In this comparative example, the compaction density was kept substantially unchanged, and the thickness of the negative electrode active material layer after cold pressing was kept substantially equal to the sum of the thickness of the first negative electrode active material layer and the thickness of the second negative electrode active material layer in Example N3. The negative electrode active material layer included only the second negative electrode active substance in Example N3.

### Comparative Example N8:

The method employed was substantially the same as that in Example N4, except that the second negative electrode slurry 4 in Example N4 was used for single-layer coating. In this comparative example, the compaction density was kept substantially unchanged, and the thickness of the negative electrode active material layer after cold pressing was kept substantially equal to the sum of the thickness of the first negative electrode active material layer and the thickness of the second negative electrode active material layer in Example N4. The negative electrode active material layer included only the first negative electrode active substance.

**Table 3. Relevant parameters of Examples and Comparative Examples for preparing negative electrode plates using recycled negative electrode active substance stock**

| No. | Negative electrode slurry | First negative electrode active material layer | | | Second negative electrode active material layer | | | Thickness ratio of second/first negative electrode active material layers |
|---|---|---|---|---|---|---|---|---|
| | Recycled negative electrode active substance stock | Mass percentage of recycled negative electrode active stock (wt%) | Mass percentage of negative electrode current collector particle (wt%) | Thickness (µm) | Second negative electrode active substance | Mass percentage of negative electrode current collector particle (wt%) | Thickness (µm) | |
| Example N1 | Recycled negative electrode stock 1 | 95.5% | 0.14 | 90 | Pure artificial graphite | 0 | 20 | 0.22 |
| Example N2 | Recycled negative electrode stock 2 | 95.5% | 0.14 | 90 | Artificial graphite + natural graphite (mass ratio: 7:3) | 0 | 20 | 0.22 |
| Example N3 | Recycled negative electrode stock 3 | 95.5% | 0.14 | 90 | Silicon oxide + artificial graphite (mass ratio: 5%:95%) | 0 | 20 | 0.22 |
| Example N4 | Recycled negative electrode stock 4 | 95.5% | 0.14 | 90 | Silicon-carbon composite + artificial graphite (mass ratio: 5%:95%) | 0 | 20 | 0.22 |
| Example N5 | Recycled negative electrode stock 5 | 95.5% | 0.24 | 90 | Pure artificial graphite | 0 | 20 | 0.22 |
| Example N6 | Recycled negative electrode stock 6 | 95.5% | 0.10 | 90 | Pure artificial graphite | 0 | 20 | 0.22 |
| Example N7 | Recycled negative electrode stock 7 | 95.5% | 0.08 | 90 | Pure artificial graphite | 0 | 20 | 0.22 |
| Example N8 | Recycled negative electrode stock 1 | 76.4% | 0.11 | 90 | Pure artificial graphite | 0 | 20 | 0.22 |
| Example N9 | Recycled negative electrode stock 1 | 57.3% | 0.09 | 90 | Pure artificial graphite | 0 | 20 | 0.22 |
| Example N10 | Recycled negative electrode stock 1 | 38.2% | 0.06 | 90 | Pure artificial graphite | 0 | 20 | 0.22 |
| Example N11 | Recycled negative electrode stock 1 | 95.5% | 0.14 | 90 | Pure artificial graphite | 0 | 10 | 0.11 |
| Example N12 | Recycled negative electrode stock 1 | 95.5% | 0.14 | 90 | Pure artificial graphite | 0 | 60 | 0.67 |
| Example N13 | Recycled negative electrode stock 1 | 95.5% | 0.14 | 103.8 | Pure artificial graphite | 0 | 6.2 | 0.06 |
| Example N14 | Recycled negative electrode stock 1 | 95.5% | 0.14 | 78.6 | Pure artificial graphite | 0 | 31.4 | 0.40 |
| Example N15 | Recycled negative electrode stock 1 | 95.5% | 0.14 | 90 | Pure artificial graphite | 0.002 | 20 | 0.22 |
| Example N16 | Recycled negative electrode stock 2 | 95.5% | 0.14 | 90 | Artificial graphite + natural graphite (mass ratio: 7:3) | 0.002 | 20 | 0.22 |
| Example N17 | Recycled negative electrode stock 1 | 1.3% | 0.002 | 90 | Pure artificial graphite | 0.001 | 20 | 0.22 |
| Comparative Example N1 | Recycled negative electrode stock 1 | 95.5% | 0.14 | 110 | None; the total thickness was kept consistent | / | / | 0 |
| Comparative Example N2 | Recycled negative electrode stock 2 | 95.5% | 0.14 | 110 | None; the total thickness was kept consistent | / | / | 0 |
| Comparative Example N3 | Recycled negative electrode stock 3 | 95.5% | 0.14 | 110 | None; the total thickness was kept consistent | / | / | 0 |
| Comparative Example N4 | Recycled negative electrode stock 4 | 95.5% | 0.14 | 110 | None; the total thickness was kept consistent | / | / | 0 |
| Comparative Example N5 | / | / | / | / | Pure artificial graphite | 0 | 110 | / |
| Comparative Example N6 | / | / | / | / | Artificial graphite + natural graphite (mass ratio: 7:3) | 0 | 110 | / |
| Comparative Example N7 | / | / | / | / | Silicon oxide + artificial graphite (mass ratio: 5%:95%) | 0 | 110 | / |
| Comparative Example N8 | / | / | / | / | Silicon-carbon composite + artificial graphite (mass ratio: 5%:95%) | 0 | 110 | / |

In Table 3, the "mass ratio of the recycled negative electrode active stock" in the first negative electrode active material layer part represents the mass percentage of the recycled negative electrode active stock in the first negative electrode active material layer; the "mass percentage of the negative electrode current collector particle" in the first negative electrode active material layer part represents the mass percentage of the negative electrode current collector particle in the first negative electrode active material layer; the "mass percentage of the negative electrode current collector particle" in the second negative electrode active material layer part represents the mass percentage of the negative electrode current collector particle in the second negative electrode active material layer; the "thickness ratio of the second/first negative electrode active material layers" represents the thickness ratio of the second negative electrode active material layer to the first negative electrode active material layer.

"Thickness" in Table 3 refers to the thickness at a single side of the corresponding active material layer.

In the above Examples P1-P17 and Comparative Examples P1-P8, the first negative electrode active substance in the recycled negative electrode active substance stock corresponded to the first active substance in the first negative electrode active material layer, and the negative electrode current collector impurity in the recycled negative electrode active substance stock corresponded to the negative electrode current collector particle in the first negative electrode active material layer. In the first negative electrode active material layer, the mass percentage of the negative electrode current collector particle = the mass percentage of the recycled negative electrode active stock × the mass percentage of the negative electrode current collector impurity in the recycled negative electrode active substance stock. The maximum particle diameter of the negative electrode current collector particle in the first negative electrode active material layer was equal to the maximum particle diameter of the negative electrode current collector impurity in the recycled negative electrode active stock. The negative electrode current collector particles contained in the first negative electrode active material layer were all aluminum-based particles, where the mass percentage of the element aluminum in the aluminum-based particle was equal to the mass percentage of Al in the negative electrode current collector impurity. In addition, the percentage of the mass of the negative electrode current collector particle in the first negative electrode active material layer relative to the sum of the mass of the negative electrode current collector particle and the mass of the first negative electrode active substance was equal to the mass percentage of the negative electrode current collector impurity in the recycled negative electrode active stock. See Table 1.

### (IV) Using recycled positive electrode active substance stock in positive electrode plate and using recycled negative electrode active substance stock in negative electrode plate

### 4.1. Example F1

The positive electrode plate in Example P1 (using lithium iron phosphate as the positive electrode active substance) and the negative electrode plate in Example N1 were used, and the electrolytic solution and the separator in Example P1 were used.

### 4.2. Example F2

The positive electrode plate in Example P3 (using the NCM ternary material as the positive electrode active substance) and the negative electrode plate in Example N1 were used, and the electrolytic solution and the separator in Example P1 were used.

### 4.3. Comparative Examples F1-F2

Comparative Example F1: The method employed was substantially the same as that in Example F1, except that the positive electrode plate in Comparative Example P1 and the negative electrode plate in Comparative Example N1 were used, and single-layer coating with recycled active substance stock was performed for both the positive and negative electrode plates.

Comparative Example F2: The method employed was substantially the same as that in Example F2, except that the positive electrode plate in Comparative Example P3 and the negative electrode plate in Comparative Example N1 were used, and single-layer coating with recycled active substance stock was performed for both the positive and negative electrode plates.

**Table 4. Relevant parameters of Examples and Comparative Examples for preparing positive electrode plates using recycled positive electrode active substance stock and preparing negative electrode plates using recycled negative electrode active substance stock**

| | |
|---|---|
| Example F1 | The positive electrode plate in Example P1 (using lithium iron phosphate as the positive electrode active substance) and the negative electrode plate in Example N1 (artificial graphite) were used, and the electrolytic solution and the separator in Example P1 were used. |
| Example F2 | The positive electrode plate in Example P3 (using the NCM ternary material as the positive electrode active substance) and the negative electrode plate in Example N1 (artificial graphite) were used, and the electrolytic solution and the separator in Example P1 were used. |
| Comparative Example F1 | The positive electrode plate in Comparative Example P1 and the negative electrode plate in Comparative Example N1 were used, and single-layer coating with the slurry of recycled active substance stock was performed for both the positive and negative electrode plates. |
| Comparative Example F2 | The positive electrode plate in Comparative Example P3 and the negative electrode plate in Comparative Example N1 were used, and single-layer coating with the slurry of recycled active substance stock was performed for both the positive and negative electrode plates. |

### III. Test and Analysis Method

### (I) Hi-pot test

Test object: lithium-ion secondary batteries prepared in each example and each comparative example.
Test and analysis method: The resistance was tested at a voltage of 250 V for 2-10 s using a HIOKI ST5520 instrument;
the cell was considered to meet the Hi-pot requirements if the 250V2s resistance was ≥ 20 MΩ;
the cell was considered to fail the Hi-pot test if the 250V2s resistance was < 20 MΩ.

### (II) High-temperature storage performance test

After a cell was charged and discharged at 1C, the initial discharge capacity was denoted as C₀. After the cell was fully charged at 1C, the cell was left to stand in a constant temperature environment at 60 °C for 60 days, and then discharged at a rate of 1C to a cut-off voltage, and the capacity at this time was denoted as C₁. Then, the cell was charged and discharged once within the cut-off voltage range, and the discharge capacity was denoted as C₂. The capacity retention rate A1= C₁/C₀ × 100%, and the capacity recovery rate A2 = C₂/C₀ × 100%.

The higher the capacity retention rate and the capacity recovery rate under the above test conditions, the better the high-temperature storage performance, which also reflects the low self-discharge of the battery.
See Table 5, Table 6, and Table 7 for the test results.

### IV. Analysis of Test Results

The results show that:
When the positive electrode active material layer of the positive electrode plate was of a multi-layer structure and the first positive electrode active material layer contained the positive electrode current collector particle, as in Examples P1-P16, compared with the single-layer coating structure of Comparative Examples P1-P4, based on the same recycled positive electrode active substance stock source, the Hi-pot failure rate of Examples P1-P16 was significantly reduced, and the high-temperature storage performance was improved, where both the capacity retention rate and the capacity recovery rate after high-temperature storage were improved. Moreover, the Hi-pot performance and the capacity retention rate and the capacity recovery rate after high-temperature storage of Examples P1-P16 were substantially equivalent to those of Comparative Examples P5-P8 in which the positive electrode current collector impurity was not incorporated at all. It can be seen that by using the multi-layer coating technology provided by the present application, the recycled positive electrode active substance can have better application value.

**Table 5. The positive electrode active material layer of the positive electrode plate is of a double-layer structure, and the first positive electrode active material layer contains the positive electrode current collector particle**

| No. | Hi-pot failure rate | Storage (60 °C for 60 days) | |
|---|---|---|---|
| | | Capacity retention rate | Capacity recovery rate |
| Example P1 | 0.0% | 97.2% | 99.0% |
| Example P2 | 0.0% | 96.1% | 98.4% |
| Example P3 | 0.0% | 93.3% | 97.3% |
| Example P4 | 0.0% | 87.2% | 93.1% |
| Example P5 | 0.8% | 95.5% | 97.8% |
| Example P6 | 0.4% | 95.8% | 98.1% |
| Example P7 | 0.0% | 96.4% | 98.9% |
| Example P8 | 0.0% | 97.2% | 99.0% |
| Example P9 | 0.0% | 97.3% | 99.1% |
| Example P10 | 0.0% | 97.1% | 99.2% |
| Example P11 | 0.2% | 96.5% | 98.1% |
| Example P12 | 0.0% | 97.2% | 99.3% |
| Example P13 | 0.0% | 96.7% | 98.9% |
| Example P14 | 0.0% | 96.9% | 98.8% |
| Example P15 | 0.8% | 96.0% | 98.2% |
| Example P16 | 0.0% | 97.3% | 99.1% |
| Comparative Example P1 | 3.0% | 94.3% | 96.1% |
| Comparative Example P2 | 3.5% | 91.6% | 95.5% |
| Comparative Example P3 | 2.0% | 88.6% | 94.8% |
| Comparative Example P4 | 2.3% | 82.3% | 90.4% |
| Comparative Example P5 | 0.0% | 97.3% | 99.0% |
| Comparative Example P6 | 0.0% | 96.2% | 98.5% |
| Comparative Example P7 | 0.0% | 93.5% | 97.5% |
| Comparative Example P8 | 0.0% | 87.4% | 93.4% |

When the negative electrode active material layer of the negative electrode plate was of a multi-layer structure and the first negative electrode active material layer contained the negative electrode current collector particle, as in Examples N1-N17, compared with the single-layer coating structure of Comparative Examples N1-N4, based on the same recycled negative electrode active substance stock source, the Hi-pot failure rate of Examples N1-N17 was significantly reduced, and the high-temperature storage performance was improved, where both the capacity retention rate and the capacity recovery rate after high-temperature storage were improved. Moreover, the Hi-pot performance and the capacity retention rate and the capacity recovery rate after high-temperature storage of Examples N1-N17 were substantially equivalent to those of Comparative Examples N5-N8 in which the negative electrode current collector impurity was not incorporated at all.

**Table 6.**

| The negative electrode active material layer of the negative electrode plate is of a double-layer structure, and the first negative electrode active material layer contains the negative electrode current collector particle | | | |
|---|---|---|---|
| No. | Hi-pot failure rate | Storage (60 °C for 60 days) | |
| | | Capacity retention rate | Capacity recovery rate |
| Example N1 | 0.0% | 97.5% | 99.1% |
| Example N2 | 0.0% | 95.8% | 97.1% |
| Example N3 | 0.0% | 93.4% | 94.4% |
| Example N4 | 0.0% | 90.6% | 91.5% |
| Example N5 | 0.2% | 96.2% | 97.8% |
| Example N6 | 0.0% | 97.6% | 99.1% |
| Example N7 | 0.0% | 97.8% | 99.3% |
| Example N8 | 0.0% | 98.0% | 99.4% |
| Example N9 | 0.0% | 98.1% | 99.6% |
| Example N10 | 0.0% | 98.3% | 99.9% |
| Example N11 | 0.0% | 96.9% | 98.0% |
| Example N12 | 0.0% | 97.7% | 99.5% |
| Example N13 | 0.2% | 96.3% | 97.5% |
| Example N14 | 0.0% | 98.0% | 99.7% |
| Example N15 | 0.5% | 95.3% | 98.2% |
| Example N16 | 0.6% | 93.2% | 97.6% |
| Example N17 | 0.0% | 97.5% | 99.2% |
| Comparative Example N1 | 3.0% | 91.2% | 95.2% |
| Comparative Example N2 | 4.0% | 89.6% | 93.5% |
| Comparative Example N3 | 3.0% | 87.1% | 92.4% |
| Comparative Example N4 | 3.0% | 86.2% | 91.2% |
| Comparative Example N5 | 0.0% | 97.6% | 99.2% |
| Comparative Example N6 | 0.0% | 95.9% | 97.2% |
| Comparative Example N7 | 0.0% | 93.5% | 94.5% |
| Comparative Example N8 | 0.0% | 90.7% | 91.6% |

When the negative electrode active material layers of the positive and negative electrode plates were both of a multi-layer structure, the first positive electrode active material layer contained the positive electrode current collector particle, and the first negative electrode active material layer contained the negative electrode current collector particle:
compared with Comparative Example N1 in which both the positive electrode plate and the negative electrode plate had a single-layer coating structure, the Hi-pot failure rate of Example F1 was significantly reduced, and the high-temperature storage performance of Example F1 was improved; in addition, the Hi-pot performance and the high-temperature storage performance of Example F1 were substantially equivalent to those of Comparative Example F3 in which the current collector impurity was incorporated into neither the positive electrode plate nor the negative electrode plate;
compared with Comparative Example N2 in which both the positive and negative electrode plates had a single-layer coating structure, the Hi-pot failure rate of Example F2 was significantly reduced, and the high-temperature storage performance of Example F2 was improved; in addition, the Hi-pot performance and the high-temperature storage performance of Example F2 were substantially equivalent to those of Comparative Example F4 in which the current collector impurity was incorporated into neither the positive electrode plate nor the negative electrode plate.

**Table 7.**

| Both the positive electrode plate and the negative electrode plate are of a double-layer structure, and the active material layers at the lower layer all contain the current collector particle | | | |
|---|---|---|---|
| No. | Hi-pot failure rate | Storage (60 °C for 60 days) | |
| | | Capacity retention rate | Capacity recovery rate |
| Example F1 | 0.0% | 97.0% | 98.7% |
| Example F2 | 0.0% | 93.0% | 97.1% |
| Comparative Example F1 | 35.0% | 90.2% | 94.1% |
| Comparative Example F2 | 39.0% | 85.1% | 92.3% |

The differences between the embodiments and examples above are highlighted in the description of these embodiments and examples, and reference may be made to each other for the identical or similar parts. For brevity, details are not described herein again.

The technical features of the above embodiments and examples may be arbitrarily combined. For the sake of concise description, not all possible combinations of the technical features in the above examples have been described. However, as long as there is no contradiction between the combinations of these technical features, they should be considered as falling within the scope of the specification.

It should be noted that the present application is not limited to the embodiments and examples described above. The embodiments or examples described above are merely illustrative, and any embodiments having a structure substantially identical to the technical concept and exerting the same functional effects within the scope of the technical solutions of the present application are all included within the technical scope of the present application. The aforementioned examples merely illustrate several embodiments of the present application. They are described in a detailed manner, but should not be construed as limiting the patent scope of the present application. Furthermore, without departing from the spirit of the present application, various modifications that can be conceived by those skilled in the art to the embodiments or examples, as well as other embodiments or examples formed by combining some of the constituent elements of the embodiments or examples, are also included within the scope of the present application.

## Claims

1. An electrode plate, comprising a current collector and a multi-layered active material layer located on at least one side of the current collector, wherein the multi-layered active material layer comprises a first active material layer and a second active material layer, wherein the second active material layer is an active material layer farthest away from the current collector, and the first active material layer is located between the second active material layer and the current collector;
the first active material layer comprises a current collector particle;
the electrode plate is a positive electrode plate, and the current collector particle contains a metal component suitable for a positive electrode current collector; or the electrode plate is a negative electrode plate, and the current collector particle contains a metal component suitable for a negative electrode current collector.

2. An electrode plate, comprising a current collector and a multi-layered active material layer located on at least one side of the current collector, wherein the multi-layered active material layer comprises a first active material layer and a second active material layer, wherein the second active material layer is an active material layer farthest away from the current collector, and the first active material layer is located between the second active material layer and the current collector;
the first active material layer comprises a current collector particle;
the electrode plate is a positive electrode plate, and the current collector particle comprises one or more metal components of aluminum, aluminum alloys, nickel, nickel alloys, titanium, titanium alloys, silver, and silver alloys; or the electrode plate is a negative electrode plate, and the current collector particle comprises one or more metal components of copper, copper alloys, nickel, nickel alloys, titanium, titanium alloys, silver, and silver alloys.

3. The electrode plate according to claim 1 or 2, wherein the second active material layer comprises or does not comprise the current collector particle; a mass percentage of the current collector particle in the second active material layer is less than a mass percentage of the current collector particle in the first active material layer.

4. The electrode plate according to any one of claims 1 to 3, wherein
the electrode plate is a positive electrode plate, and the current collector particle contains a metal component suitable for a positive electrode current collector; the metal component suitable for the positive electrode current collector refers to a metal component that will not be oxidized at a positive electrode at a potential > 2.0 V, with a temperature condition comprising at least one temperature of 20 °C to 30 °C; or
the electrode plate is a negative electrode plate, and the current collector particle contains a metal component suitable for a negative electrode current collector; the metal component suitable for the negative electrode current collector refers to a metal component capable of having chemical stability at a negative electrode under charging and discharging conditions, and the charging and discharging conditions at least comprise: performing at least one charging and discharging cycle within a cut-off voltage range, with a temperature for performing the charging and discharging cycles comprising at least one temperature of 10 °C to 80 °C.

5. The electrode plate according to any one of claims 1 to 4, wherein the electrode plate is a positive electrode plate, and the current collector particle comprises one or more metal components of aluminum, aluminum alloys, nickel, nickel alloys, titanium, titanium alloys, silver, and silver alloys;
the first active material layer is denoted as a first positive electrode active material layer, the current collector particle is denoted as a positive electrode current collector particle, and the second active material layer is denoted as a second positive electrode active material layer;
the first positive electrode active material layer comprises a first positive electrode active substance, the second positive electrode active material layer comprises a second positive electrode active substance, and the first positive electrode active substance and the second positive electrode active substance are the same or different.

6. The electrode plate according to claim 5, wherein the positive electrode current collector particle satisfies one or more of the following features:
a metal element in the positive electrode current collector particle is denoted as an element M1, and a mass percentage of the element M1 in the positive electrode current collector particle is ≥ 50%;
a maximum particle diameter of the positive electrode current collector particle is ≤ 150 µm.

7. The electrode plate according to claim 6, wherein the positive electrode current collector particle satisfies one or more of the following features:
the positive electrode current collector particle comprises a body B1, and further comprises or does not comprise a coating layer L1 located on at least a part of a surface of the body B1, the body B1 is composed of the element M1, the coating layer L1 comprises a derived form of the element M1, and the derived form of the element M1 comprises an oxidized form of the element M1;
the mass percentage of the element M1 in the positive electrode current collector particle is 60%-100%;
the maximum particle diameter of the positive electrode current collector particle is 10 µm to 150 µm.

8. The electrode plate according to claim 6, wherein the positive electrode current collector particle comprises an aluminum-based particle, and the aluminum-based particle comprises an aluminum-based body, and further comprises or does not comprise an aluminum oxide layer located on a surface of the aluminum-based body;
optionally, the positive electrode current collector particle satisfies one or more of the following features:
a mass percentage of an element aluminum in the positive electrode current collector particle is ≥ 50%;
the aluminum-based body comprises an aluminum-based component with a mass percentage of ≥ 70%, and the aluminum-based component is aluminum or an aluminum alloy.

9. The electrode plate according to claim 8, wherein the positive electrode current collector particle satisfies one or more of the following features:
the mass percentage of the element aluminum in the positive electrode current collector particle is 60%-100%;
the mass percentage of the aluminum-based component in the aluminum-based body is 90%-100%.

10. The electrode plate according to any one of claims 5 to 9, wherein the second positive electrode active material layer does not comprise or comprises the positive electrode current collector particle, and a mass percentage of the positive electrode current collector particle in the second positive electrode active material layer is less than a mass percentage of the positive electrode current collector particle in the first positive electrode active material layer.

11. The electrode plate according to claim 10, wherein the mass percentage of the positive electrode current collector particle in the second positive electrode active material layer is < 0.05%, and the mass percentage of the positive electrode current collector particle in the first positive electrode active material layer is ≥ 0.05%.

12. The electrode plate according to claim 10, wherein the mass percentage of the positive electrode current collector particle in the second positive electrode active material layer is < 0.04%, and the mass percentage of the positive electrode current collector particle in the first positive electrode active material layer is ≥ 0.04%.

13. The electrode plate according to claim 10, wherein the mass percentage of the positive electrode current collector particle in the second positive electrode active material layer is < 0.01%, and the mass percentage of the positive electrode current collector particle in the first positive electrode active material layer is ≥ 0.01%.

14. The electrode plate according to claim 5, wherein the electrode plate is a positive electrode plate, the current collector particle is denoted as a positive electrode current collector particle, a metal element in the positive electrode current collector particle is denoted as an element M1, the first active material layer is denoted as a first positive electrode active material layer, and the second active material layer is denoted as a second positive electrode active material layer;
the positive electrode current collector particle comprises a body B1, and further comprises a coating layer L1 located on at least a part of a surface of the body B1, the body B1 is composed of the element M1, the coating layer L1 comprises a derived form of the element M1, and the derived form of the element M1 comprises an oxidized form of the element M1;
optionally, a mass percentage of the positive electrode current collector particle in the first positive electrode active material layer is ≤ 1.0%;
optionally, a mass percentage of the positive electrode current collector particle in the second positive electrode active material layer is < 0.05%.

15. The electrode plate according to any one of claims 5 to 14, wherein the positive electrode plate satisfies one or more of the following features:
in the positive electrode plate, the multi-layered active material layer is a double-layered positive electrode active material layer;
a thickness of the first positive electrode active material layer is greater than a thickness of the second positive electrode active material layer;
the thickness of the first positive electrode active material layer is 40 µm to 125 µm;
the thickness of the second positive electrode active material layer is 3 µm to 45 µm;
the mass percentage of the positive electrode current collector particle in the first positive electrode active material layer is ≤ 1.0%;
in the first positive electrode active material layer, a percentage of a mass of the positive electrode current collector particle relative to a sum of the mass of the positive electrode current collector particle and a mass of the first positive electrode active substance is ≤ 1.0%.

16. The electrode plate according to any one of claims 5 to 14, wherein the positive electrode plate satisfies one or more of the following features:
a ratio of a thickness of the second positive electrode active material layer relative to a thickness of the first positive electrode active material layer is 0.05-0.4;
the thickness of the first positive electrode active material layer is 45 µm to 120 µm;
the thickness of the second positive electrode active material layer is 5 µm to 40 µm;
the mass percentage of the positive electrode current collector particle in the first positive electrode active material layer is 0.05%-0.9%;
in the first positive electrode active material layer, a percentage of a mass of the positive electrode current collector particle relative to a sum of the mass of the positive electrode current collector particle and a mass of the first positive electrode active substance is ≤ 0.9%.

17. The electrode plate according to any one of claims 5 to 14, wherein the positive electrode plate satisfies one or more of the following features:
a ratio of a thickness of the second positive electrode active material layer relative to a thickness of the first positive electrode active material layer is 0.1-0.35;
the thickness of the first positive electrode active material layer is 50 µm to 110 µm;
the thickness of the second positive electrode active material layer is 10 µm to 35 µm;
the mass percentage of the positive electrode current collector particle in the first positive electrode active material layer is 0.1%-0.8%;
in the first positive electrode active material layer, a percentage of a mass of the positive electrode current collector particle relative to a sum of the mass of the positive electrode current collector particle and a mass of the first positive electrode active substance is ≤ 0.8%.

18. The electrode plate according to any one of claims 5 to 17, wherein the positive electrode plate satisfies one or more of the following features:
the first positive electrode active substance comprises one or more of a lithium-containing phosphate, a lithium transition metal oxide, and a modified form of any one of the foregoing substances, wherein the modified form comprises one or more of doping modification and coating modification;
the first positive electrode active substance comprises an element lithium and a modifying element X1, and the modifying element X1 comprises at least one of an element nickel and an element cobalt; in the first positive electrode active substance, an atomic molar ratio of the modifying element X1 relative to the element lithium is 0.9-1.1;
the second positive electrode active substance comprises one or more of a lithium-containing phosphate, a lithium transition metal oxide, and a modified form of any one of the foregoing substances, wherein the modified form comprises one or more of doping modification and coating modification.

19. The electrode plate according to claim 18, wherein the positive electrode plate satisfies one or more of the following features:
the first positive electrode active substance comprises one or more of lithium iron phosphate, lithium manganese iron phosphate, lithium vanadium phosphate, lithium cobalt phosphate, lithium nickel phosphate, lithium manganate, lithium nickel cobalt manganate, lithium nickel cobalt manganese aluminate, lithium nickel cobalt aluminate, lithium cobaltate, and a modified form of any one of the foregoing substances, wherein the modified form comprises one or more of doping modification and coating modification;
in the first positive electrode active substance, a ratio of a sum of an atomic molar amount of the element cobalt and the element nickel relative to an atomic molar amount of the element lithium is 0.95-1.05;
the second positive electrode active substance comprises one or more of lithium iron phosphate, lithium manganese iron phosphate, lithium vanadium phosphate, lithium cobalt phosphate, lithium nickel phosphate, lithium manganate, lithium nickel cobalt manganate, lithium nickel cobalt manganese aluminate, lithium nickel cobalt aluminate, lithium cobaltate, and a modified form of any one of the foregoing substances, wherein the modified form comprises one or more of doping modification and coating modification.

20. The electrode plate according to claim 1 or 2, wherein the electrode plate is a negative electrode plate, and the current collector particle comprises one or more metal components of copper, copper alloys, nickel, nickel alloys, titanium, titanium alloys, silver, and silver alloys;
the first active material layer is denoted as a first negative electrode active material layer, the current collector particle is denoted as a negative electrode current collector particle, and the second active material layer is denoted as a second negative electrode active material layer;
the first negative electrode active material layer comprises a first negative electrode active substance, the second negative electrode active material layer comprises a second negative electrode active substance, and the first negative electrode active substance and the second negative electrode active substance are the same or different.

21. The electrode plate according to claim 20, wherein the negative electrode current collector particle satisfies one or more of the following features:
a metal element in the negative electrode current collector particle is denoted as an element M2, and a mass percentage of the element M2 in the negative electrode current collector particle is ≥ 50%;
a maximum particle diameter of the negative electrode current collector particle is ≤ 120 µm.

22. The electrode plate according to claim 21, wherein the negative electrode current collector particle satisfies one or more of the following features:
the negative electrode current collector particle comprises a body B2, and further comprises or does not comprise a coating layer L2 located on at least a part of a surface of the body B2, the body B2 is composed of the element M2, the coating layer L2 comprises a derived form of the element M2, and the derived form of the element M2 comprises an oxidized form of the element M2;
the mass percentage of the element M2 in the negative electrode current collector particle is 60%-100%;
the maximum particle diameter of the negative electrode current collector particle is ≤ 100 µm.

23. The electrode plate according to claim 21, wherein the negative electrode current collector particle comprises a copper-based particle, and the copper-based particle comprises a copper-based body, and further comprises or does not comprise a copper oxide layer located on a surface of the copper-based body;
optionally, the negative electrode current collector particle satisfies one or more of the following features:
a mass percentage of an element copper in the negative electrode current collector particle is ≥ 50%;
the copper-based body comprises a copper-based component with a mass percentage of ≥ 70%, and the copper-based component is copper or a copper alloy.

24. The electrode plate according to claim 23, wherein the negative electrode current collector particle satisfies one or more of the following features:
the mass percentage of the element copper in the negative electrode current collector particle is 80%-100%;
the mass percentage of the copper-based component in the copper-based body is 90%-100%.

25. The electrode plate according to any one of claims 20 to 24, wherein the second negative electrode active material layer comprises or does not comprise the negative electrode current collector particle, and a mass percentage of the negative electrode current collector particle in the second negative electrode active material layer is less than a mass percentage of the negative electrode current collector particle in the first negative electrode active material layer.

26. The electrode plate according to claim 25, wherein the mass percentage of the negative electrode current collector particle in the second negative electrode active material layer is < 0.002%, and the mass percentage of the negative electrode current collector particle in the first negative electrode active material layer is ≥ 0.002%.

27. The electrode plate according to claim 25, wherein the mass percentage of the negative electrode current collector particle in the second negative electrode active material layer is < 0.001%, and the mass percentage of the negative electrode current collector particle in the first negative electrode active material layer is ≥ 0.001%.

28. The electrode plate according to claim 17, wherein when the electrode plate is a negative electrode plate, the current collector particle is denoted as a negative electrode current collector particle, a metal element in the negative electrode current collector particle is denoted as an element M2, the first active material layer is denoted as a first negative electrode active material layer, and the second active material layer is denoted as a second negative electrode active material layer;
the negative electrode current collector particle comprises a body B2, and further comprises a coating layer L2 located on at least a part of a surface of the body B2, the body B2 is composed of the element M2, the coating layer L2 comprises a derived form of the element M2, and the derived form of the element M2 comprises an oxidized form of the element M2;
optionally, a mass percentage of the negative electrode current collector particle in the first negative electrode active material layer is ≤ 0.5%;
optionally, a mass percentage of the negative electrode current collector particle in the second negative electrode active material layer is < 0.005%.

29. The electrode plate according to any one of claims 20 to 28, wherein the negative electrode plate satisfies one or more of the following features:
in the negative electrode plate, the multi-layered active material layer is a double-layered negative electrode active material layer;
a thickness of the first negative electrode active material layer is greater than a thickness of the second negative electrode active material layer;
the thickness of the first negative electrode active material layer is 45 µm to 125 µm;
the thickness of the second negative electrode active material layer is 5 µm to 60 µm;
the mass percentage of the negative electrode current collector particle in the first negative electrode active material layer is ≤ 0.5%;
in the first negative electrode active material layer, a percentage of a mass of the negative electrode current collector particle relative to a sum of the mass of the negative electrode current collector particle and a mass of the first negative electrode active substance is ≤ 0.5%.

30. The electrode plate according to any one of claims 20 to 28, wherein the negative electrode plate satisfies one or more of the following features:
a ratio of a thickness of the second negative electrode active material layer relative to a thickness of the first negative electrode active material layer is 0.05-0.5;
the thickness of the first negative electrode active material layer is 55 µm to 120 µm;
the thickness of the second negative electrode active material layer is 10 µm to 50 µm;
the mass percentage of the negative electrode current collector particle in the first negative electrode active material layer is 0.005%-0.4%;
in the first negative electrode active material layer, a percentage of a mass of the negative electrode current collector particle relative to a sum of the mass of the negative electrode current collector particle and a mass of the first negative electrode active substance is ≤ 0.4%.

31. The electrode plate according to any one of claims 20 to 28, wherein the negative electrode plate satisfies one or more of the following features:
a ratio of a thickness of the second negative electrode active material layer relative to a thickness of the first negative electrode active material layer is 0.1-0.4;
the thickness of the first negative electrode active material layer is 60 µm to 110 µm;
the thickness of the second negative electrode active material layer is 15 µm to 45 µm;
the mass percentage of the negative electrode current collector particle in the first negative electrode active material layer is 0.01%-0.35%;
in the first negative electrode active material layer, a percentage of a mass of the negative electrode current collector particle relative to a sum of the mass of the negative electrode current collector particle and a mass of the first negative electrode active substance is ≤ 0.35%.

32. The electrode plate according to any one of claims 20 to 31, wherein the negative electrode plate satisfies one or more of the following features:
the first negative electrode active substance comprises one or more of a carbon-based material, a silicon-based material, a tin-based material, lithium titanate, and a modified form of any one of the foregoing substances, wherein the modified form comprises one or more of doping modification and coating modification; the carbon-based material comprises one or more of a graphite material, soft carbon, and hard carbon;
the second negative electrode active substance comprises one or more of a graphite material, soft carbon, hard carbon, a silicon-based material, a tin-based material, lithium titanate, and a modified form of any one of the foregoing substances, wherein the modified form comprises one or more of doping modification and coating modification.

33. The electrode plate according to claim 32, wherein the negative electrode plate satisfies one or more of the following features:
the first negative electrode active substance comprises one or more of graphite, hard carbon, soft carbon, and a modified form of any one of the foregoing substances, wherein the modified form comprises one or more of doping modification and coating modification;
the second negative electrode active substance comprises one or more of graphite, hard carbon, soft carbon, and a modified form of any one of the foregoing substances, wherein the modified form comprises one or more of doping modification and coating modification.

34. A secondary battery, comprising one or more electrode plates according to any one of claims 1 to 33.

35. The secondary battery according to claim 34, comprising a positive electrode plate and a negative electrode plate, wherein the secondary battery satisfies any one or both of the following features:
the positive electrode plate comprises the positive electrode plate according to any one of claims 5 to 19;
the negative electrode plate comprises the negative electrode plate according to any one of claims 20 to 33.

36. The secondary battery according to claim 34 or 35, wherein the secondary battery is a lithium-ion secondary battery.

37. An electric device, comprising at least one of the electrode plate according to any one of claims 1 to 33 and the secondary battery according to any one of claims 34 to 36.

38. A preparation method for a regenerated positive electrode plate, comprising the following steps:
providing a recycled positive electrode plate;
crushing the recycled positive electrode plate to obtain recycled positive electrode particles, performing a first sieving, calcining the recycled positive electrode particles left after the first sieving to remove a volatile matter, crushing the calcined recycled positive electrode particles, demagnetizing, performing a second sieving, and collecting solids with a target particle size to obtain recycled positive electrode active substance stock, wherein the recycled positive electrode active substance stock contains a positive electrode current collector impurity;
applying a first positive electrode slurry comprising the recycled positive electrode active substance stock to at least one side of a positive electrode current collector, and drying to form a positive electrode active lower layer; and
applying a second positive electrode slurry to a side of the positive electrode active lower layer distal to the positive electrode current collector, drying, and cold pressing to prepare the regenerated positive electrode plate, wherein the regenerated positive electrode plate is the positive electrode plate as defined in any one of claims 5 to 19.

39. The preparation method according to claim 38, wherein the preparation method satisfies one or more of the following features:
a mass percentage of the positive electrode current collector impurity in the recycled positive electrode active substance stock is 0.01%-1.0%;
a Dᵥ50 of a material obtained by crushing the calcined recycled positive electrode particles is 0.6 µm to 20 µm, wherein the Dᵥ50 represents a particle size at which a cumulative volume distribution percentage of a multi-particle mixture reaches 50%;
the second sieving uses a sieve of at least one mesh size between 80-400 mesh;
a Dᵥ50 of the recycled positive electrode active substance stock is 0.6 µm to 20 µm;
a Dᵥ99 of the recycled positive electrode active substance stock is ≤ 50 µm, wherein the Dᵥ99 represents a particle size at which a cumulative volume distribution percentage of a multi-particle mixture reaches 99%;
a maximum particle diameter of the positive electrode current collector impurity is ≤ 150 µm.

40. A preparation method for a regenerated negative electrode plate, comprising the following steps:
providing a recycled negative electrode plate;
crushing the recycled negative electrode plate, performing winnowing, classification or water washing, and pressure filtration, drying to obtain recycled negative electrode particles, carbonizing the recycled negative electrode particles to remove a volatile matter, demagnetizing the carbonized recycled negative electrode particles, sieving, and collecting solids with a target particle size to obtain recycled negative electrode active substance stock, wherein the recycled negative electrode active substance stock contains a negative electrode current collector impurity;
applying a first negative electrode slurry comprising the recycled negative electrode active substance stock to at least one side of a negative electrode current collector, and drying to form a negative electrode active lower layer; and
applying a second negative electrode slurry to a side of the negative electrode active lower layer distal to the negative electrode current collector, drying, and cold pressing to prepare the regenerated negative electrode plate, wherein the regenerated negative electrode plate is the negative electrode plate as defined in any one of claims 20 to 33.

41. The preparation method according to claim 40, wherein the preparation method satisfies one or more of the following features:
a mass percentage of the negative electrode current collector impurity in the recycled negative electrode active substance stock is 0.001%-0.5%;
a Dᵥ50 of the recycled negative electrode particle is 10 µm to 30 µm, wherein the Dᵥ50 represents a particle size at which a cumulative volume distribution percentage of a multi-particle mixture reaches 50%;
the sieving uses a sieve of at least one mesh size between 200-400 mesh;
a Dᵥ50 of the recycled negative electrode active substance stock is 8 µm to 25 µm;
a Dᵥ99 of the recycled negative electrode active substance stock is ≤ 120 µm, wherein the Dᵥ99 represents a particle size at which a cumulative volume distribution percentage of a multi-particle mixture reaches 99%;
a maximum particle diameter of the negative electrode current collector impurity is ≤ 120 µm.

42. A reusing method for a waste electrode plate, comprising the following steps:
obtaining at least one of a recycled positive electrode plate and a recycled negative electrode plate, wherein sources of the recycled positive electrode plate and the recycled negative electrode plate each independently comprise at least one of the following sources: a recycled plate obtained by disassembling a waste secondary battery and an intermediate product in a secondary battery production process, wherein the intermediate product comprises at least one of an electrode plate before cold pressing and an electrode plate after cold pressing;
providing an electrode assembly, wherein the electrode assembly comprises at least one of a regenerated positive electrode plate and a regenerated negative electrode plate, the regenerated positive electrode plate is prepared by using the preparation method according to claim 38 or 39, and the regenerated negative electrode plate is prepared by using the preparation method according to claim 40 or 41; and
preparing a regenerated secondary battery by using the electrode assembly.
